# EUROPEAN PATENT APPLICATION

(11) **EP 4 791 045 A1**
(43) Date of publication of application: **12.08.2026**
(21) Application number: 24874749.5
(22) Date of filing: 04.10.2024
(51) Int. Cl.: H04S 7/00

(54) **AUDIO SIGNAL PROCESSING METHOD, COMPUTER PROGRAM, AND AUDIO SIGNAL PROCESSING DEVICE**

(30) Priority: 06.10.2023 US 202363542840 P; 27.12.2023 US 202363615042 P
(71) Applicant: Panasonic Intellectual Property Corporation of America, Torrance, CA 90504 (US)
(72) Inventor: MIYASAKA, Shuji, Neyagawa-shi, Osaka 572-0004 (JP); NAKAHASHI, Kota, Kadoma-shi, Osaka 571-0057 (JP); ISHIKAWA, Tomokazu, Kadoma-shi, Osaka 571-0057 (JP); EHARA, Hiroyuki, Kadoma-shi, Osaka 571-0057 (JP); USAMI, Hikaru, Kadoma-shi, Osaka 571-0057 (JP); ENOMOTO, Seigo, Kadoma-shi, Osaka 571-0057 (JP)
(74) Representative: Novagraaf International SA
(86) International application number: PCT/JP2024/035626
(87) International publication number: WO 2025/075149

(57) **Abstract**

An audio signal processing method executed by an audio signal processing device includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; determining whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position; generating a merged audio signal by merging the first audio signal and the second audio signal, when the first audio signal and the second audio signal are determined to be merged; and outputting an output signal that is based on the merged audio signal generated.

## Description

### [Technical Field]

The present disclosure relates to an audio signal processing method and the like.

### [Background Art]

In recent years, the spread of products and services that utilize extended reality (ER) (may be also expressed as "XR") including virtual reality (VR), augmented reality (AR), and mixed reality (MR) has advanced. Accompanying this, there has been growing demand for audio signal processing technologies that provide listeners with immersive audio that, in a virtual space or a real-world space, assigns acoustic effects that are generated in accordance with the environment of the space to sounds emitted from a virtual sound source.

Note that "listener" can also be expressed as "user". Furthermore, Patent Literature (PTL) 1, PTL 2, PTL 3, and Non Patent Literature (NPL) 1 disclose techniques that relate to the audio signal processing method and the like of the present disclosure.

### [Citation List]

### [Patent Literature]

[PTL 1] Japanese Patent No. 6288100
[PTL 2] Japanese Unexamined Patent Application Publication No. 2019-22049
[PTL 3] WO Publication No. 2021/180938

### [Non Patent Literature]

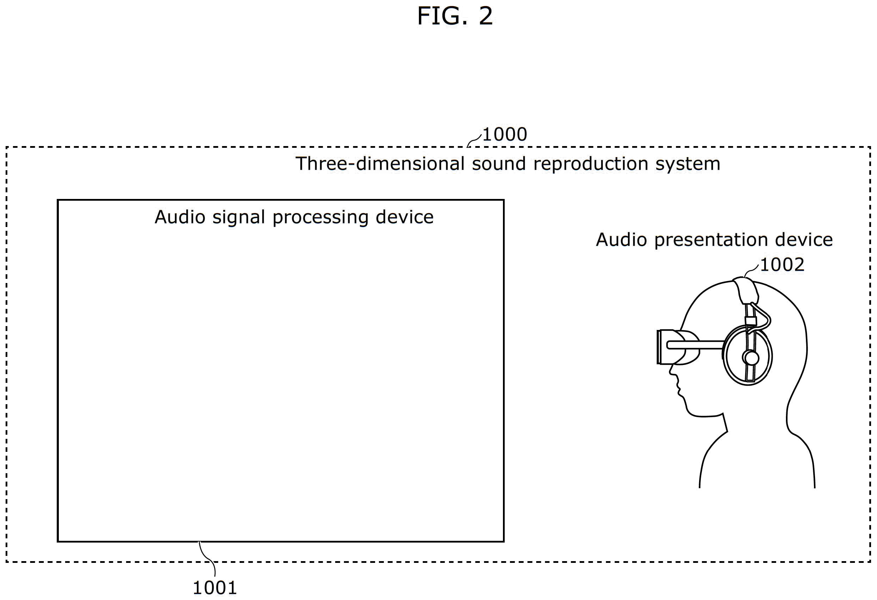

[NPL 1] B.C.J. Moore, "An Introduction to the Psychology of Hearing", Seishin Shobo, 1994/4/20, Chapter 6: Space Perception, p. 225
[NPL 2] Kazuhiro Iida, "Spatial Acoustics (Acoustic Science Series)", Corona Publishing Co., Ltd., August 2010, FIG. 2.26

### [Summary of Invention]

### [Technical Problem]

Incidentally, with the technique disclosed in PTL 1, it may be difficult to reduce the amount of computation and the computational load.

Accordingly, the present disclosure provides an audio signal processing method and the like that can reduce the amount of computation and the computational load.

### [Solution to Problem]

An audio signal processing method according to one aspect of the present disclosure is an audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; determining whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position; generating a merged audio signal by merging the first audio signal and the second audio signal, when the first audio signal and the second audio signal are determined to be merged; and outputting an output signal that is based on the merged audio signal generated.

Furthermore, an audio signal processing method according to one aspect of the present disclosure is an audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; generating a merged audio signal by merging the first audio signal and the second audio signal, when the first audio signal obtained and the second audio signal obtained are determined to be merged; and outputting an output signal that is based on the merged audio signal generated, wherein the first attribute information included in the first audio signal obtained includes: first position information indicating a position of the first sound; and first sound volume information indicating a sound volume of the first sound, the second attribute information included in the second audio signal obtained includes: second position information indicating a position of the second sound; and second sound volume information indicating a sound volume of the second sound, and in the generating, a merged sound arrival direction is determined based on: the first position information and the first sound volume information; and the second position information and the second sound volume information, the merged sound arrival direction being a direction from which a merged sound indicated by the merged audio signal arrives at a listening position that is a position at which a listener is present.

Furthermore, an audio signal processing method according to one aspect of the present disclosure is an audio signal processing method that is executed by an audio signal processing device and includes: obtaining M audio signals each of which is an audio signal that indicates a predetermined sound and includes attribute information identifying an attribute of the audio signal, M being an integer greater than or equal to 2; determining whether to merge N audio signals among the M audio signals obtained, based on an arrival direction from which each of M predetermined sounds arrives at a listening position that is a position at which a listener is present, N being an integer greater than or equal to 1 and less than or equal to M, the M predetermined sounds each being the predetermined sound; generating a merged audio signal by merging the N audio signals, when the N audio signals are determined to be merged; and outputting an output signal that is based on the merged audio signal generated.

Furthermore, an audio signal processing method according to one aspect of the present disclosure is an audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; determining whether to merge the first audio signal obtained and the second audio signal obtained, based on a first arrival direction and a second arrival direction, the first arrival direction being a direction from which the first sound arrives at a listening position that is a position at which a listener is present, the second arrival direction being a direction from which the second sound arrives at the listening position; generating a merged audio signal by merging the first audio signal and the second audio signal, when the first audio signal and the second audio signal are determined to be merged; and outputting an output signal that is based on the merged audio signal generated, wherein in the determining, one item of arrival direction information corresponding to the first arrival direction and one item of arrival direction information corresponding to the second arrival direction are determined, from among a plurality of items of arrival direction information each indicating: an arrival direction from which a sound arrives at the listening position; and a head-related transfer function that is based on the arrival direction, in the generating, the merged audio signal is generated when the one item of arrival direction information corresponding to the first arrival direction and determined in the determining is same as the one item of arrival direction information corresponding to the second arrival direction and determined in the determining, and in the outputting: the output signal generated by applying, to the merged audio signal generated, the head-related transfer function indicated by the one item of arrival direction information corresponding to the first arrival direction is output; and when the one item of arrival direction information corresponding to the first arrival direction and determined in the determining is different from the one item of arrival direction information corresponding to the second arrival direction and determined in the determining, both of (i) an output signal generated by applying, to the first audio signal, the head-related transfer function indicated by the one item of arrival direction information corresponding to the first arrival direction and (ii) an output signal generated by applying, to the second audio signal, the head-related transfer function indicated by the one item of arrival direction information corresponding to the second arrival direction are output.

Furthermore, a computer program according to one aspect of the present disclosure causes a computer to execute the audio signal processing method described above.

Furthermore, an audio signal processing device according to one aspect of the present disclosure includes: an obtainer that obtains a first audio signal and a second audio signal, the first audio signal indicating a first sound and including first attribute information identifying an attribute of the first audio signal, the second audio signal indicating a second sound and including second attribute information identifying an attribute of the second audio signal; a determiner that determines whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position; a merger that generates a merged audio signal by merging the first audio signal and the second audio signal, when the first audio signal and the second audio signal are determined to be merged; and a reproducer that outputs an output signal that is based on the merged audio signal generated.

Note that these comprehensive or specific aspects may be implemented as a system, a device, a method, an integrated circuit, a computer program, or a non-transitory computer-readable recording medium such as a CD-ROM, or may be implemented as any combination of a system, a device, a method, an integrated circuit, a computer program, and a recording medium.

### [Advantageous Effects of Invention]

The audio signal processing method and the like according to the one aspect of the present disclosure make it possible to reduce the amount of computation and the computational load.

### [Brief Description of Drawings]

[FIG. 1]

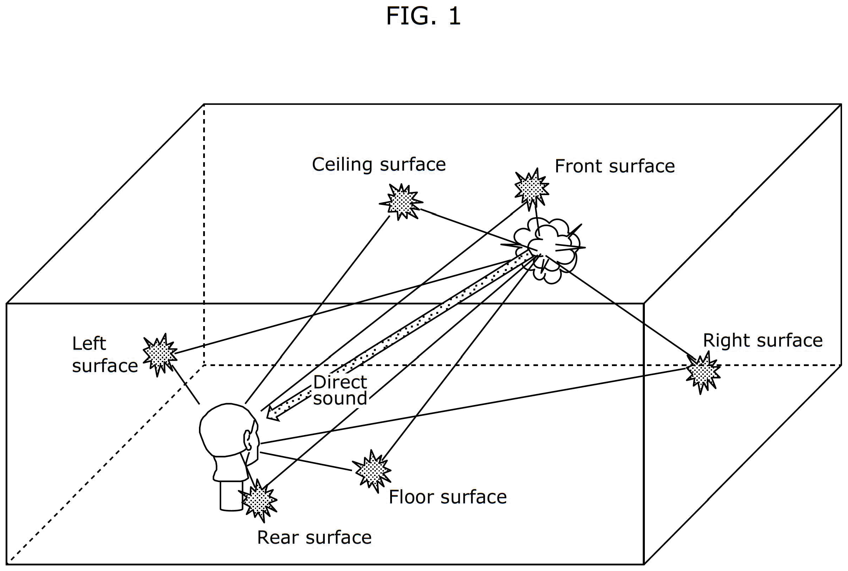

   FIG. 1 is a diagram illustrating one example of a direct sound and reflected sounds generated in a sound space.
[FIG. 2]
   FIG. 2 is a diagram illustrating an example of a three-dimensional sound reproduction system according to Embodiment 1.
[FIG. 3A]

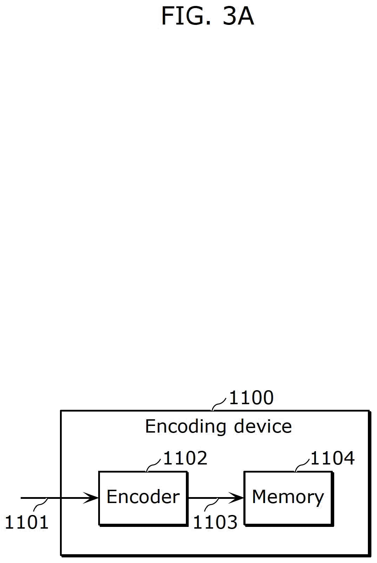

   FIG. 3A is a block diagram illustrating a configuration example of an encoding device according to Embodiment 1.
[FIG. 3B]

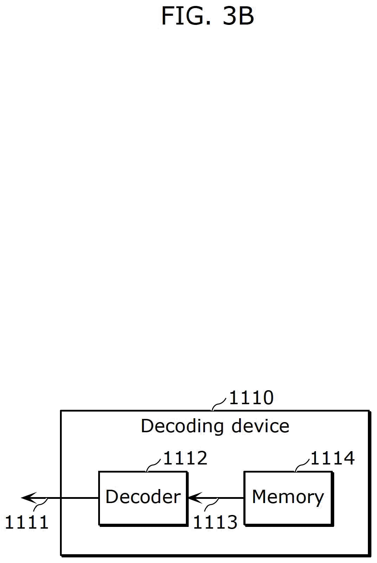

   FIG. 3B is a block diagram illustrating a configuration example of a decoding device according to Embodiment 1.
[FIG. 3C]

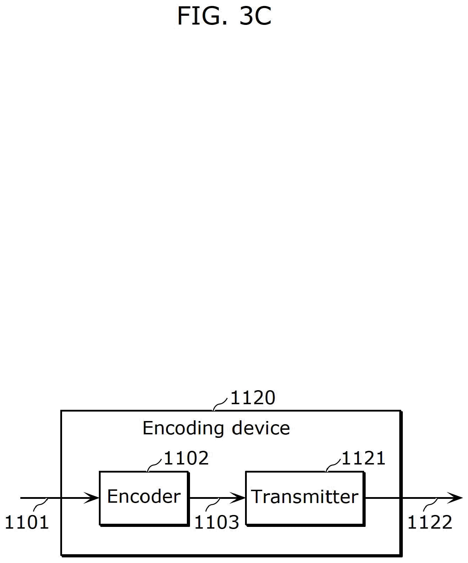

   FIG. 3C is a block diagram illustrating another configuration example of an encoding device according to Embodiment 1.
[FIG. 3D]

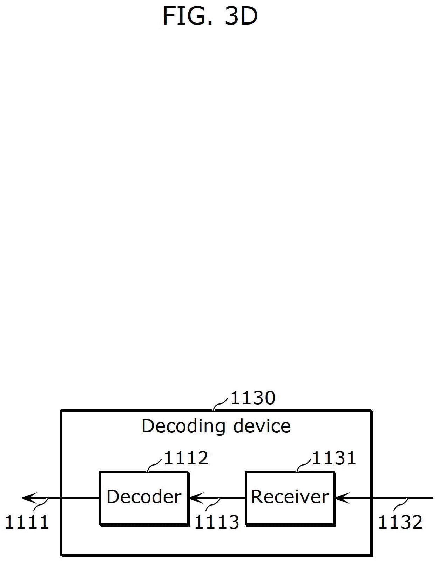

   FIG. 3D is a block diagram illustrating another configuration example of a decoding device according to Embodiment 1.
[FIG. 4A]

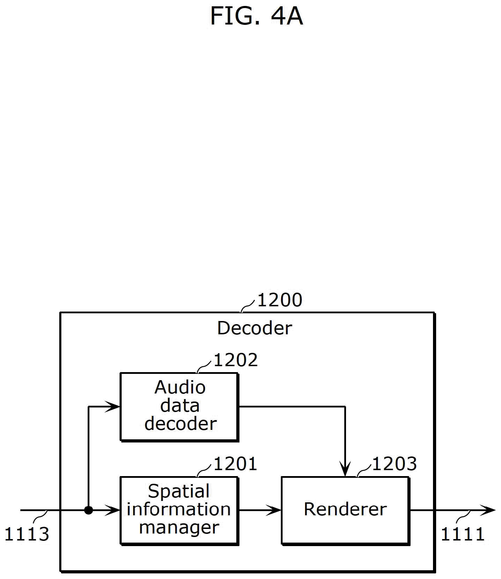

   FIG. 4A is a block diagram illustrating a configuration example of a decoder according to Embodiment 1.
[FIG. 4B]

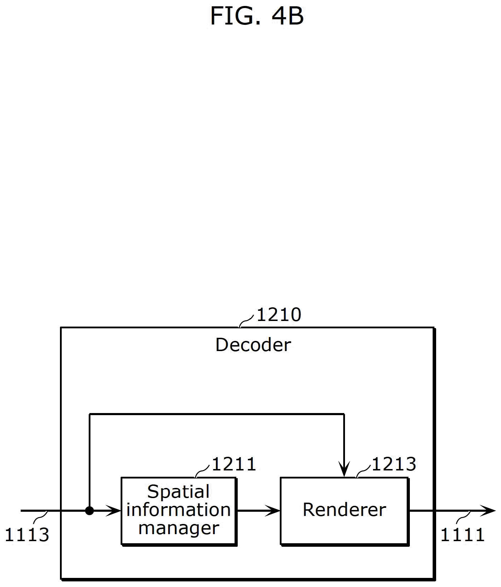

   FIG. 4B is a block diagram illustrating another configuration example of a decoder according to Embodiment 1.
[FIG. 5]

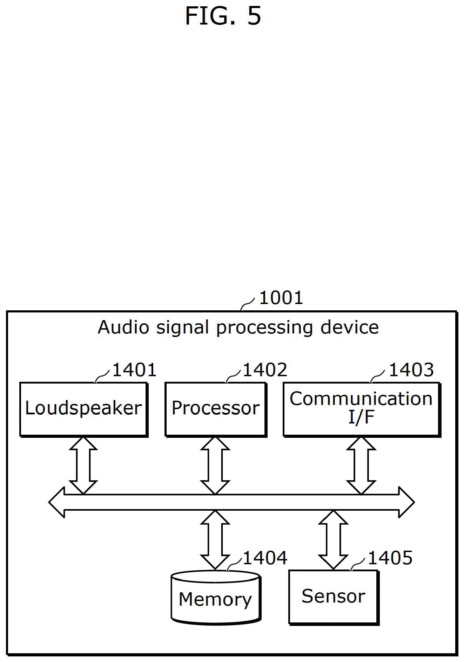

   FIG. 5 is a diagram illustrating an example of a physical configuration of an audio signal processing device according to Embodiment 1.
[FIG. 6]

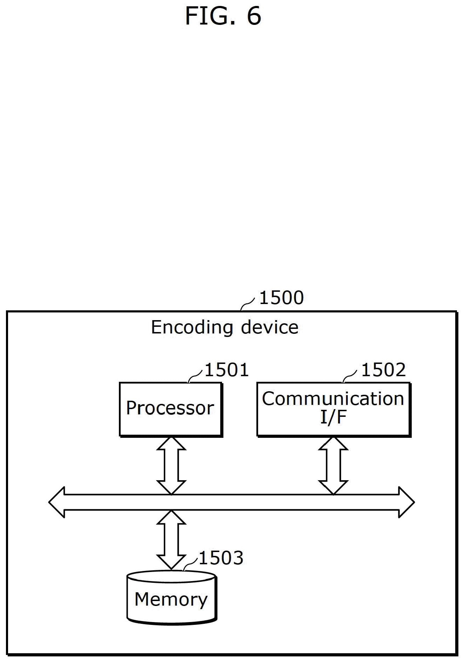

   FIG. 6 is a diagram illustrating an example of a physical configuration of an encoding device according to Embodiment 1.
[FIG. 7]

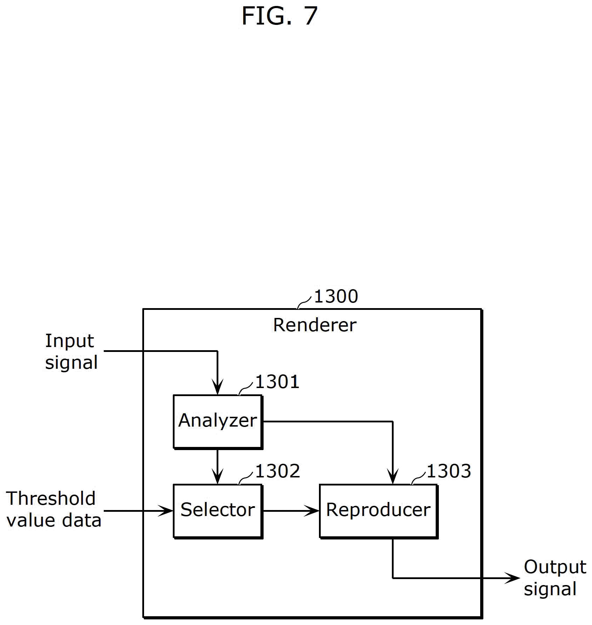

   FIG. 7 is a block diagram illustrating a configuration example of a renderer according to Embodiment 1.
[FIG. 8]

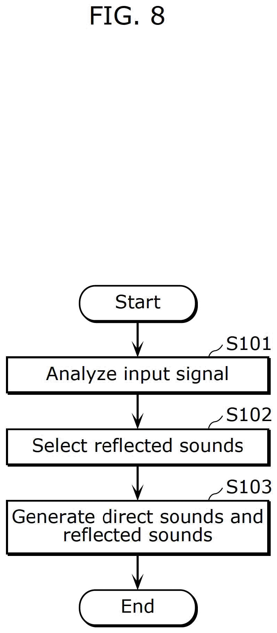

   FIG. 8 is a flowchart illustrating an operation example of an audio signal processing device according to Embodiment 1.
[FIG. 9]

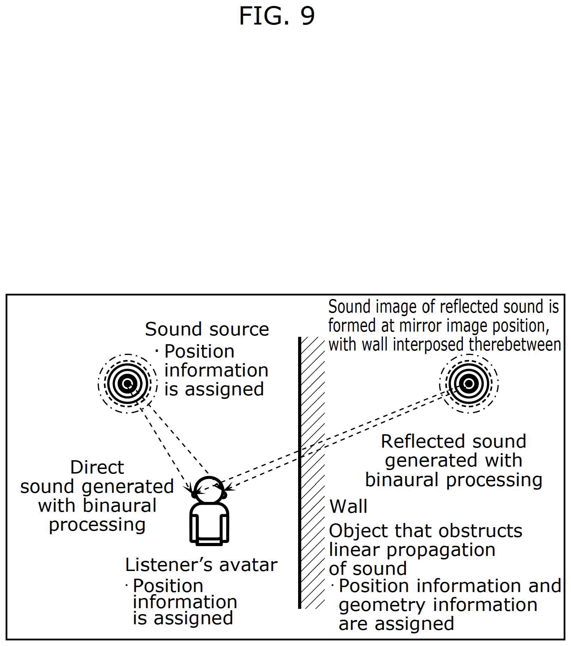

   FIG. 9 is a diagram illustrating a comparatively distant positional relationship between a listener and an obstacle object.
[FIG. 10]

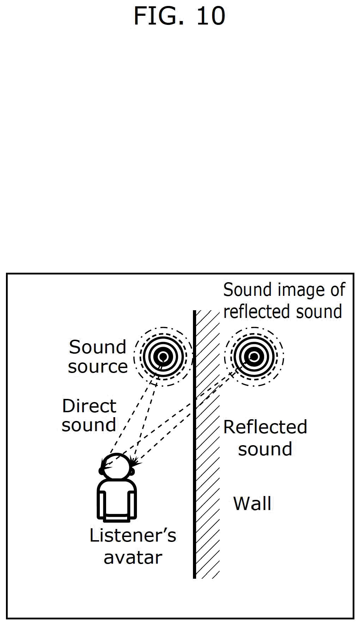

   FIG. 10 is a diagram illustrating a comparatively close positional relationship between a listener and an obstacle object.
[FIG. 11]

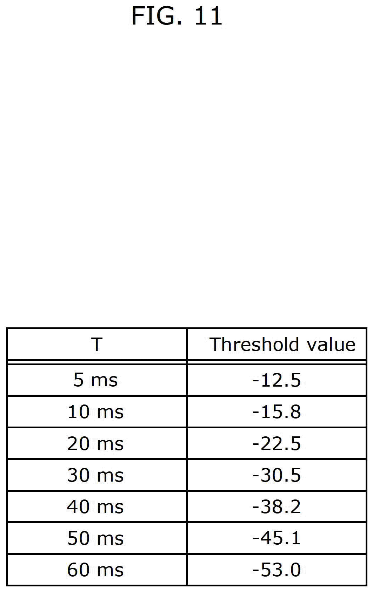

   FIG. 11 is a diagram illustrating relationships between time differences between direct sounds and reflected sounds, and threshold values.
[FIG. 12A]

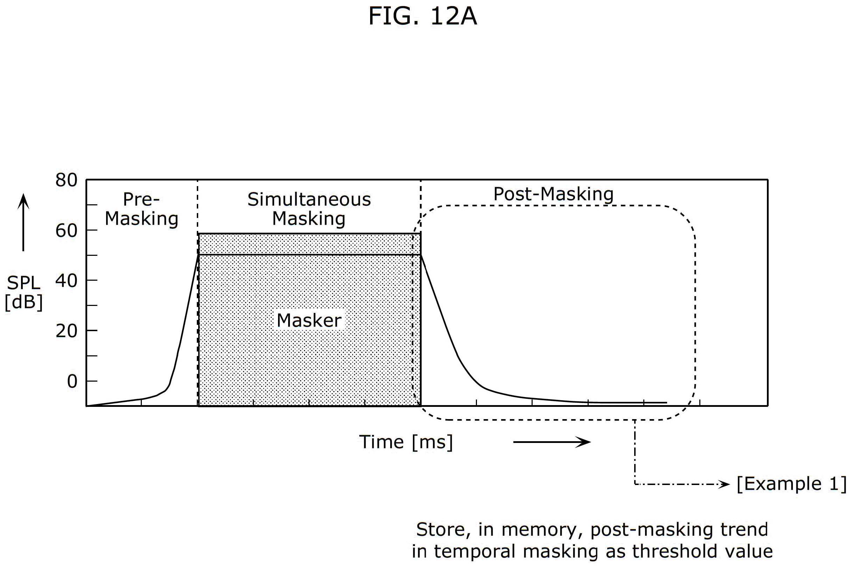

   FIG. 12A is a diagram illustrating a part of an example of a method for setting threshold value data.
[FIG. 12B]

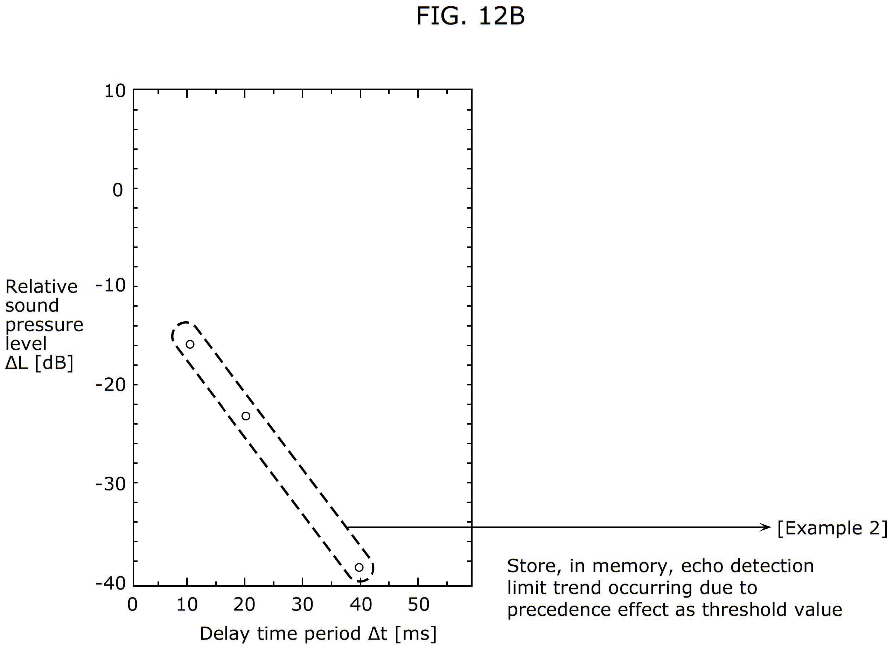

   FIG. 12B is a diagram illustrating a part of an example of a method for setting threshold value data.
[FIG. 12C]

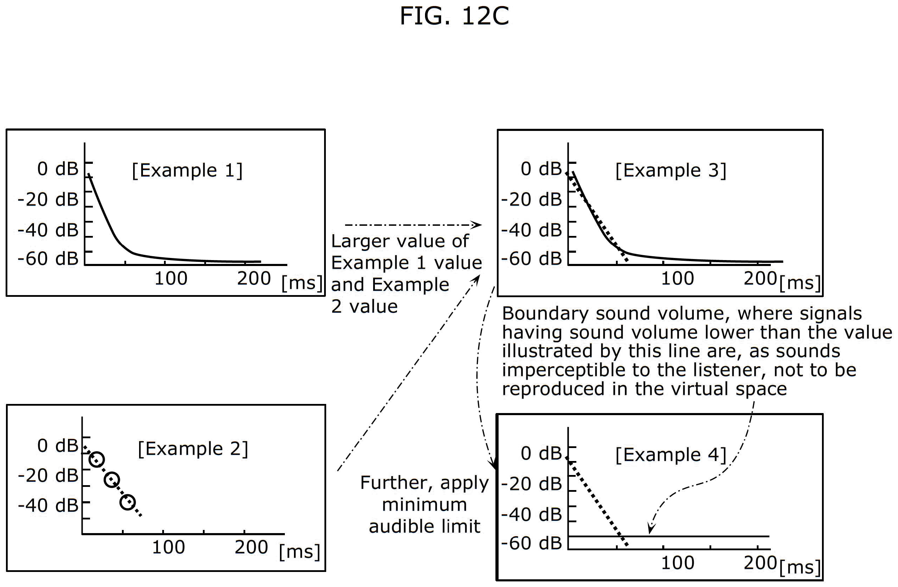

   FIG. 12C is a diagram illustrating a part of an example of a method for setting threshold value data.
[FIG. 13]

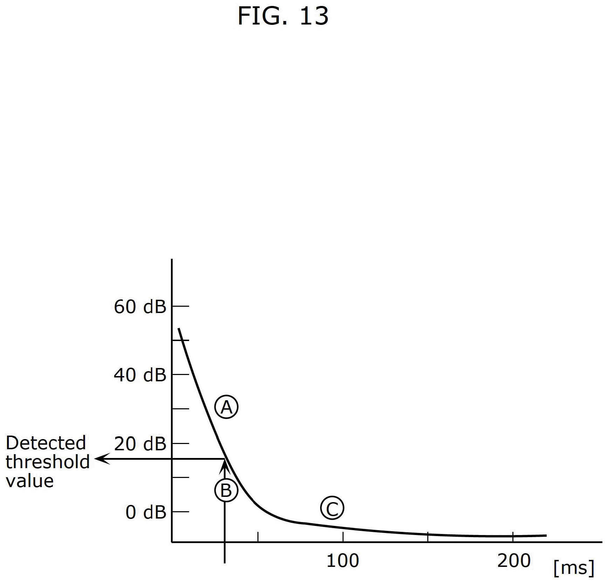

   FIG. 13 is a diagram illustrating an example of a threshold value setting method.
[FIG. 14]

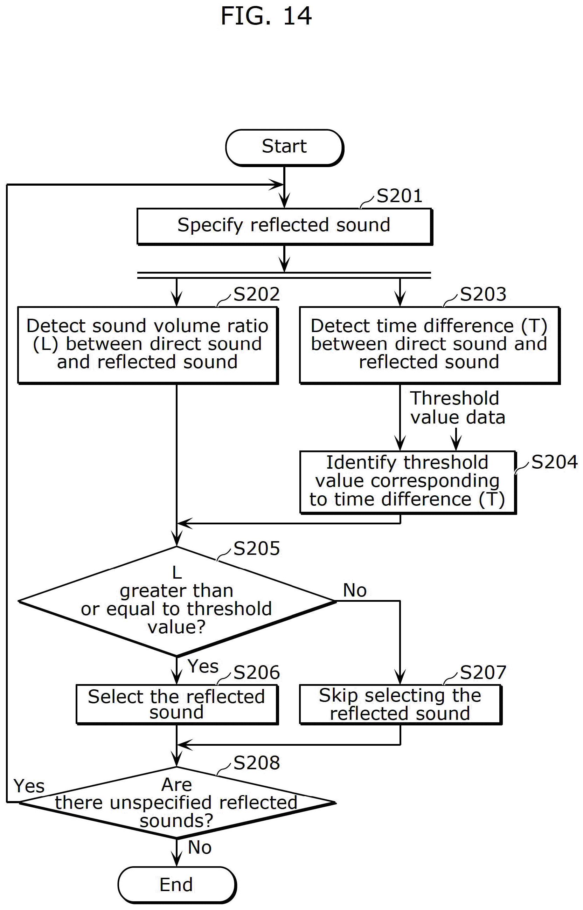

   FIG. 14 is a flowchart illustrating an example of selection processing.
[FIG. 15]

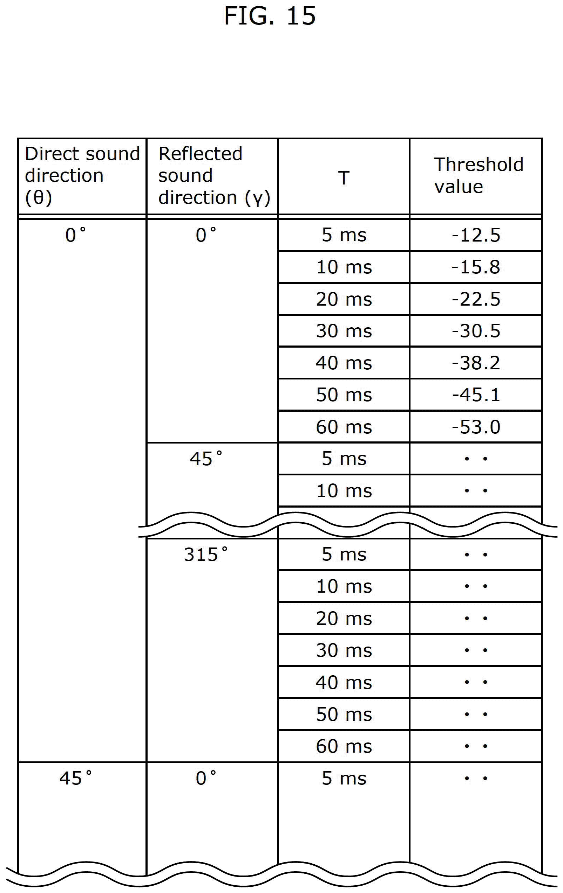

   FIG. 15 is a diagram illustrating relationships between directions of direct sounds, directions of reflected sounds, time differences, and threshold values.
[FIG. 16]

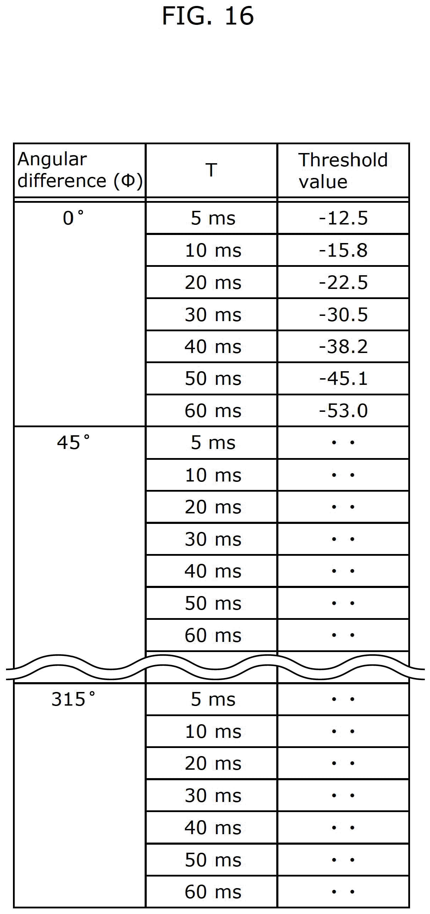

   FIG. 16 is a diagram illustrating relationships between angular differences, time differences, and threshold values.
[FIG. 17]

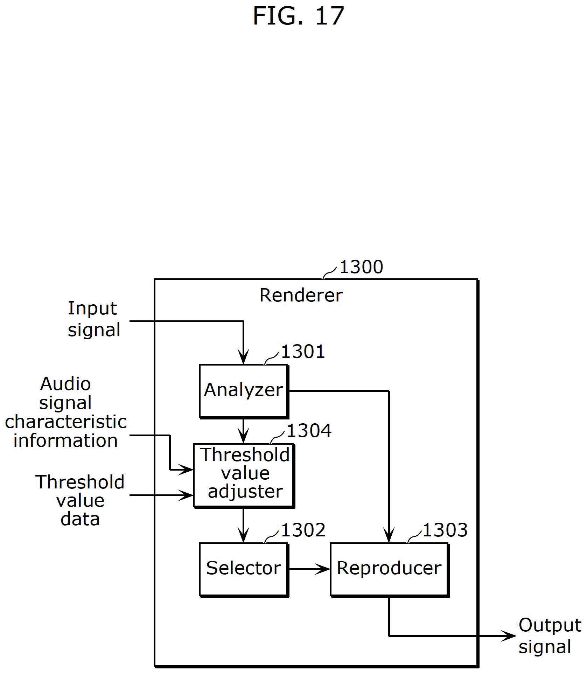

   FIG. 17 is a block diagram illustrating another configuration example of a renderer.
[FIG. 18]

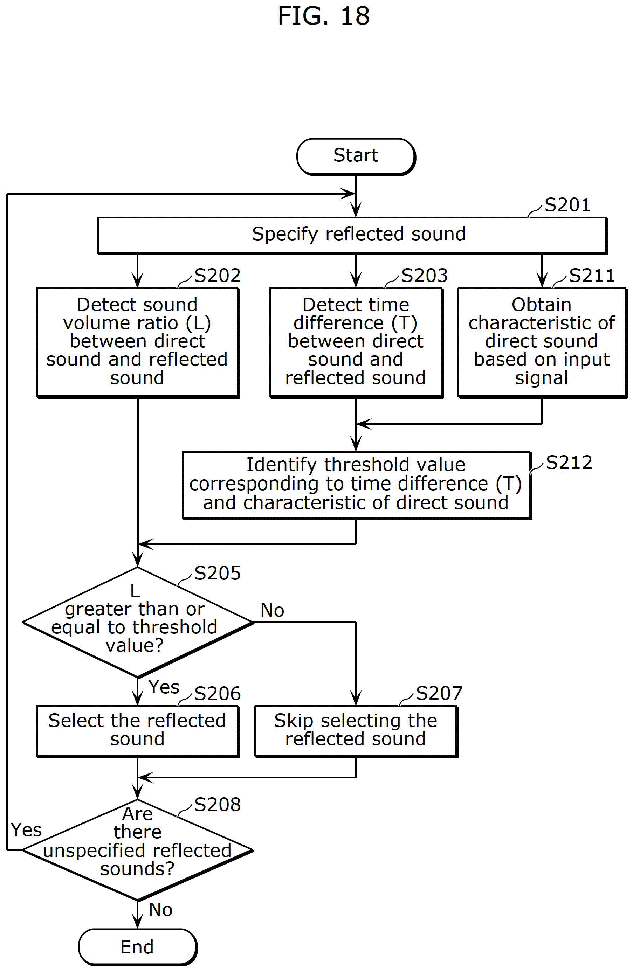

   FIG. 18 is a flowchart illustrating another example of selection processing.
[FIG. 19]

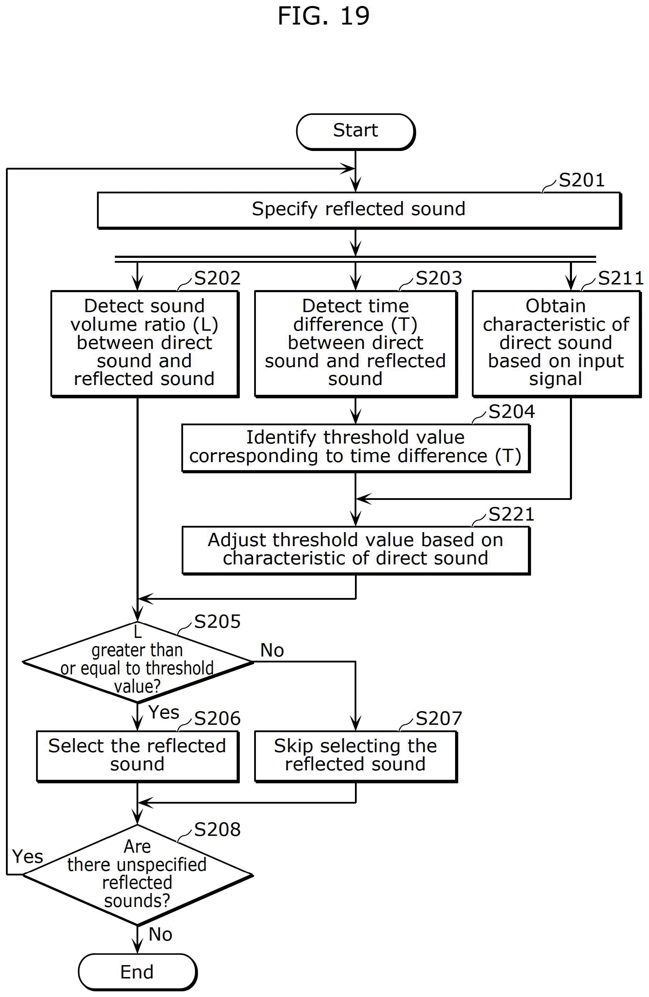

   FIG. 19 is a flowchart illustrating yet another example of selection processing.
[FIG. 20]

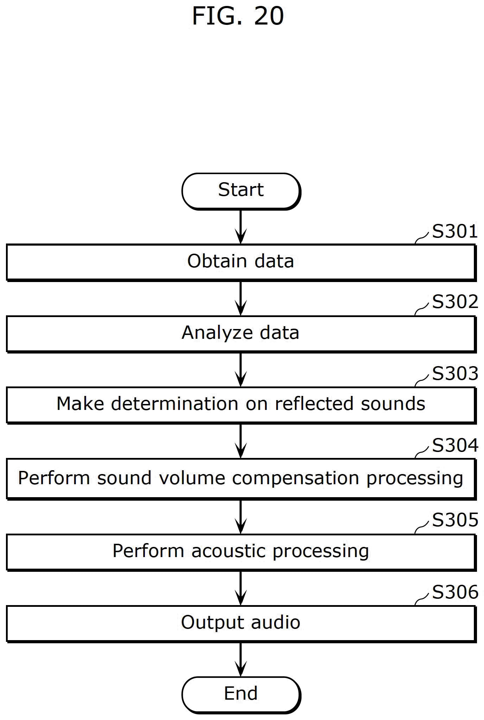

   FIG. 20 is a flowchart illustrating a first variation of operations of an audio signal processing device according to Embodiment 1.
[FIG. 21]

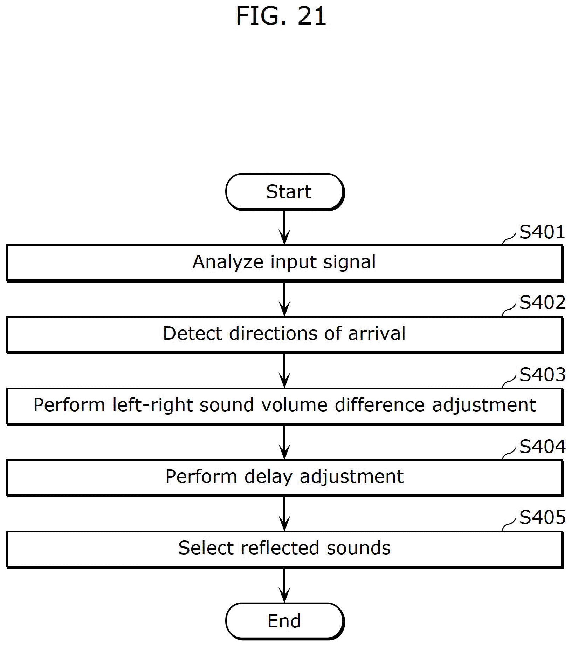

   FIG. 21 is a flowchart illustrating a second variation of operations of an audio signal processing device according to Embodiment 1.
[FIG. 22]

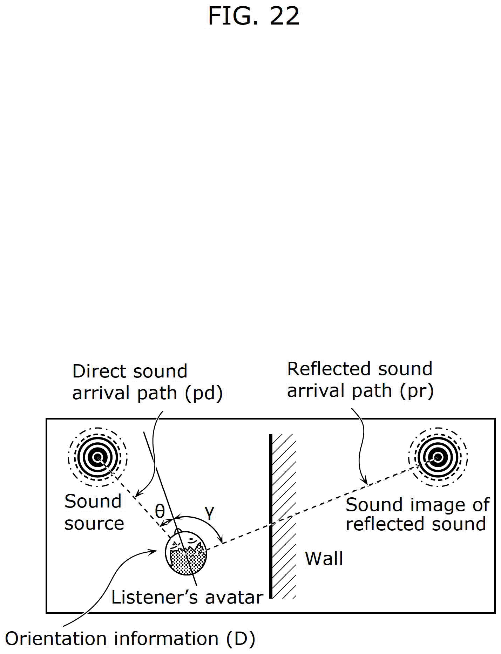

   FIG. 22 is a diagram illustrating an arrangement example of an avatar, a sound source object, and an obstacle object.
[FIG. 23]

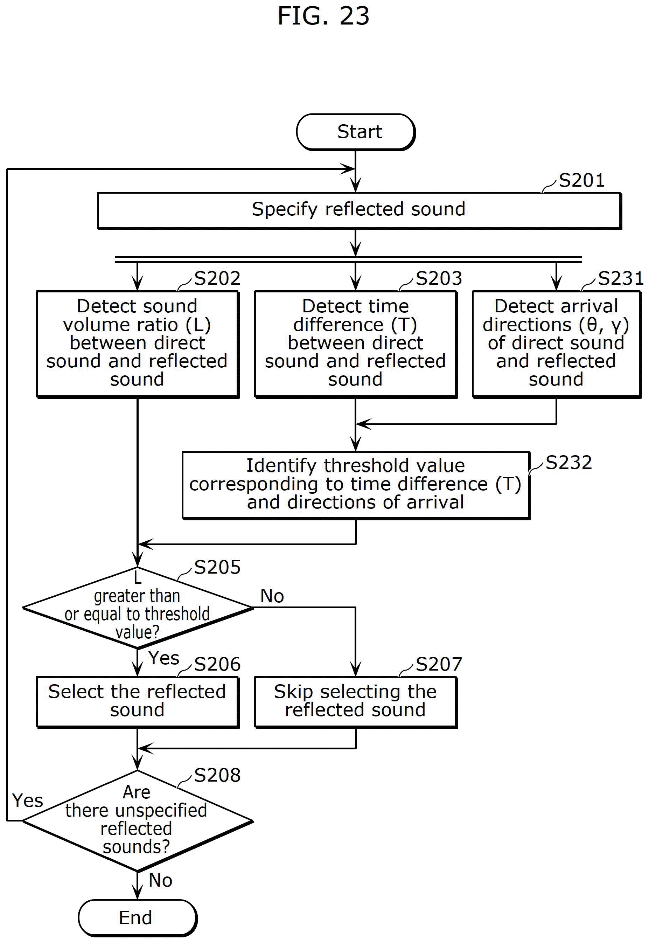

   FIG. 23 is a flowchart illustrating yet another example of selection processing.
[FIG. 24]

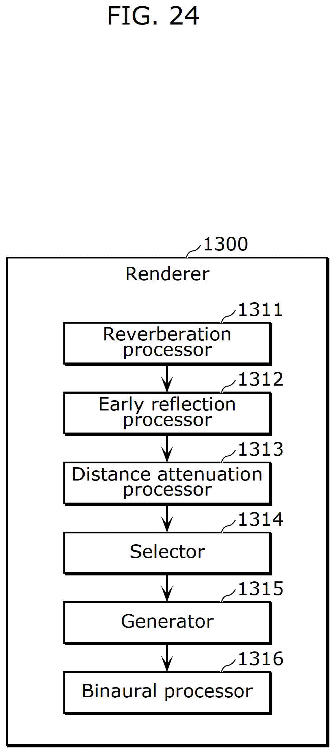

   FIG. 24 is a block diagram illustrating a configuration example for a renderer to perform pipeline processing.
[FIG. 25]

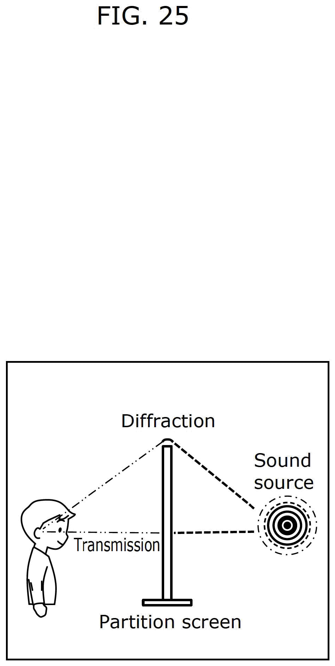

   FIG. 25 is a diagram illustrating transmission and diffraction of a sound.
[FIG. 26]

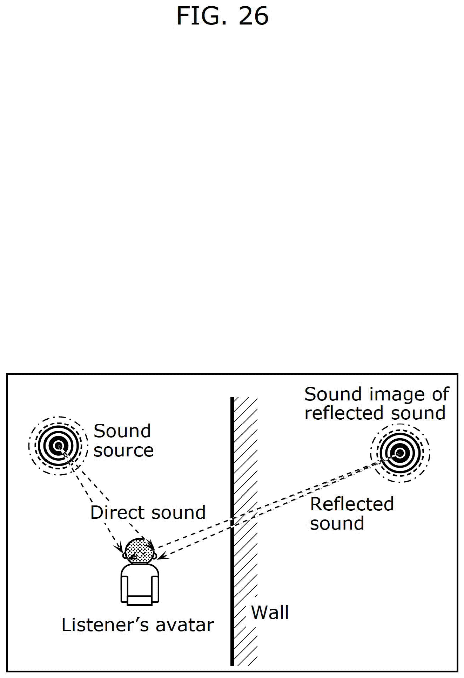

   FIG. 26 is a diagram illustrating an example of the positional relationship between a listener and an obstacle object, according to Embodiment 1.
[FIG. 27]

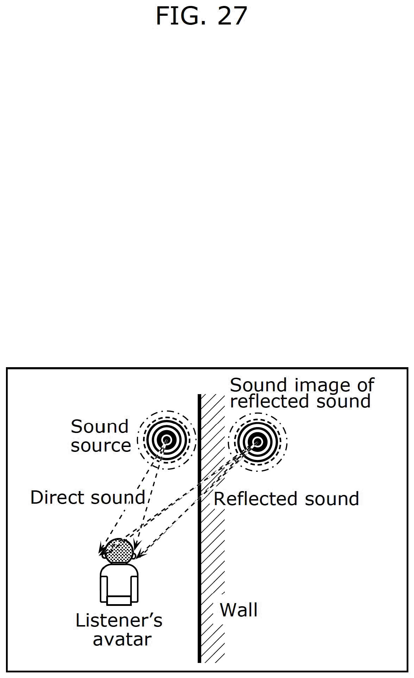

   FIG. 27 is a diagram illustrating another example of the positional relationship between a listener and an obstacle object, according to Embodiment 1.
[FIG. 28]

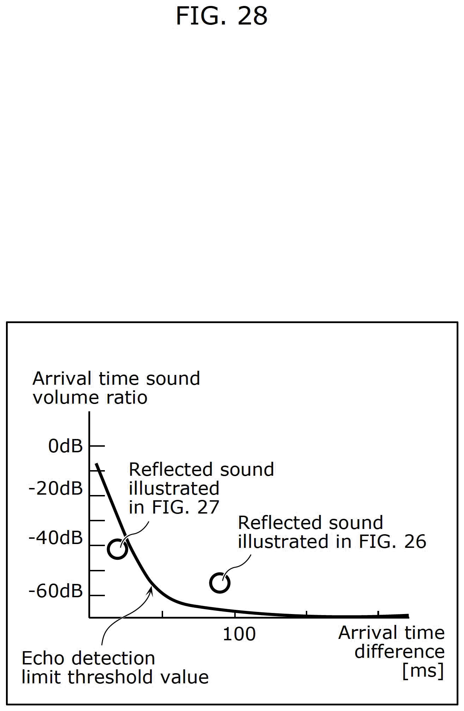

   FIG. 28 is an example of an echo detection limit threshold value according to Embodiment 1.
[FIG. 29]

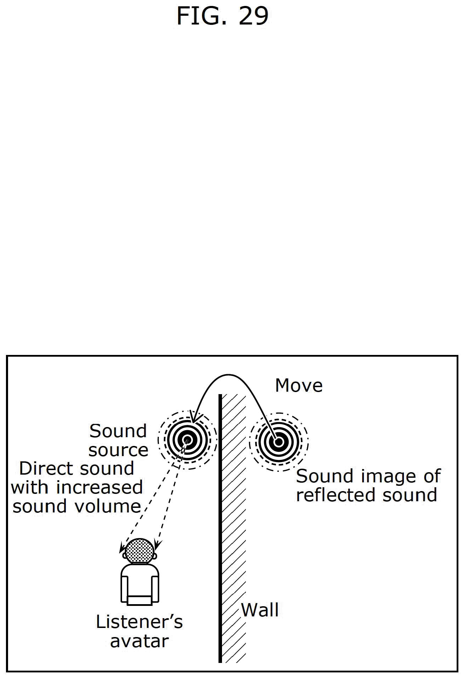

   FIG. 29 is a diagram illustrating an example of movement of a sound image position of the reflected sound in the positional relationship illustrated in FIG. 27.
[FIG. 30]

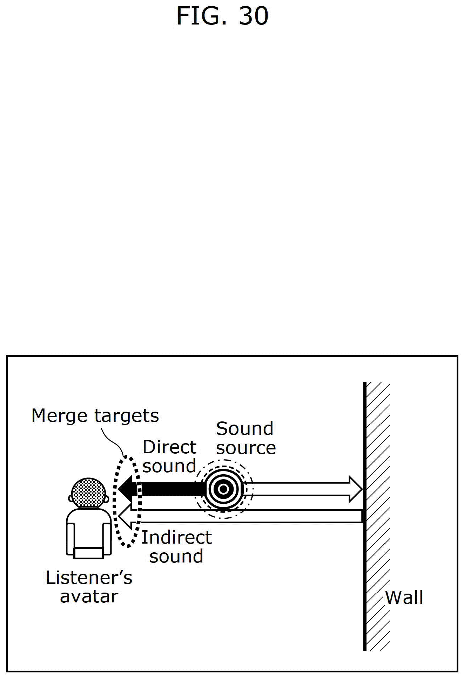

   FIG. 30 is a diagram illustrating an example in which a direct sound and an indirect sound arrive at a listener from the same direction.
[FIG. 31]

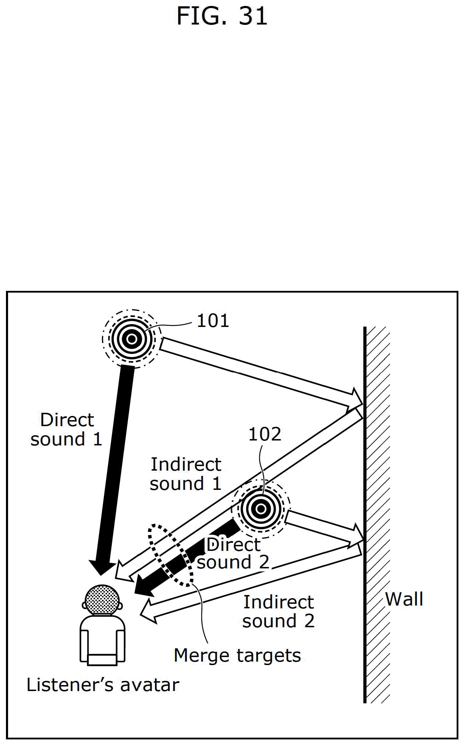

   FIG. 31 is a diagram illustrating an example in which direct sounds and indirect sounds arrive at a listener from each of one sound source and another sound source.
[FIG. 32]

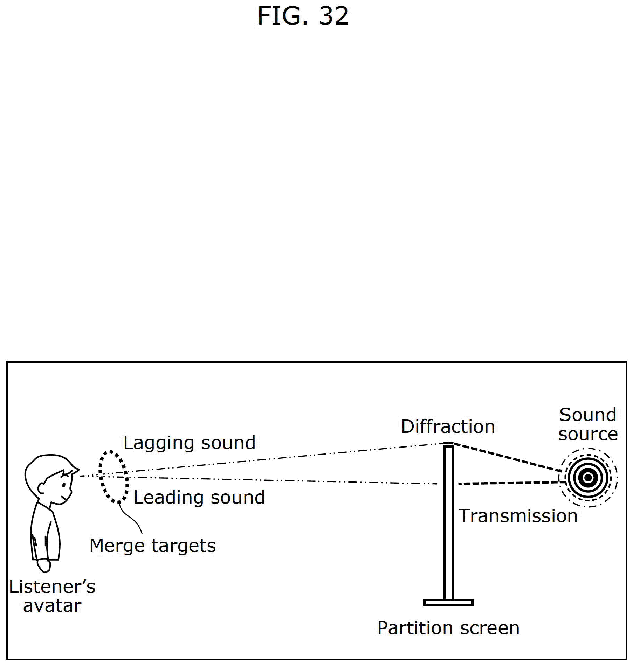

   FIG. 32 is a diagram illustrating an example in which a transmitted sound and a diffracted sound emitted from one sound source arrive at a listener.
[FIG. 33]

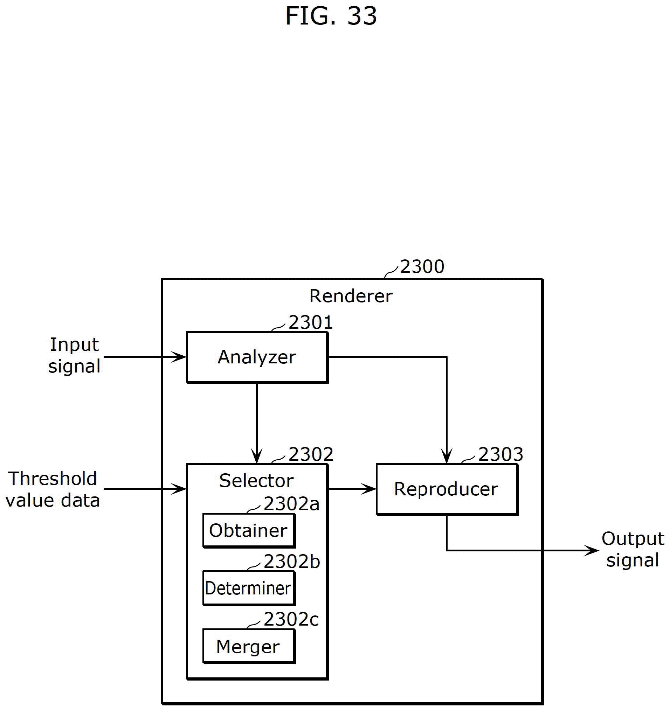

   FIG. 33 is a block diagram illustrating a configuration example of a renderer according to Embodiment 2.
[FIG. 34]

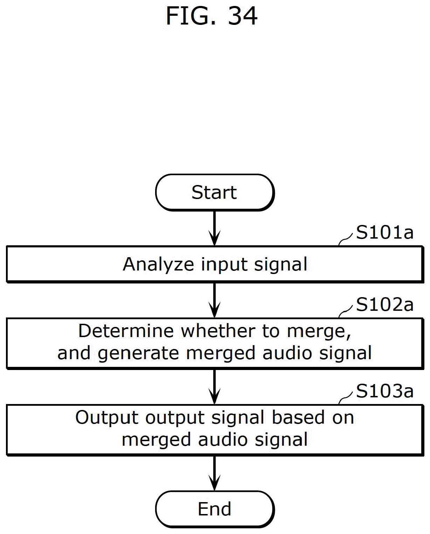

   FIG. 34 is a flowchart illustrating Operation Example 1 of an audio signal processing device according to Embodiment 2.
[FIG. 35]

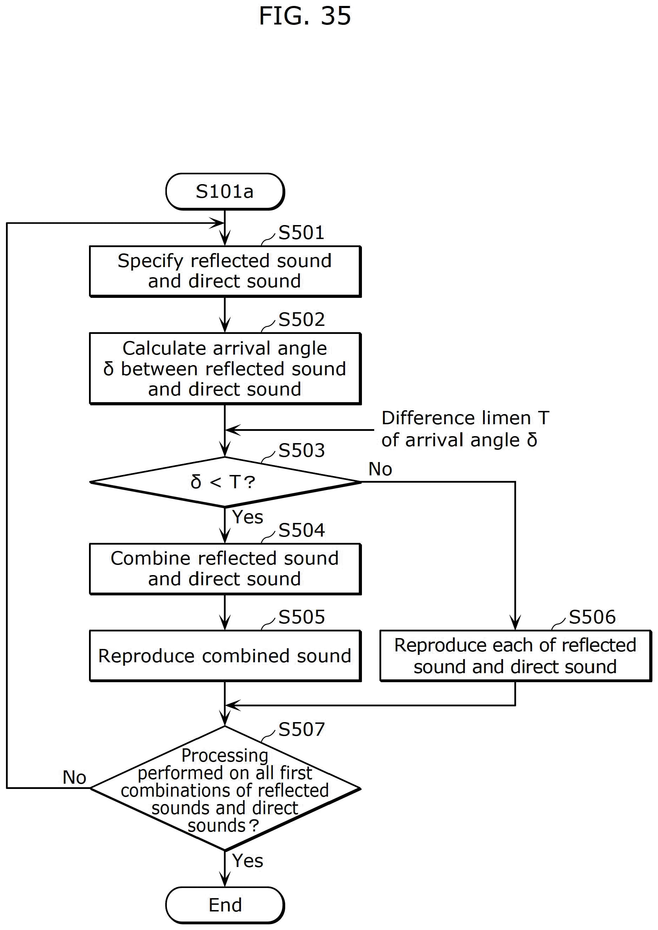

   FIG. 35 is a flowchart illustrating an operation example of processing performed by a selector and a reproducer in Operation Example 1 according to Embodiment 2.
[FIG. 36]

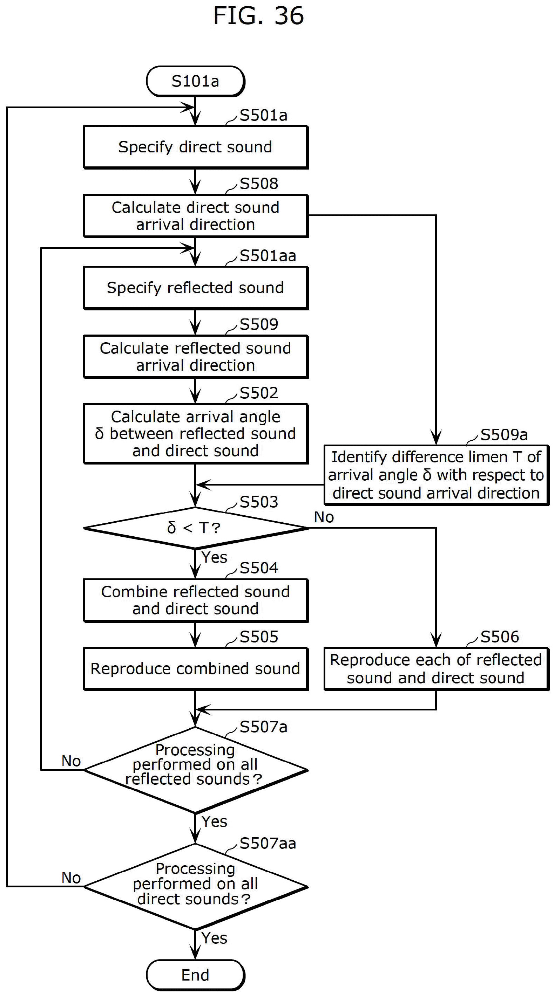

   FIG. 36 is a flowchart illustrating an operation example of processing performed by a selector and a reproducer in Operation Example 2 according to Embodiment 2.
[FIG. 37]

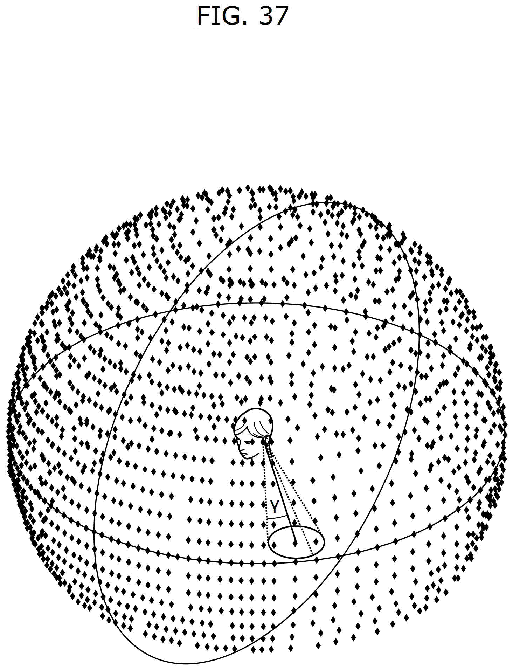

   FIG. 37 is a diagram illustrating head-related transfer functions (HRTFs) in the Spatially Oriented Format for Acoustics (SOFA), according to Embodiment 2.
[FIG. 38]

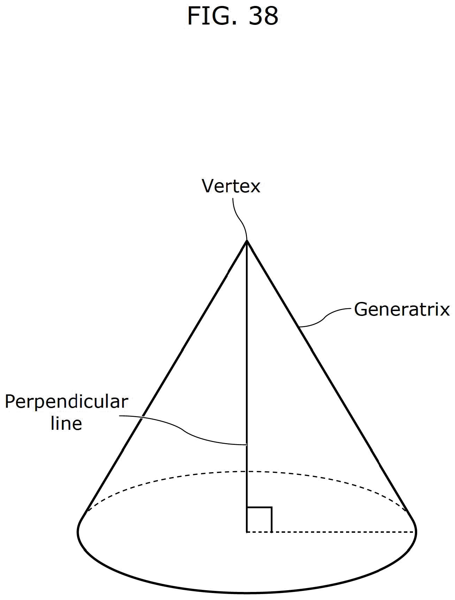

   FIG. 38 is a diagram illustrating a cone for illustrating the relationship between a position at which an HRTF is defined and a listening position, according to Embodiment 2.
[FIG. 39]

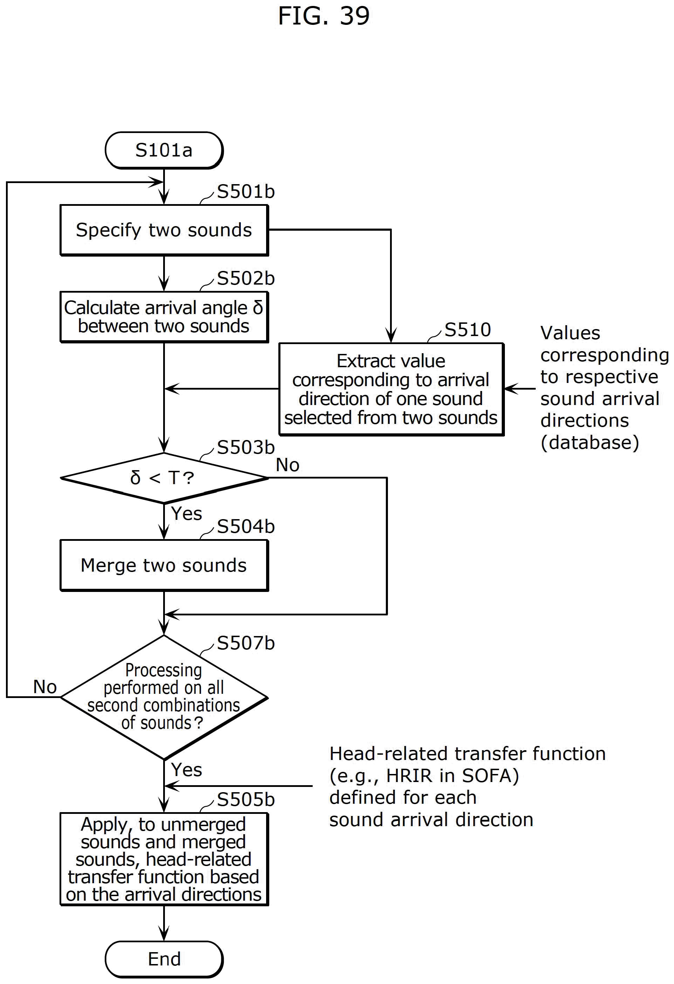

   FIG. 39 is a flowchart illustrating an operation example of processing performed by a selector and a reproducer in Operation Example 3 according to Embodiment 2.
[FIG. 40]

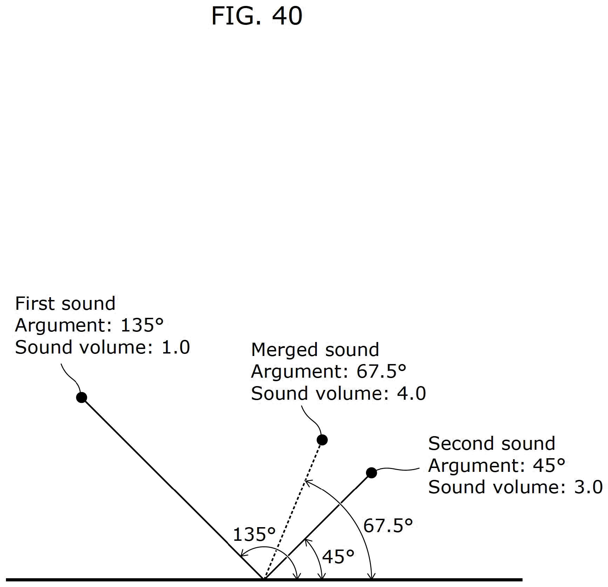

   FIG. 40 is a diagram for illustrating a merged sound arrival direction used in Operation Example 3 according to Embodiment 2.
[FIG. 41]

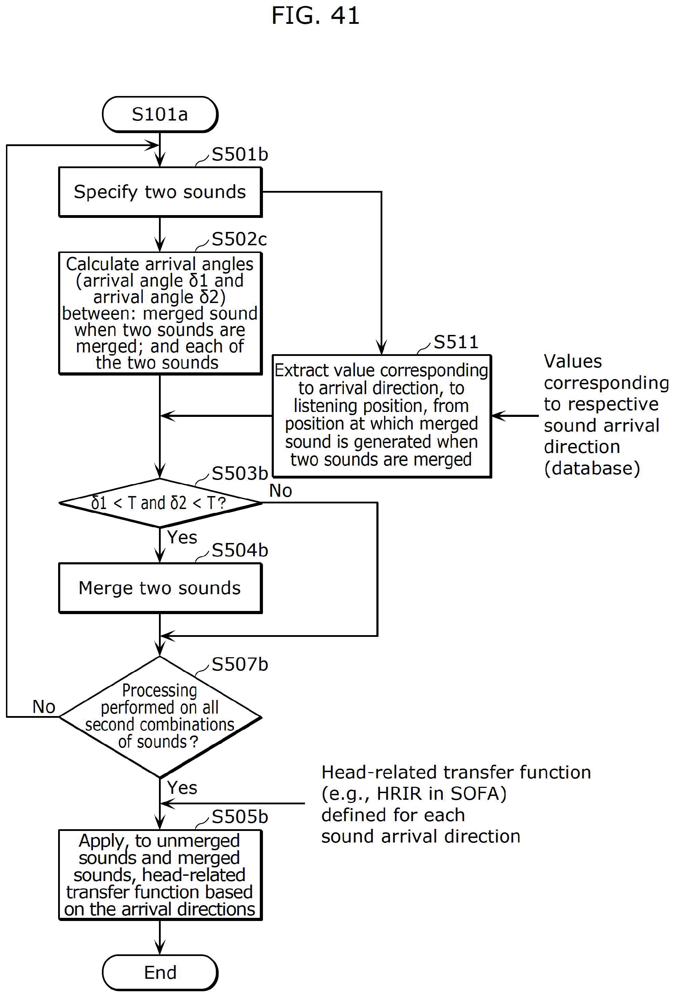

   FIG. 41 is a flowchart illustrating an operation example of processing performed by a selector and a reproducer in Operation Example 4 according to Embodiment 2.
[FIG. 42]

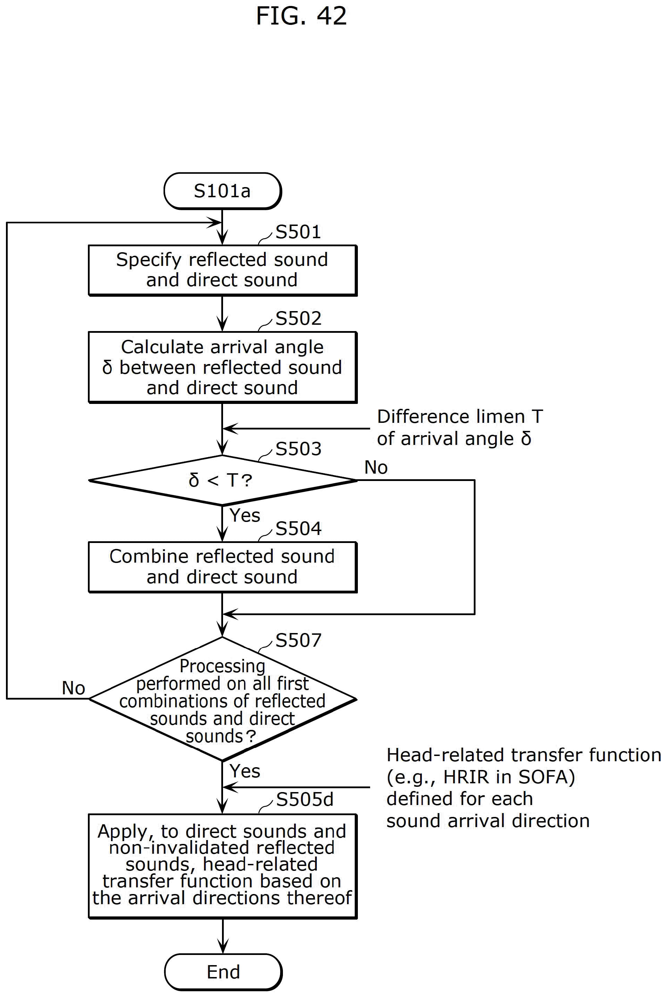

   FIG. 42 is a flowchart illustrating an operation example of processing performed by a selector and a reproducer in Operation Example 5 according to Embodiment 2.
[FIG. 43]

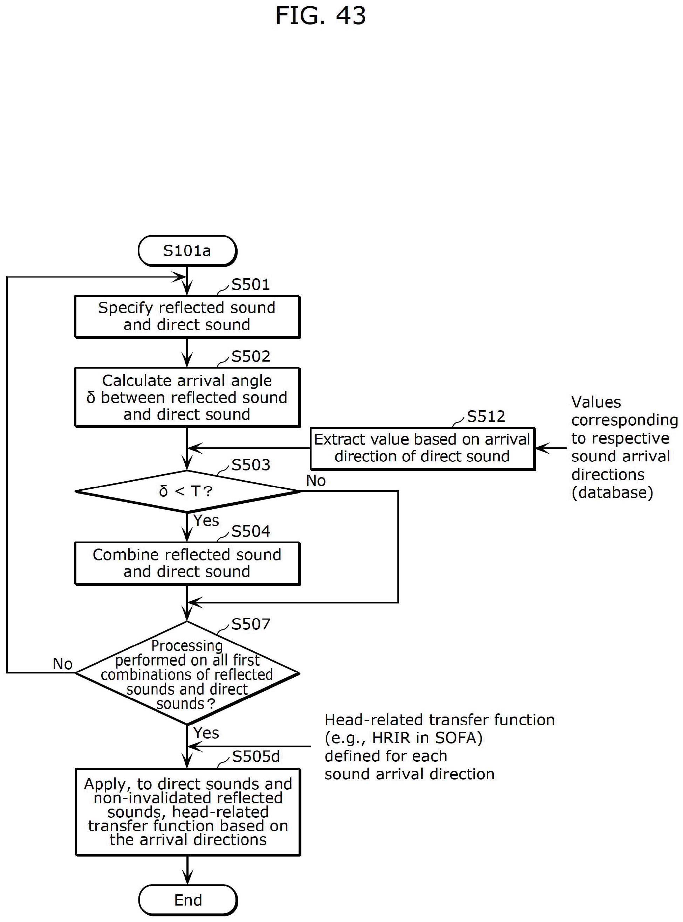

   FIG. 43 is a flowchart illustrating an operation example of processing performed by a selector and a reproducer in Operation Example 6 according to Embodiment 2.
[FIG. 44]

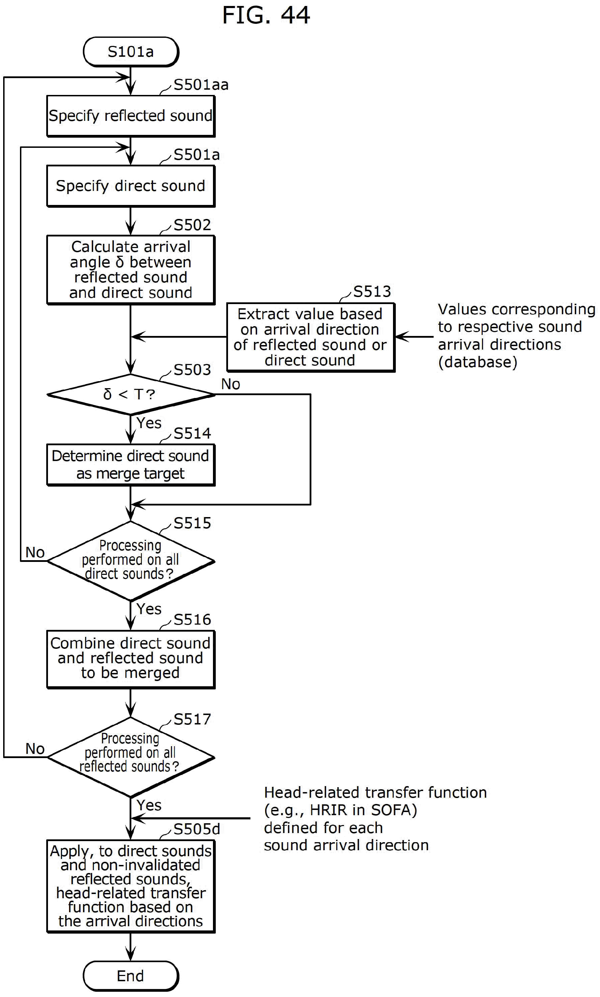

   FIG. 44 is a flowchart illustrating an operation example of processing performed by a selector and a reproducer in Operation Example 7 according to Embodiment 2.
[FIG. 45]

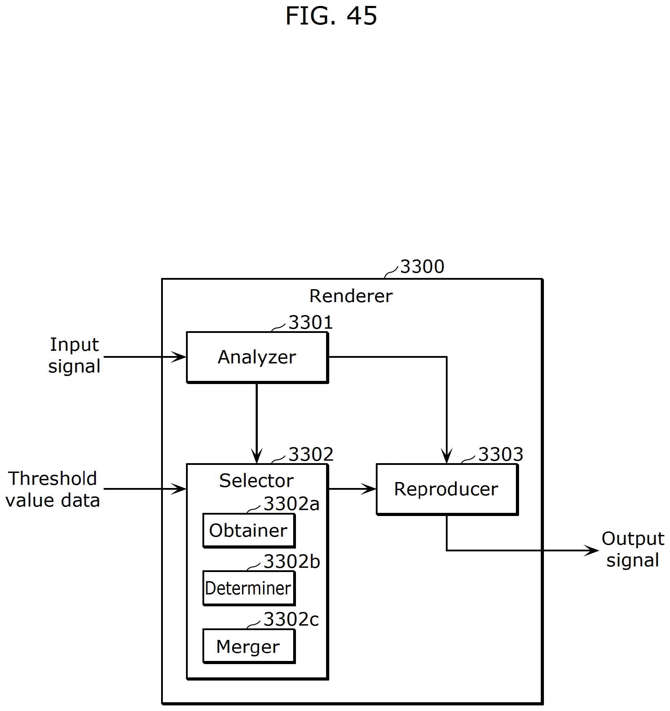

   FIG. 45 is a block diagram illustrating a configuration example of a renderer according to Embodiment 3.
[FIG. 46]

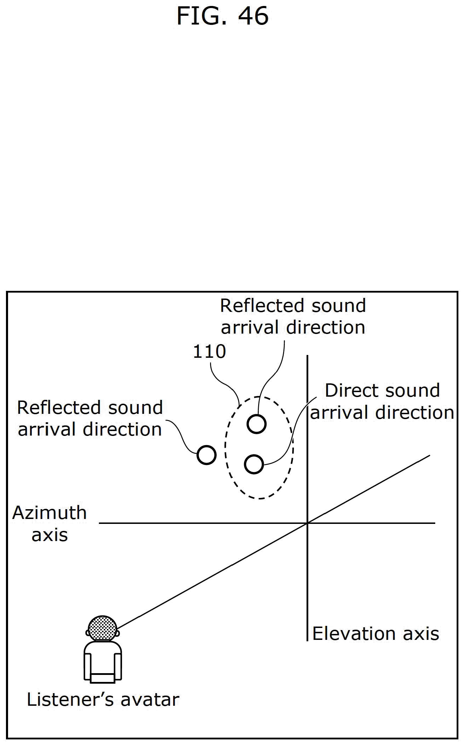

   FIG. 46 is a diagram illustrating an example of a merge region according to Embodiment 3.
[FIG. 47]

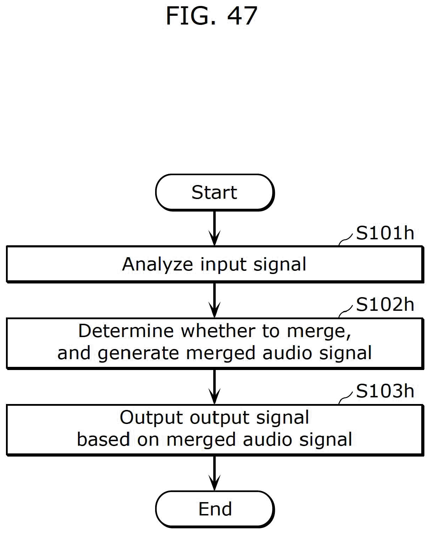

   FIG. 47 is a flowchart illustrating Operation Example 1 of an audio signal processing device according to Embodiment 3.
[FIG. 48]

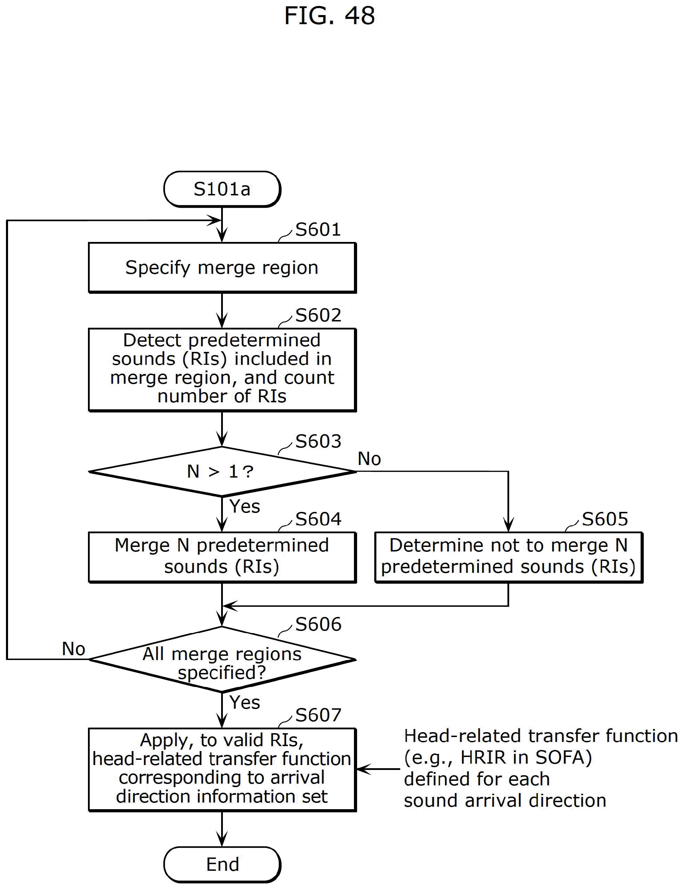

   FIG. 48 is a flowchart illustrating an operation example of processing performed by a selector and a reproducer in Operation Example 1 according to Embodiment 3.
[FIG. 49]

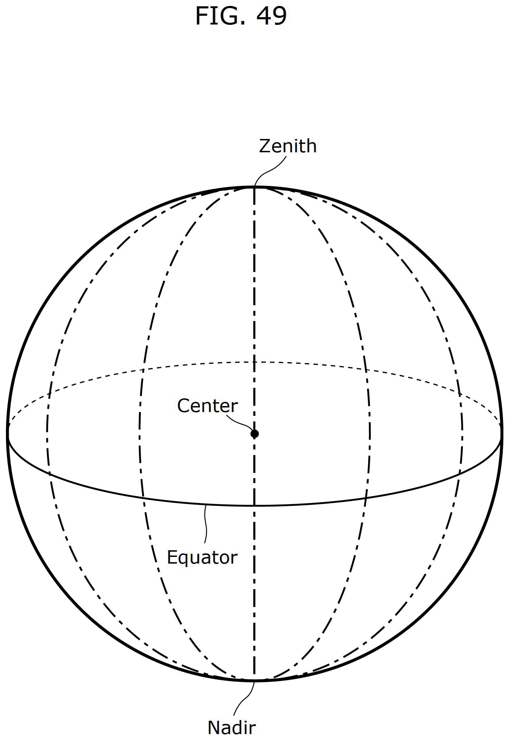

   FIG. 49 is a diagram for illustrating a merge region according to Embodiment 3.
[FIG. 50]

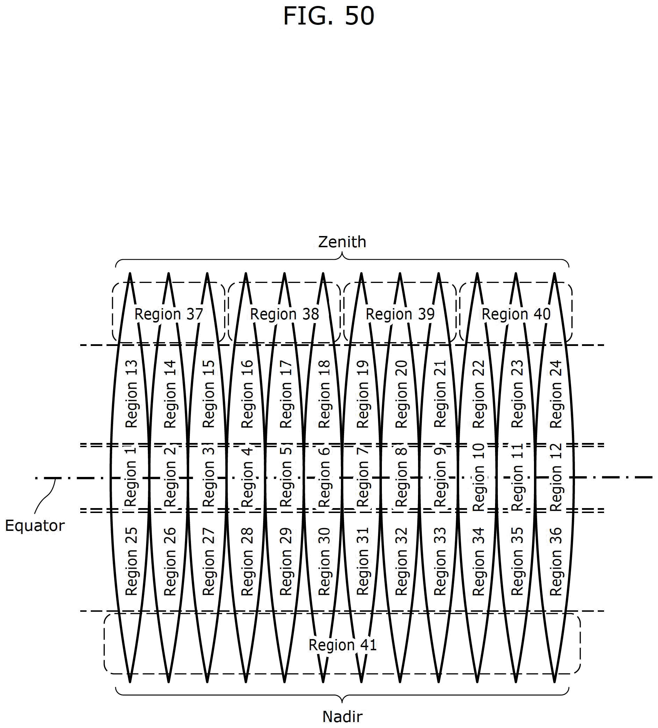

   FIG. 50 is another diagram for illustrating the merge region according to Embodiment 3.
[FIG. 51]

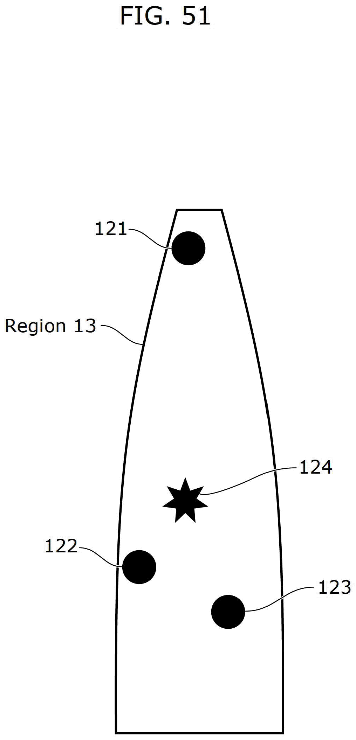

   FIG. 51 is a diagram for illustrating a method for calculating a merged sound arrival direction according to Embodiment 3.
[FIG. 52]

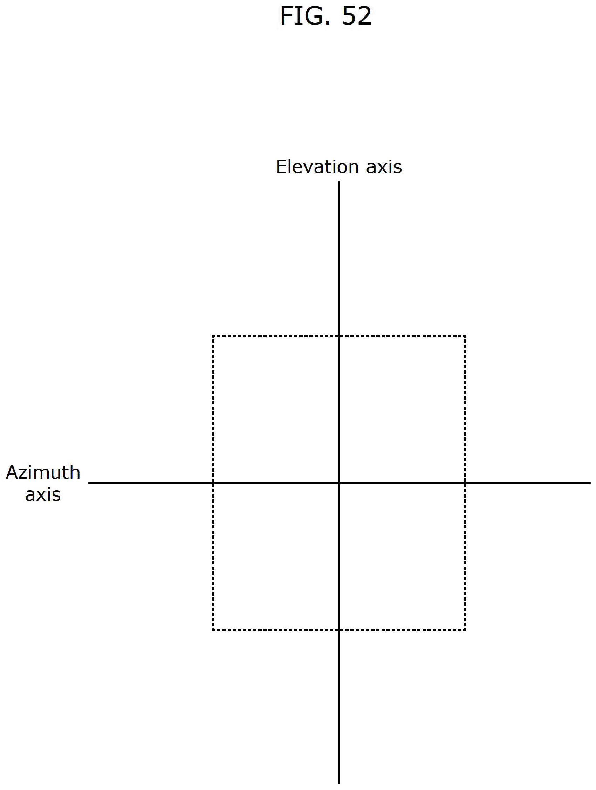

   FIG. 52 is a diagram illustrating another, first example of the merge region according to Embodiment 3.
[FIG. 53]

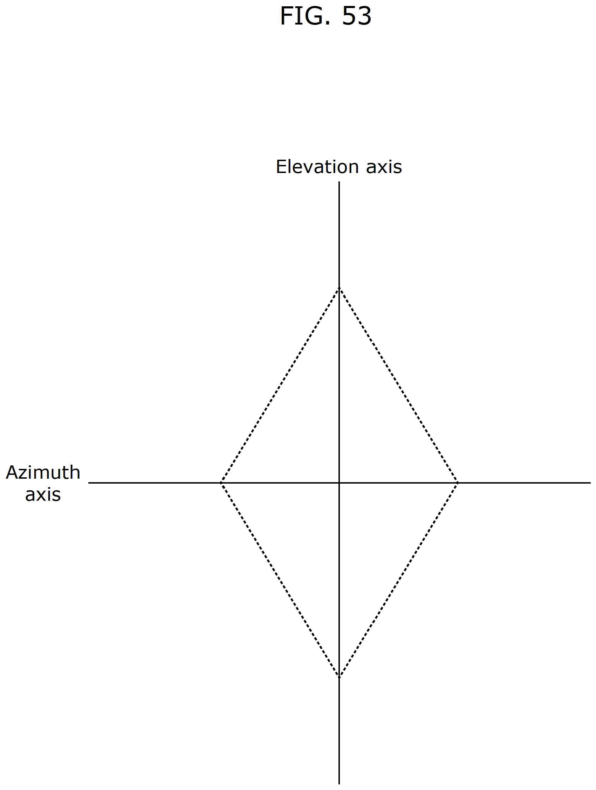

   FIG. 53 is a diagram illustrating another, second example of the merge region according to Embodiment 3.
[FIG. 54]

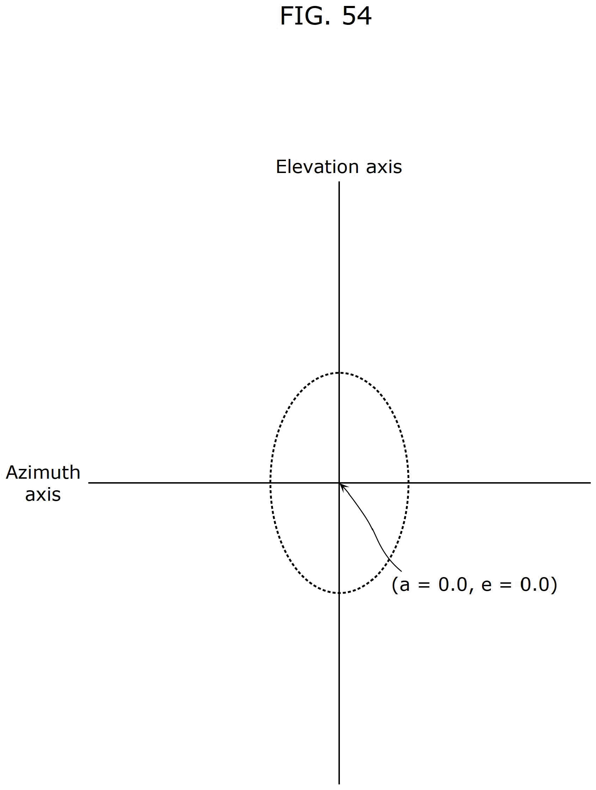

   FIG. 54 is a diagram illustrating another, third example of the merge region according to Embodiment 3.
[FIG. 55]

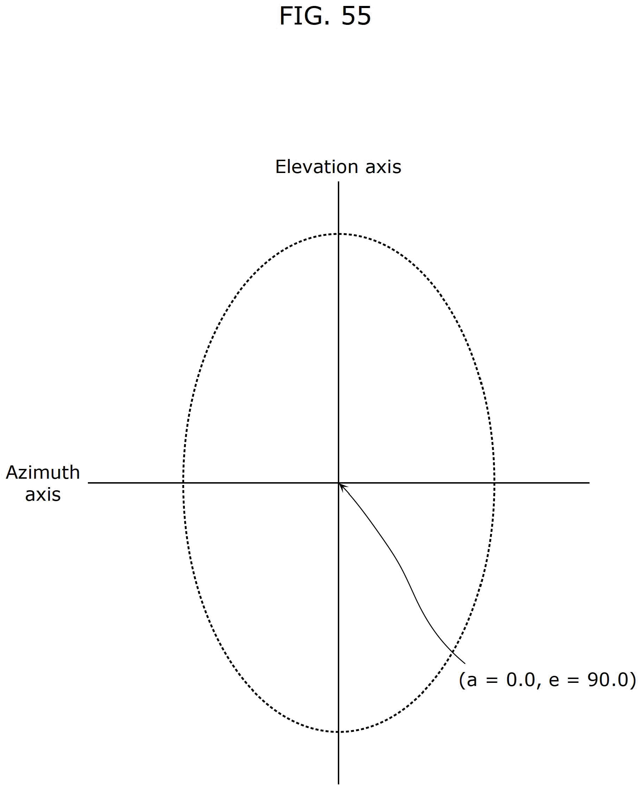

   FIG. 55 is a diagram illustrating another, fourth example of the merge region according to Embodiment 3.
[FIG. 56]

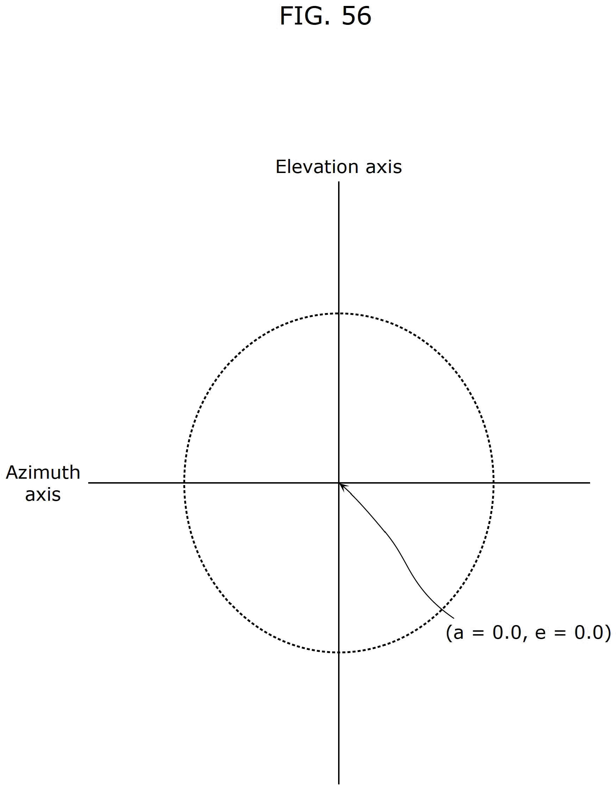

   FIG. 56 is a diagram illustrating another, fifth example of the merge region according to Embodiment 3.
[FIG. 57]

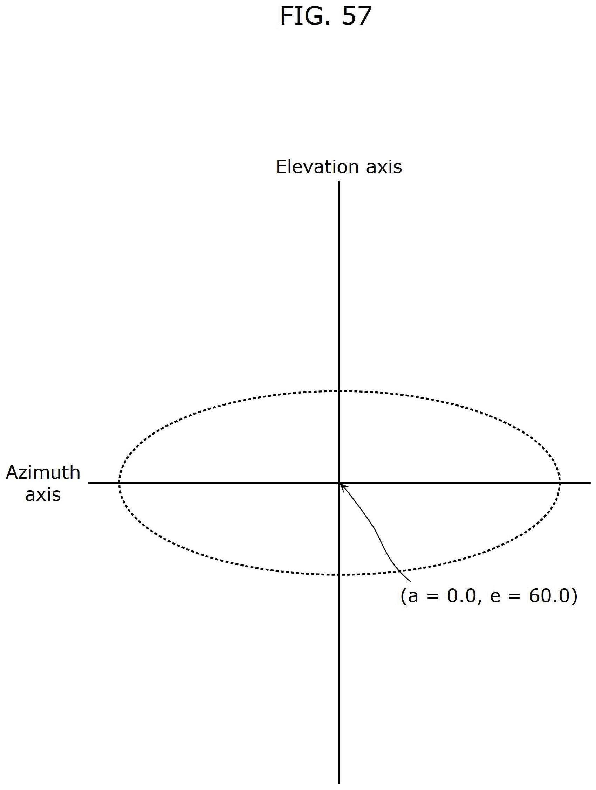

   FIG. 57 is a diagram illustrating another, sixth example of the merge region according to Embodiment 3.
[FIG. 58]

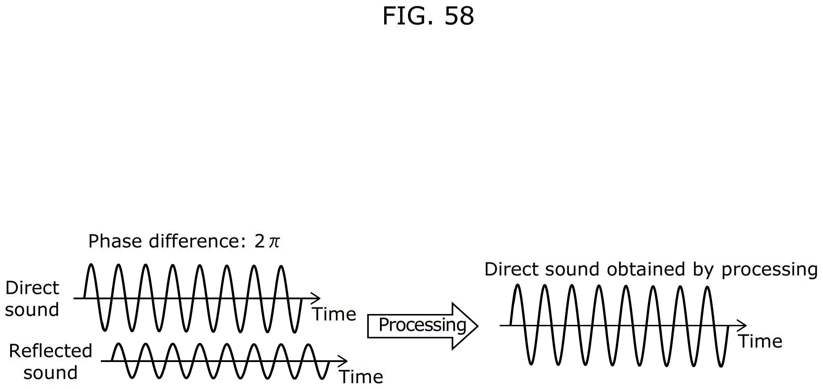

   FIG. 58 is a diagram illustrating an example for showing a phase difference between a direct sound and a reflected sound, according to Embodiment 4.
[FIG. 59]

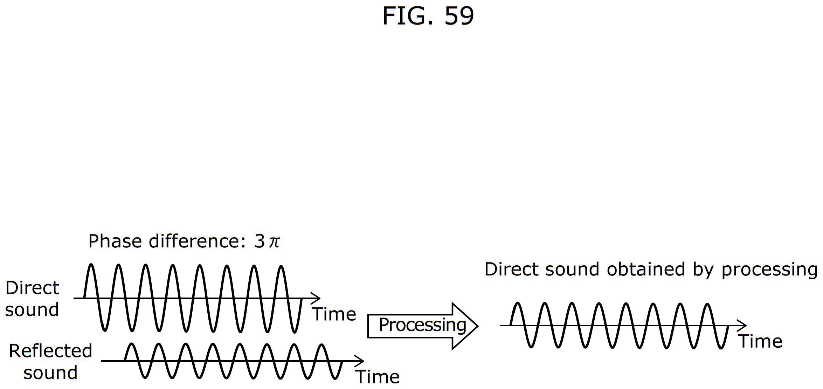

   FIG. 59 is a diagram illustrating another example for showing a phase difference between a direct sound and a reflected sound, according to Embodiment 4.
[FIG. 60]

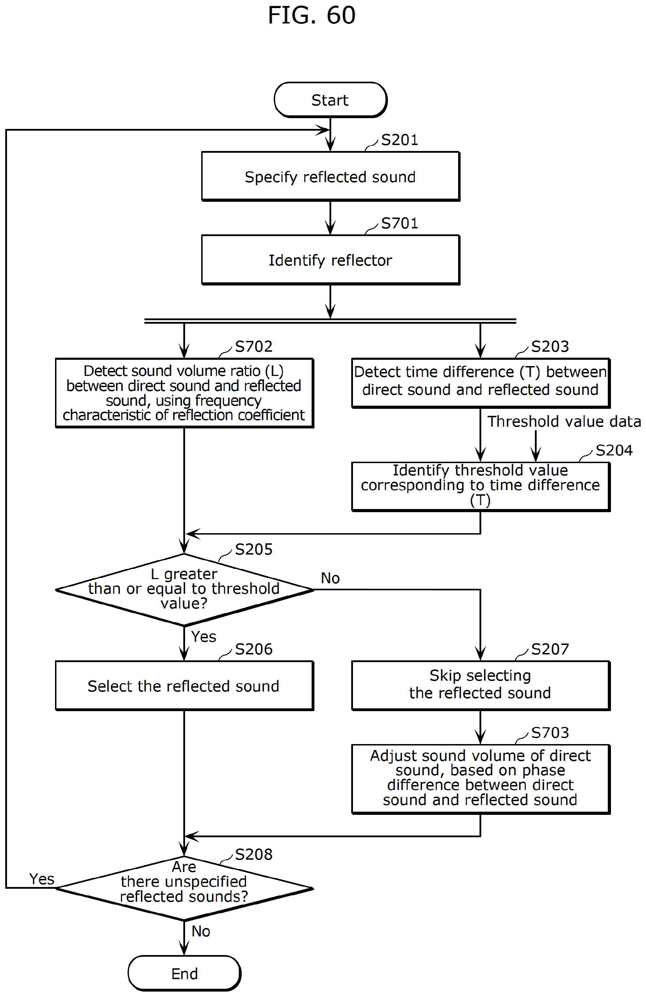

   FIG. 60 is a flowchart illustrating an operation example of processing performed by a selector in Operation Example 1 according to Embodiment 4.
[FIG. 61]

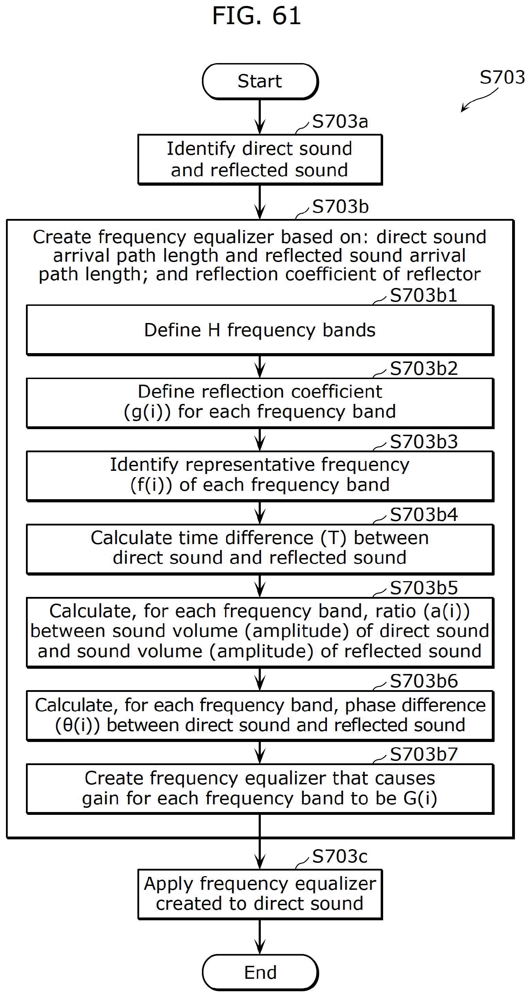

   FIG. 61 is a flowchart illustrating a first example of the details of the processing of step S703, according to Embodiment 4.
[FIG. 62]

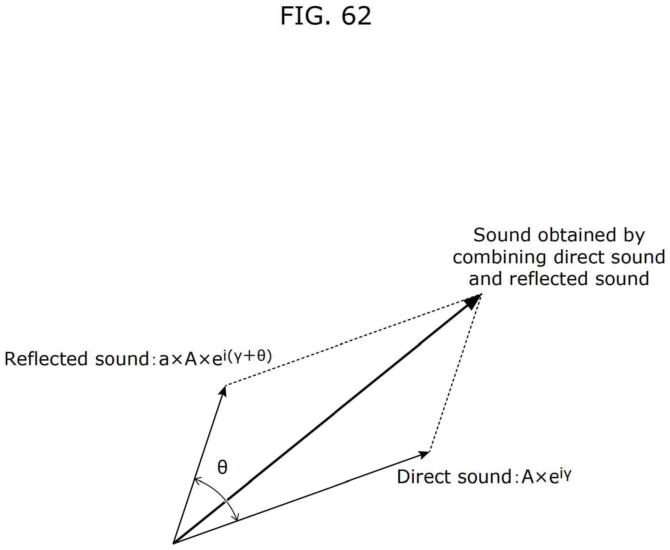

   FIG. 62 is a diagram showing a direct sound, a reflected sound, and a sound obtained by combining the direct sound and the reflected sound, according to Embodiment 4.
[FIG. 63]

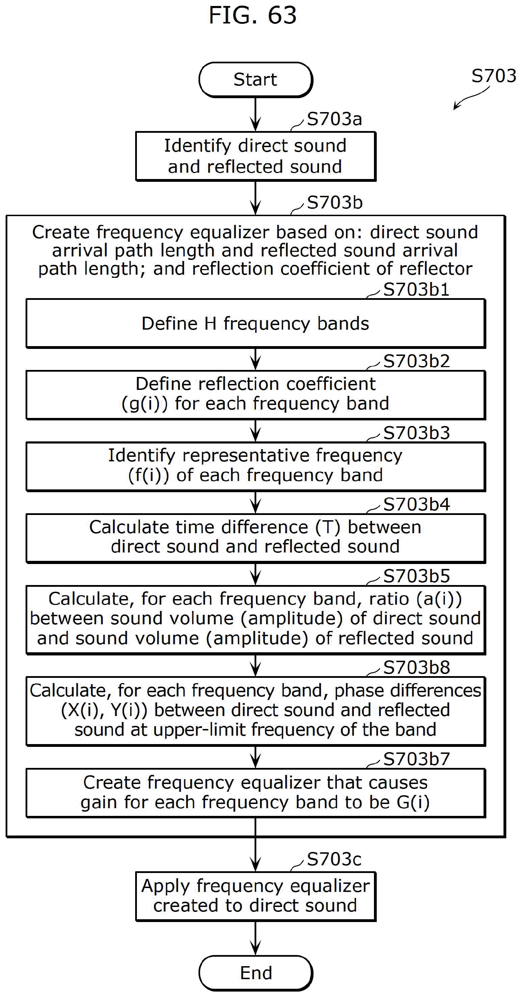

   FIG. 63 is a flowchart illustrating a third example of the details of the processing of step S703, according to Embodiment 4.
[FIG. 64]

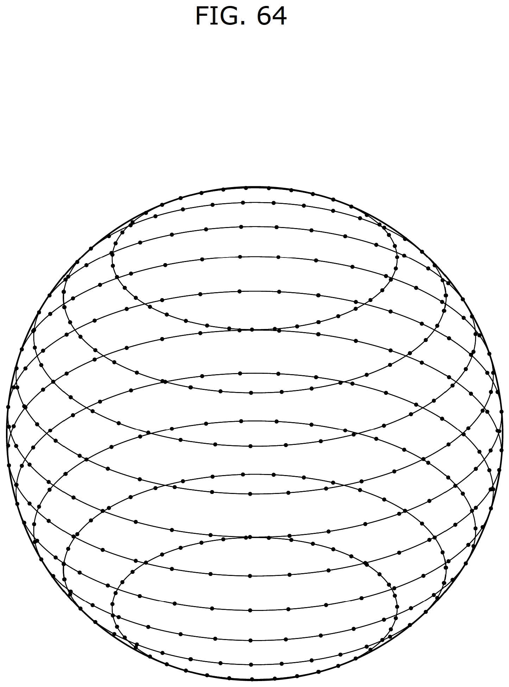

   FIG. 64 is a diagram illustrating a first example of the HRTFs in SOFA, according to another embodiment.
[FIG. 65]

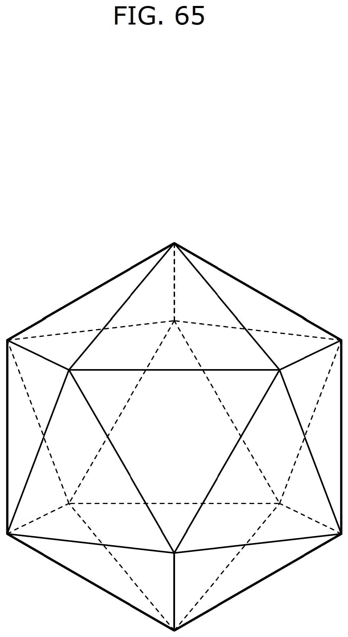

   FIG. 65 is a diagram illustrating a second example of the HRTFs in SOFA, according to another embodiment.
[FIG. 66]

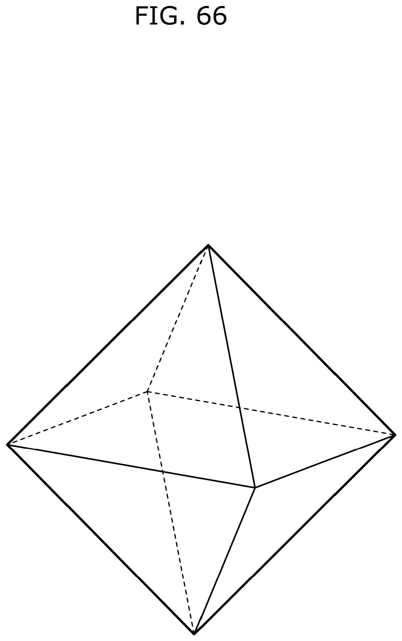

   FIG. 66 is a diagram illustrating a third example of the HRTFs in SOFA, according to another embodiment.

### [Description of Embodiments]

### (Underlying Knowledge Forming Basis of the Present Disclosure)

To date, investigations have been made into audio signal processing technologies that provide listeners with immersive audio by, in a virtual space or a real-world space, assigning acoustic effects that are generated in accordance with the environment of the space to sounds emitted from a virtual sound source.

PTL 1 discloses such an audio signal processing technique. More specifically, PTL 1 discloses a technique for detecting the importance of audio signals (voice signals) and not outputting audio signals for which the detected importance is low. By thus not outputting audio signals for which the importance is low, there are expectations for the audio signal processing technique to reduce the amount of computation and the computational load.

Incidentally, in a sound space (a virtual space or a real-world space), reflected sound is sometimes important.

FIG. 1 is a diagram illustrating one example of a direct sound and reflected sounds generated in a sound space. In acoustic processing in which characteristics of a virtual space are expressed by a sound, it is effective to reproduce not only direct sounds, but also reflected sounds in order to express the size of the space, the material of the walls, and the like, as well as to allow for accurately grasping the location of the sound source (the localization of the sound image).

For example, when a sound is heard in a rectangular parallelepiped room such as that in FIG. 1, six primary reflected sounds, corresponding to the six walls, are generated for one sound source. Reproducing these reflected sounds provides a clue for appropriate understanding of the space and the sound image. Furthermore, for each reflected sound, a secondary reflected sound is generated by a surface other than the reflection surface that generated that reflected sound. These reflected sounds are also effective sensory clues.

However, even when consideration is given no further than to secondary reflection, one direct sound and 36 (6 + 6 × 5) reflected sounds are generated for one sound source. Thus, 37 sound rays are generated, and processing these sound rays requires a significant amount of computation.

Furthermore, in applied products in recent years for which metaverses are imagined, such as virtual meetings, virtual shopping, virtual concerts, and the like, a plurality of sound sources are present out of necessity, whereby an even greater amount of computation is required.

Moreover, the listener hearing the sounds in a virtual space uses headphones or VR goggles. In order to provide three-dimensional sound to such a listener, binaural processing that assigns a sound pressure ratio and a phase difference between the two ears and reproduces the direction of arrival and distance sensation of the sounds is performed on each sound ray. Thus, if an attempt were made to reproduce every reflected sound that is generated, the amount of computation would become immense.

On the other hand, in light of convenience, a small storage battery is sometimes used as the battery for the VR goggles worn by the listener who experiences the virtual space. Lessening the computational load resulting from the above-described processing makes it possible to further extend the life of the storage battery. To this end, the number of sound rays, which are emitted on a scale of hundreds, is desirably reduced, within a scope at which grasping the space and the localization of the sounds is not harmed.

Furthermore, in a system that reproduces acoustics, a degree of freedom such as 6DoF (6 degrees of freedom) or the like may be allowed with respect to the position (in other words, the listening position, which is the position where the listener is present) and orientation of the listener. In this case, the positional relationship between the listener, the sound sources, and the objects that reflect sounds cannot be fixed until the time of reproduction (the time of rendering). For this reason, the reflected sounds as well cannot be fixed until the time of reproduction. Thus, it is difficult to determine the reflected sounds to be processed beforehand.

Therefore, during reproduction, selecting and outputting (reproducing) one or more reflected sounds, from a plurality of reflected sounds that are generated in a sound space, that are to be processed or are not to be processed is useful in reducing the amount of computation and the computational load.

It should be noted that controlling whether to select a sound corresponds to determining whether to select the sound, and more specifically corresponds to determining whether to select and output (reproduce) the sound. Furthermore, selecting a sound may be selecting the sound as a sound to be processed, or may be selecting the sound as a sound that is not to be processed.

Incidentally, in PTL 1, the importance of the audio signal, and more specifically the importance of the direct sound that the audio signal represents, is detected, but the importance of reflected sound is not considered. Therefore, when indirect sounds such as reflected sounds are generated, as illustrated in FIG. 1, the amount of computation and the computational load increase; in other words, it may be difficult to reduce the amount of computation and the computational load.

Therefore, there is a need for an audio signal processing method and the like that can reduce the amount of computation and the computational load in a sound space.

Accordingly, an audio signal processing method according to a first aspect of the present disclosure is audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; determining whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position; generating a merged audio signal by merging the first audio signal and the second audio signal, when the first audio signal and the second audio signal are determined to be merged; and outputting an output signal that is based on the merged audio signal generated.

Whether the first audio signal and the second audio signal are to be merged is thus determined, based on the indicator that is based on the first arrival direction of the first sound and the second arrival direction of the second sound. When it is determined that the first audio signal and the second audio signal are to be merged, the output signal that is based on the merged audio signal is output in the outputting. When it is determined that the first audio signal and the second audio signal are not to be merged, an output signal based on the first audio signal and an output signal based on the second audio signal are output in the outputting. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

An audio signal processing method according to a second aspect of the present disclosure is the audio signal processing method according to the first aspect, in which the indicator is an indicator including two axes orthogonal to each other.

This makes it possible to use a simplified indicator; that is, compared to a case of using a complex indicator, a large amount of computation and a heavy computational load are not required, thereby making it possible to realize an audio signal processing method that can reduce the amount of computation and the computational load.

An audio signal processing method according to a third aspect of the present disclosure is the audio signal processing method according to the first or second aspect, in which the first attribute information included in the first audio signal obtained includes: first position information indicating a position of the first sound; and first sound volume information indicating a sound volume of the first sound, the second attribute information included in the second audio signal obtained includes: second position information indicating a position of the second sound; and second sound volume information indicating a sound volume of the second sound, and in the generating, a merged sound arrival direction is determined based on: the first position information and the first sound volume information; and the second position information and the second sound volume information, the merged sound arrival direction being a direction from which a merged sound indicated by the merged audio signal arrives at the listening position.

This makes it possible, in the generating, to determine the merged sound arrival direction, based on the first position information and the first sound volume information, and the second position information and the second sound volume information.

An audio signal processing method according to a fourth aspect of the present disclosure is the audio signal processing method according to the third aspect, in which in the generating, when the sound volume of the first sound indicated by the first sound volume information is regarded as a weight corresponding to the position of the first sound indicated by the first position information, and the sound volume of the second sound indicated by the second sound volume information is regarded as a weight corresponding to the position of the second sound indicated by the second position information, a position of the merged sound is determined to be a position of a weighted centroid of the first sound and the second sound, and a direction from the position of the weighted centroid determined toward the listening position is determined as the merged sound arrival direction.

This makes it possible to determine the merged sound arrival direction based on the position of the weighted centroid of the first sound and the second sound, i.e., to easily determine the merged sound arrival direction. That is, since determining the merged sound arrival direction does not require a large amount of computation and a heavy computational load, it is possible to realize an audio signal processing method that can reduce the amount of computation and the computational load.

An audio signal processing method according to a fifth aspect of the present disclosure is an audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; generating a merged audio signal by merging the first audio signal and the second audio signal, when the first audio signal obtained and the second audio signal obtained are determined to be merged; and outputting an output signal that is based on the merged audio signal generated, wherein the first attribute information included in the first audio signal obtained includes: first position information indicating a position of the first sound; and first sound volume information indicating a sound volume of the first sound, the second attribute information included in the second audio signal obtained includes: second position information indicating a position of the second sound; and second sound volume information indicating a sound volume of the second sound, and in the generating, a merged sound arrival direction is determined based on: the first position information and the first sound volume information; and the second position information and the second sound volume information, the merged sound arrival direction being a direction from which a merged sound indicated by the merged audio signal arrives at a listening position that is a position at which a listener is present.

Thus, when it is determined that the first audio signal and the second audio signal are to be merged, the output signal that is based on the merged audio signal is output in the outputting. When it is determined that the first audio signal and the second audio signal are not to be merged, an output signal based on the first audio signal and an output signal based on the second audio signal are output in the outputting. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

An audio signal processing method according to a sixth aspect of the present disclosure is the audio signal processing method according to any one of the second to fifth aspects, in which when the first audio signal and the second audio signal are determined to be merged, in the outputting, the output signal generated by applying, to the merged audio signal generated, a head-related transfer function that is based on the merged sound arrival direction determined is output.

This makes it possible to realize an audio signal processing method that allows the listener to hear a merged sound that has greater presence.

An audio signal processing method according to a seventh aspect of the present disclosure is the audio signal processing method according to any one of the first to fourth aspects, in which when the first audio signal and the second audio signal are determined not to be merged, in the outputting, (i) the output signal generated by applying, to the first audio signal, a head-related transfer function that is based on the first arrival direction, and (ii) the output signal generated by applying, to the second audio signal, a head-related transfer function that is based on the second arrival direction are output.

This makes it possible to realize an audio signal processing method that allows the listener to hear a first sound and a second sound that have greater presence.

An audio signal processing method according to an eighth aspect of the present disclosure is an audio signal processing method that is executed by an audio signal processing device and includes: obtaining M audio signals each of which is an audio signal that indicates a predetermined sound and includes attribute information identifying an attribute of the audio signal, M being an integer greater than or equal to 2; determining whether to merge N audio signals among the M audio signals obtained, based on an arrival direction from which each of M predetermined sounds arrives at a listening position that is a position at which a listener is present, N being an integer greater than or equal to 1 and less than or equal to M, the M predetermined sounds each being the predetermined sound; generating a merged audio signal by merging the N audio signals, when the N audio signals are determined to be merged; and outputting an output signal that is based on the merged audio signal generated.

Whether the N audio signals are to be merged is thus determined, based on the arrival directions of the predetermined sounds. When it is determined that the N audio signals are to be merged, the output signal that is based on the merged audio signal is output in the outputting. When it is determined that the N audio signals are not to be merged, output signals based on each of the N audio signals are output in the outputting. Compared to a case in which output signals based on each of the N audio signals are output, in the case in which the output signal that is based on the merged audio signal is output, the number of output signals to be output decreases, whereby the amount of computation and the computational load are reduced. In other words, it is possible to realize an audio signal processing method that can reduce the amount of computation and the computational load.

An audio signal processing method according to a ninth aspect of the present disclosure is the audio signal processing method according to the eighth aspect, in which the attribute information included in each of the M audio signals obtained includes: predetermined sound position information indicating a position of the predetermined sound; and predetermined-sound sound volume information indicating a sound volume of the predetermined sound, and in the generating, a merged sound arrival direction is determined, based on N items of the predetermined sound position information and N items of the predetermined-sound sound volume information, the merged sound arrival direction being a direction from which a merged sound indicated by the merged audio signal arrives at the listening position.

The merged sound arrival direction is thus determined in the generating, based on the predetermined sound position information and the predetermined-sound sound volume information.

An audio signal processing method according to a tenth aspect of the present disclosure is the audio signal processing method according to the ninth aspect, in which in the generating, when, for each predetermined sound, the sound volume of the predetermined sound indicated by the predetermined-sound sound volume information is regarded as a weight corresponding to the position of the predetermined sound indicated by the predetermined sound position information, a position of the merged sound is determined to be a position of a weighted centroid of N predetermined sounds each of which is the predetermined sound, and a direction, from the position of the weighted centroid determined, toward the listening position is determined as the merged sound arrival direction.

This makes it possible to determine the merged sound arrival direction based on the position of the weighted centroid of the N predetermined sounds, i.e., to easily determine the merged sound arrival direction. That is, since determining the merged sound arrival direction does not require a large amount of computation and a heavy computational load, it is possible to realize an audio signal processing method that can reduce the amount of computation and the computational load.

An audio signal processing method according to an eleventh aspect of the present disclosure is an audio signal processing method that is executed by an audio signal processing device and includes: obtaining a first audio signal and a second audio signal, the first audio signal indicating a first sound and including first attribute information identifying an attribute of the first audio signal, the second audio signal indicating a second sound and including second attribute information identifying an attribute of the second audio signal; determining whether to merge the first audio signal obtained and the second audio signal obtained, based on a first arrival direction and a second arrival direction, the first arrival direction being a direction from which the first sound arrives at a listening position that is a position at which a listener is present, the second arrival direction being a direction from which the second sound arrives at the listening position; generating a merged audio signal by merging the first audio signal and the second audio signal, when the first audio signal and the second audio signal are determined to be merged; and outputting an output signal that is based on the merged audio signal generated, wherein in the determining, one item of arrival direction information corresponding to the first arrival direction and one item of arrival direction information corresponding to the second arrival direction are determined, from among a plurality of items of arrival direction information each indicating: an arrival direction from which a sound arrives at the listening position; and a head-related transfer function that is based on the arrival direction, in the generating, the merged audio signal is generated when the one item of arrival direction information corresponding to the first arrival direction and determined in the determining is same as the one item of arrival direction information corresponding to the second arrival direction and determined in the determining, and in the outputting: the output signal generated by applying, to the merged audio signal generated, the head-related transfer function indicated by the one item of arrival direction information corresponding to the first arrival direction is output; and when the one item of arrival direction information corresponding to the first arrival direction and determined in the determining is different from the one item of arrival direction information corresponding to the second arrival direction and determined in the determining, both of (i) an output signal generated by applying, to the first audio signal, the head-related transfer function indicated by the one item of arrival direction information corresponding to the first arrival direction and (ii) an output signal generated by applying, to the second audio signal, the head-related transfer function indicated by the one item of arrival direction information corresponding to the second arrival direction are output.

Whether to merge the first audio signal and the second audio signal is thus determined, based on the arrival direction information corresponding to the first arrival direction of the first sound and the arrival direction information corresponding to the second arrival direction of the second sound. When it is determined that the first audio signal and the second audio signal are to be merged, the output signal that is based on the merged audio signal is output in the outputting. When it is determined that the first audio signal and the second audio signal are not to be merged, an output signal based on the first audio signal and an output signal based on the second audio signal are output in the outputting. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

A computer program according to a twelfth aspect of the present disclosure is a computer program for causing a computer to execute the audio signal processing method according to any one of the first to eleventh aspects.

This makes it possible for a computer to execute the above-described audio signal processing method, according to the computer program.

An audio signal processing device according to a thirteenth aspect of the present disclosure includes: an obtainer that obtains a first audio signal and a second audio signal, the first audio signal indicating a first sound and including first attribute information identifying an attribute of the first audio signal, the second audio signal indicating a second sound and including second attribute information identifying an attribute of the second audio signal; a determiner that determines whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position; a merger that generates a merged audio signal by merging the first audio signal and the second audio signal, when the first audio signal and the second audio signal are determined to be merged; and a reproducer that outputs an output signal that is based on the merged audio signal generated.

Whether the first audio signal and the second audio signal are to be merged is thus determined, based on the indicator that is based on the first arrival direction of the first sound and the second arrival direction of the second sound. When it is determined that the first audio signal and the second audio signal are to be merged, the reproducer outputs the output signal that is based on the merged audio signal. When it is determined that the first audio signal and the second audio signal are not to be merged, the reproducer outputs an output signal based on the first audio signal and an output signal based on the second audio signal. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

### [Embodiment 1]

### (Example of Three-Dimensional Sound Reproduction System)

FIG. 2 is a diagram illustrating an example of three-dimensional sound reproduction system 1000. Specifically, FIG. 2 illustrates three-dimensional sound reproduction system 1000, which is an example of a system to which acoustic processing or decoding processing of the present disclosure can be applied. Three-dimensional sound is also expressed as immersive audio. Three-dimensional sound reproduction system 1000 includes audio signal processing device 1001 and audio presentation device 1002.

Audio signal processing device 1001, which is also expressed as an acoustic processing device, applies acoustic processing to an audio signal emitted from a virtual sound source and generates an acoustic-processed audio signal to be presented to the listener. The audio signal is not limited to voices, and is acceptable as long as it is an audible sound. Acoustic processing is, for example, signal processing applied to an audio signal in order to reproduce one or more effects that a sound receives between when the sound is emitted from a sound source and when the sound arrives at the listener.

Audio signal processing device 1001 performs acoustic processing based on spatial information that describes the main factors for bringing about the above-described effects. Spatial information encompasses, for example: information that indicates the location of a sound source, a listener, and objects in the vicinity; information that indicates the shape of a space; parameters regarding sound propagation; and the like. Audio signal processing device 1001 is, for example, a PC (personal computer), a smartphone, a tablet, a game console, or the like.

An acoustic-processed signal is presented from audio presentation device 1002 to the listener. Audio presentation device 1002 is connected to audio signal processing device 1001 via wireless or wired communication. The acoustic-processed audio signal generated by audio signal processing device 1001 is transmitted to audio presentation device 1002 via wireless or wired communication.

When audio presentation device 1002 includes a plurality of devices such as, for example, a device for the right ear and a device for the left ear, or the like, the plurality of devices present sound in synchronization by means of communication between the plurality of devices or communication between each of the plurality of devices and audio signal processing device 1001. Audio presentation device 1002 is, for example, headphones, earphones, or a head-mounted display worn on the head of the listener, surround speakers including a plurality of fixed speakers, or the like.

Note that three-dimensional sound reproduction system 1000 may be used in combination with an image presentation device or a stereoscopic image presentation device that visually provides an ER experience that includes AR/VR. For example, a space handled by spatial information is a virtual space in which the positions of sound sources, the listener, and objects in the space are virtual positions of virtual sound sources, a virtual listener, and virtual objects in a virtual space. The space can also be expressed as a sound space. Furthermore, the spatial information can also be expressed as sound space information.

Furthermore, FIG. 2 illustrates a system configuration example in which audio signal processing device 1001 and audio presentation device 1002 are separate devices, but three-dimensional sound reproduction system 1000 to which the acoustic processing method (the audio signal processing method) or the decoding method of the present disclosure can be applied is not limited to the configuration in FIG. 2. For example, audio signal processing device 1001 may be included in audio presentation device 1002, and audio presentation device 1002 may perform both acoustic processing and sound presentation.

Furthermore, audio signal processing device 1001 and audio presentation device 1002 may, in a shared manner, perform the acoustic processing described in the present disclosure. Furthermore, a server connected to audio signal processing device 1001 or audio presentation device 1002 over a network may perform a part or all of the acoustic processing described in the present disclosure.

Furthermore, audio signal processing device 1001 may perform the acoustic processing by decoding a bitstream that has been generated by encoding at least a part of data of the audio signal and the spatial information used in the acoustic processing. Thus, audio signal processing device 1001 may be expressed as a decoding device.

### (Example of Encoding Device)

FIG. 3A is a block diagram illustrating a configuration example of encoding device 1100. Specifically, FIG. 3A illustrates the configuration of encoding device 1100, which is an example of the encoding device of the present disclosure.

Input data 1101 is data to be encoded, and includes spatial information and/or an audio signal to be inputted into encoder 1102. Details regarding the spatial information will be described later.

Encoder 1102 encodes input data 1101 to generate encoded data 1103. Encoded data 1103 is, for example, a bitstream generated by means of encoding processing.

Memory 1104 stores encoded data 1103. Memory 1104 may be, for example, a hard disk or an SSD (solid-state drive), or may be another type of memory.

Note that in the above description, a bitstream generated by means of encoding processing was given as an example of encoded data 1103 stored in memory 1104, but encoded data 1103 may be data other than a bitstream. For example, encoding device 1100 may store, in memory 1104, converted data generated by converting the bitstream into a predetermined data format. The converted data may be, for example, a file or multiplexed stream that corresponds to one or more bitstreams.

Here, the file is a file having a file format of, for example, ISO base media file format (ISOBMFF) or the like. Furthermore, encoded data 1103 may be in the form of a plurality of packets generated by splitting the above-described bitstream or file.

For example, the bitstream generated by encoder 1102 may be converted to data that is different from the bitstream. In this case, encoding device 1100 may include a converter, not illustrated, and the converter may perform conversion processing, or conversion processing may be performed by a central processing unit (CPU) that is an example of a processor, described later.

### (Example of Decoding Device)

FIG. 3B is a block diagram illustrating a configuration example of decoding device 1110. Specifically, FIG. 3B illustrates the configuration of decoding device 1110, which is an example of the decoding device of the present disclosure.

Memory 1114 stores, for example, the same data as encoded data 1103 generated by encoding device 1100. The stored data is read from memory 1114 and inputted into decoder 1112 as input data 1113. Input data 1113 is, for example, a bitstream that is to be decoded. Memory 1114 may be, for example, a hard disk or an SSD, or may be another type of memory.

Note that decoding device 1110 may not directly input, to decoder 1112, data read from memory 1114 as input data 1113, and may instead convert the data read and then input the converted data to decoder 1112 as input data 1113. The data before conversion may be, for example, multiplexed data that includes one or more bitstreams. Here, the multiplexed data may be, for example, a file having a file format such as ISOBMFF or the like.

Furthermore, the data before conversion may be a plurality of packets generated by splitting the above-described bitstream or file. Data that is different from the bitstream may be read from memory 1114 and then converted into a bitstream. In this case, decoding device 1110 may include a converter, not illustrated, and the converter may perform conversion processing, or conversion processing may be performed by a CPU that is an example of a processor, described later.

Decoder 1112 decodes input data 1113 to generate audio signal 1111 that indicates audio to be presented to the listener.

### (Other Example of Encoding Device)

FIG. 3C is a block diagram illustrating a configuration example of another encoding device. Specifically, FIG. 3C illustrates the configuration of encoding device 1120, which is another example of the encoding device of the present disclosure. In FIG. 3C, constituent elements that are the same as the constituent elements in FIG. 3A have been given the same reference signs as in FIG. 3A, and description of these constituent elements is omitted.

Encoding device 1100 stores encoded data 1103 in memory 1104. On the other hand, encoding device 1120 is different from encoding device 1100 in the respect that encoding device 1120 includes transmitter 1121 that transmits encoded data 1103 externally.

Transmitter 1121 transmits, to a different device or server, transmission signal 1122 that is generated based on data converted from encoded data 1103 or encoded data 1103 to a different file format. The data used in generating transmission signal 1122 is, for example, the bitstream, multiplexed data, file, or packet described in relation to encoding device 1100.

### (Other Example of Decoding Device)

FIG. 3D is a block diagram illustrating another configuration example of a decoding device. Specifically, FIG. 3D illustrates the configuration of decoding device 1130, which is another example of the decoding device of the present disclosure. In FIG. 3D, constituent elements that are the same as the constituent elements in FIG. 3B have been given the same reference signs as in FIG. 3B, and description of these constituent elements is omitted.

Decoding device 1110 reads input data 1113 from memory 1114. On the other hand, decoding device 1130 is different from decoding device 1110 in the respect that decoding device 1130 includes receiver 1131, which receives input data 1113 from an external source.

Receiver 1131 receives reception signal 1132 to obtain reception data, and outputs input data 1113 to be inputted into decoder 1112. The reception data may be the same as input data 1113 inputted into decoder 1112, or may be data in a data format that is different from that of input data 1113.

When the data format of the reception data is different from the data format of input data 1113, receiver 1131 may convert the reception data into input data 1113. Alternatively, a converter or a CPU, each not illustrated, of decoding device 1130 may convert the reception data into input data 1113. The reception data is, for example, the bitstream, multiplexed data, file, or packet described in relation to encoding device 1120.

### (Example of Decoder)

FIG. 4A is a block diagram illustrating a configuration example of decoder 1200. Specifically, FIG. 4A illustrates the configuration of decoder 1200, which is an example of decoder 1112 in FIG. 3B and FIG. 3D.

Input data 1113 is an encoded bitstream, and includes encoded audio data that is an audio signal that has been encoded, and metadata used in acoustic processing.

Spatial information manager 1201 obtains the metadata included in input data 1113 and analyzes the metadata. The metadata includes information that describes the main factors that act on the sounds arranged in the sound space. Spatial information manager 1201 manages the spatial information that is obtained by analyzing the metadata and is used in the acoustic processing, and provides the spatial information to renderer 1203.

Note that in the present disclosure, the information used in the acoustic processing is expressed as spatial information, but another expression may be used. For example, the information used in the acoustic processing may be expressed as sound space information, or may be expressed as scene information. Furthermore, when the information used in the acoustic processing changes over time, the spatial information inputted into renderer 1203 may be information expressed as a spatial state, a sound space state, a scene state, or the like.

Furthermore, the spatial information may be managed for each sound space or for each scene. For example, when each of a plurality of mutually differing rooms is expressed as a virtual space, the plurality of rooms may be managed as a plurality of scenes that mutually differ. Furthermore, spatial information may be managed such that even the same room is managed as a different scene in accordance with the expressed state.

Thus, a plurality of items of spatial information may be managed with respect to a plurality of sound spaces or a plurality of scenes. In management of a plurality of items of spatial information, an identifier that identifies each item of the plurality of items of spatial information may be assigned to the spatial information.

The spatial information data may be included in a bitstream that is an example of input data 1113. Alternatively, the bitstream may include an identifier of the spatial information, and the spatial information data may be obtained from an information source other than the bitstream. Specifically, when the bitstream includes only the identifier of the spatial information, in the rendering, the spatial information data stored in the memory inside the device or in an external server may be obtained as input data 1113, using the identifier of the spatial information.

Note that the information managed by spatial information manager 1201 is not limited to information included in the bitstream. For example, input data 1113 may include, as data not included in the bitstream, data that indicates the characteristics and structure of a space obtained from a VR or AR software application or server.

Furthermore, input data 1113 may include data that indicates the characteristics, position, and/or the like of the listener or an object. Moreover, input data 1113 may include information on the position of the listener, obtained using a sensor included in a terminal including a decoding device (1110, 1130), or may include information that indicates the position of the terminal, estimated based on information obtained using the sensor.

In other words, spatial information manager 1201 may communicate with an external system or server to obtain spatial information and the position of the listener (in other words, the listening position). Furthermore, spatial information manager 1201 may obtain clock synchronization information from an external system and perform processing to perform synchronization with a clock in renderer 1203.

Note that the space in the above description may be a virtually formed space, i.e., a VR space, or may be a real-world space or a virtual space that corresponds to a real-world space, i.e., an AR space or an MR space. Furthermore, the virtual space may be expressed as a sound field or a sound space. Moreover, the information indicating position in the above description may be information on coordinates or the like that indicate a position in a space, may be information that indicates a relative position with respect to a predetermined reference position, or may be information that indicates movement or acceleration of a position in a space.

Audio data decoder 1202 decodes encoded audio data included in input data 1113 to obtain an audio signal.

The encoded audio data obtained by three-dimensional sound reproduction system 1000 is, for example, a bitstream encoded in a predetermined format such as MPEG-H 3D Audio (ISO/IEC 23008-3). Note that MPEG-H 3D Audio is merely an example of an encoding method that can be used when generating the encoded audio data included in the bitstream. The encoded audio data may be a bitstream encoded by another encoding method.

For example, the encoding method may be a lossy codec such as MPEG-1 Audio Layer III (MP3), Advanced Audio Coding (AAC), Windows Media Audio (WMA), Audio Codec 3 (AC3), Vorbis, or the like. Alternatively, the encoding method may be a lossless codec such as Apple Lossless Audio Codec (ALAC), Free Lossless Audio Codec (FLAC), or the like.

Alternatively, any encoding method other than the above-described may be used. For example, PCM data may be a type of the encoded audio data. In this case, when, for example, the quantization bit rate of the PCM data is N, the decoding processing may be processing in which the N-bit binary number is converted into a numerical format (for example, floating-point format) that can be processed by renderer 1203.

Renderer 1203 obtains the audio signal and the spatial information, applies acoustic processing to the audio signal using the spatial information, and outputs an acoustic-processed audio signal (audio signal 1111).

Before starting the rendering, spatial information manager 1201 reads the metadata of the input signal, detects rendering items such as objects and sounds specified by the spatial information, and transmits the rendering items to renderer 1203. After the start of rendering, spatial information manager 1201 grasps the change over time of the spatial information and the position of the listener, and updates and manages the spatial information. Then, the updated spatial information is transmitted to renderer 1203.

Renderer 1203 generates and outputs an acoustic processing-added audio signal based on the audio signal included in input data 1113 and the spatial information received from spatial information manager 1201.

Update processing of the spatial information and output processing of the acoustic processing-added audio signal may be performed in the same thread. Furthermore, processing may be allocated to spatial information manager 1201 and renderer 1203 in mutually independent threads. When spatial information manager 1201 and renderer 1203 perform the update processing of the spatial information and the output processing of the acoustic processing-added audio signal in different threads, the thread activation frequency may be set separately, or processing may be performed in parallel.

When spatial information manager 1201 and renderer 1203 perform processing in independent threads that are different, renderer 1203 can be preferentially allotted computation resources. This makes it possible to safely execute sound output processing for which even a slight delay is unallowable, i.e., for which a popping noise would be generated with a delay of even one sample (0.02 msec).

At this time, allotment of computation resources to spatial information manager 1201 is limited. However, since compared to the output processing of the audio signal, updating of the spatial information is processing that is infrequent (for example, processing such as updating the orientation of a listener's face), it is not necessary for the output processing of the audio signal to be performed instantaneously. Thus, even when the allotment of computation resources is limited, the acoustic quality is not greatly impacted.

The updating of the spatial information may be periodically performed with each elapse of a preset time period or term, or may be performed when a preset condition is satisfied. Furthermore, the updating of the spatial information may be performed manually by the listener or a sound space manager, or may be performed by being triggered by a change to an external system.

For example, the spatial information may be updated when a controller is being operated by the listener and the position of the listener's avatar is instantaneously warped or time is instantaneously progressed or reversed. Alternatively, the spatial information may be updated when an operation to suddenly change the field environment is performed by the manager of the virtual space. In these cases, the thread for updating the spatial information managed by spatial information manager 1201 may be activated as one-time interrupt processing in addition to the periodic activation.

The role of the information update thread that performs update processing of the spatial information is, for example: processing to update, based on the position or orientation of the VR goggles worn by the listener, the position or orientation of the listener's avatar positioned in the virtual space; updating of the positions of objects that have moved within the virtual space; and the like. This is handled within a processing thread that operates at a relatively low frequency of around several tens of Hz. Processing that reflects the characteristics of direct sound may also be performed in such a low-frequency processing thread. This is because the characteristics of a direct sound vary less frequently than audio processing frames for audio output occur. Rather, by doing so, the computational load of such processing can be made relatively low, and the risk of pulsive noise can be avoided, since updating information at an unduly high frequency would generate the risk of pulsive noise occurring.

FIG. 4B is a block diagram illustrating another configuration example of a decoder. Specifically, FIG. 4B illustrates the configuration of decoder 1210, which is another example of decoder 1112 in FIG. 3B and FIG. 3D.

FIG. 4B is different from FIG. 4A in the respect that input data 1113 includes not encoded audio data, but an unencoded audio signal. Input data 1113 includes an audio signal and a bitstream including metadata.

Spatial information manager 1211 is the same as spatial information manager 1201 in FIG. 4A; therefore, description thereof has been omitted.

Renderer 1213 is the same as renderer 1203 in FIG. 4A; therefore, description thereof has been omitted.

Note that decoders 1112, 1200, and 1210 may be expressed as the acoustic processor that performs the acoustic processing. Furthermore, decoding devices 1110 and 1130 may be audio signal processing device 1001, or may be expressed as the acoustic processing device.

### (Physical Configuration of Audio Signal Processing Device)

FIG. 5 is a diagram illustrating an example of a physical configuration of audio signal processing device 1001. Note that audio signal processing device 1001 in FIG. 5 may be decoding device 1110 in FIG. 3B or decoding device 1130 in FIG. 3D. A plurality of the constituent elements illustrated in FIG. 3B or FIG. 3D may be implemented by a plurality of the constituent elements illustrated in FIG. 5. Furthermore, a part of the configuration described here may be included in audio presentation device 1002.

Audio signal processing device 1001 in FIG. 5 includes processor 1402, memory 1404, communication interface (I/F) 1403, sensor 1405, and loudspeaker 1401.

Processor 1402 is, for example, a CPU, a digital signal processor (DSP), or a graphics processing unit (GPU). The acoustic processing or the decoding processing of the present disclosure may be performed by the CPU, the DSP, or the GPU executing a program stored in memory 1404. Furthermore, processor 1402 is, for example, a circuit that performs information processing. Processor 1402 may be a dedicated circuit that performs signal processing on audio signals, including the acoustic processing of the present disclosure.

Memory 1404 includes, for example, random access memory (RAM) or read-only memory (ROM). Memory 1404 may include, for example, magnetic storage media, exemplified by a hard disk, or semiconductor memory, exemplified by an SSD. Furthermore, memory 1404 may be an internal memory incorporated into the CPU or GPU. Moreover, spatial information managed by spatial information manager 1201 and 1211 and/or the like may be stored in memory 1404. Furthermore, threshold value data, described later, may be stored.

Communication I/F 1403 is, for example, a communication module that supports a communication method such as Bluetooth (registered trademark) or WiGig (registered trademark). Audio signal processing device 1001 communicates with other communication devices via communication I/F 1403, and obtains a bitstream to be decoded. The obtained bitstream is, for example, stored in memory 1404.

Communication I/F 1403 includes, for example, a signal processing circuit that supports the communication method, and an antenna. The communication method is not limited to Bluetooth (registered trademark) or WiGig (registered trademark), and may be Long Term Evolution (LTE), New Radio (NR), Wi-Fi (registered trademark), or the like.

The communication method is not limited to the wireless communication methods described above, and may be a wired communication method such as Ethernet (registered trademark), Universal Serial Bus (USB), High-Definition Multimedia Interface (HDMI) (registered trademark), or the like.

Sensor 1405 performs sensing to estimate the position or orientation of the listener. Specifically, sensor 1405 estimates the position and/or orientation of the listener based on one or more detection results of one or more of the position, orientation, movement, velocity, angular velocity, acceleration, or the like of a part or all of the listener's body, and generates position/orientation information indicating the position and/or orientation of the listener.

Note that a device outside of audio signal processing device 1001 may include sensor 1405. The part of the body may be the listener's head or the like. The position/orientation information may be information indicating the position and/or orientation of the listener in real-world space, or may be information indicating the displacement of the position and/or orientation of the listener with respect to the position and/or orientation of the listener at a predetermined time point. Furthermore, the position/orientation information may be information indicating a position and/or orientation relative to three-dimensional sound reproduction system 1000 or an external device including sensor 1405.

Sensor 1405 may be, for example, an imaging device such as a camera or a distance measuring device such as a laser imaging detection and ranging (LiDAR) distance measuring device. Sensor 1405 may capture an image of the movement of the listener's head and detect the movement of the listener's head by processing the captured image. Furthermore, a device that performs position estimation using radio waves in any given frequency band such as millimeter waves may be used as sensor 1405.

Furthermore, audio signal processing device 1001 may obtain position information via communication I/F 1403 from an external device including sensor 1405. In this case, audio signal processing device 1001 need not include sensor 1405. Here, the external device refers to, for example, audio presentation device 1002 described in FIG. 2, or a stereoscopic image reproduction device worn on the listener's head. In this case, sensor 1405 is configured as a combination of various sensors, such as a gyro sensor and an acceleration sensor, for example.

As the speed of the movement of the listener's head, sensor 1405 may detect, for example, the angular speed of rotation about at least one of three mutually orthogonal axes in the sound space as the axis of rotation or the acceleration of displacement in at least one of the three axes as the direction of displacement.

As the amount of the movement of the listener's head, sensor 1405 may detect, for example, the amount of rotation about at least one of three mutually orthogonal axes in the sound space as the axis of rotation or the amount of displacement in at least one of the three axes as the direction of displacement. Specifically, sensor 1405 detects 6DoF positions (x, y, z) and angles (yaw, pitch, roll) as the position of the listener. Sensor 1405 is configured as a combination of various sensors used for detecting movement, such as a gyro sensor and an acceleration sensor.

Note that sensor 1405 may implemented by, e.g., a camera or a Global Positioning System (GPS) receiver for detecting the position of the listener. Position information obtained by performing self-position estimation, by using LiDAR or the like as sensor 1405, may be used. For example, when three-dimensional sound reproduction system 1000 is implemented by a smartphone, sensor 1405 is included in the smartphone.

Furthermore, sensor 1405 may include a temperature sensor such as a thermocouple that detects the temperature of audio signal processing device 1001. Moreover, sensor 1405 may include, for example, a sensor that detects the remaining level of a battery included in audio signal processing device 1001 or a battery connected to audio signal processing device 1001.

Loudspeaker 1401 includes, for example, a diaphragm, a driving mechanism such as a magnet or a voice coil, and an amplifier, and presents the acoustic-processed audio signal as sound to the listener. Loudspeaker 1401 operates the driving mechanism according to the audio signal (more specifically, a waveform signal indicating the waveform of the sound) amplified via the amplifier, and vibrates the diaphragm by means of the driving mechanism. In this way, the diaphragm vibrating according to the audio signal generates sound waves, which propagate through the air and are transmitted to the listener's ears, allowing the listener to perceive the sound.

Note that although here, an example in which audio signal processing device 1001 includes loudspeaker 1401 and presents the acoustic-processed audio signal via loudspeaker 1401 was given, the means for providing the audio signal is not limited to this configuration.

For example, the acoustic-processed audio signal may be outputted to external audio presentation device 1002 connected via a communication module. The communication performed by the communication module may be wired or wireless. As another example, audio signal processing device 1001 may include a terminal that outputs an analog audio signal, and may present the audio signal from earphones or the like by connecting the earphone cable to the terminal.

In this case, audio presentation device 1002 may be headphones, earphones, a head-mounted display, neck speakers, wearable speakers, or the like, each worn on the listener's head or a part of the listener's body. Alternatively, audio presentation device 1002 may be surround speakers configured with a plurality of fixed speakers, or the like. Audio presentation device 1002 may reproduce the audio signal.

### (Physical Configuration of Encoding Device)

FIG. 6 is a diagram illustrating an example of a physical configuration of encoding device 1500. Encoding device 1500 in FIG. 6 may be encoding device 1100 in FIG. 3A or encoding device 1120 in FIG. 3C, or a plurality of the constituent elements illustrated in FIG. 3A or FIG. 3C may be implemented by a plurality of the constituent elements illustrated in FIG. 6.

Encoding device 1500 in FIG. 6 includes processor 1501, memory 1503, and communication I/F 1502.

Processor 1501 is, for example, a CPU, a DSP, or a GPU. The encoding processing of the present disclosure may be performed by the CPU, the DSP, or the GPU executing a program stored in memory 1503. Furthermore, processor 1501 is, for example, a circuit that performs information processing. Processor 1501 may be a dedicated circuit that performs signal processing on audio signals, including the encoding processing of the present disclosure.

Memory 1503 includes, for example, RAM or ROM. Memory 1503 may include, for example, magnetic storage media, exemplified by a hard disk, or semiconductor memory, exemplified by an SSD. Furthermore, memory 1503 may be an internal memory incorporated into the CPU or GPU.

Communication I/F 1502 is, for example, a communication module that supports a communication method such as Bluetooth (registered trademark) or WiGig (registered trademark). For example, encoding device 1500 communicates with other communication devices via communication I/F 1502, and transmits an encoded bitstream.

Communication I/F 1502 includes, for example, a signal processing circuit that supports the communication method, and an antenna. The communication method is not limited to Bluetooth (registered trademark) or WiGig (registered trademark), and may be LTE, NR, Wi-Fi (registered trademark), or the like. The communication method is not limited to wireless communication methods. The communication method may be a wired communication method such as Ethernet (registered trademark), USB, HDMI (registered trademark), or the like.

The communication module includes, for example, a signal processing circuit that supports the communication method, and an antenna. In the above example, Bluetooth (registered trademark) and WiGig (registered trademark) were given as examples of the communication method, but a communication method such as Long Term Evolution (LTE), New Radio (NR), Wi-Fi (registered trademark), or the like may be supported. Furthermore, the communication I/F may be not the wireless communication methods described above, but a wired communication method such as Ethernet (registered trademark), Universal Serial Bus (USB), High-Definition Multimedia Interface (HDMI) (registered trademark), or the like.

### [Configuration of Renderer]

FIG. 7 is a block diagram illustrating a configuration example of renderer 1300. Specifically, FIG. 7 illustrates an example of the detailed configuration of renderer 1300, which corresponds to renderers 1203 and 1213 in FIG. 4A and FIG. 4B.

Renderer 1300 includes analyzer 1301, selector 1302, and reproducer 1303, and adds acoustic processing to sound data included in the input signal and outputs the sound data.

The input signal includes, for example, spatial information, sensor information, and sound data. The input signal may include a bitstream that includes sound data and metadata (control information), and in this case, the spatial information may be included in the metadata.

The spatial information is information related to the sound space (three-dimensional sound field) created by three-dimensional sound reproduction system 1000, and includes information about objects included in the sound space and information about the listener. The objects include sound source objects that emit sound and serve as sound sources, and non-sound-emitting objects that do not emit sound. The sound source objects may be expressed as simply sound sources.

The non-sound-emitting object serves as an obstacle object that reflects sound emitted by the sound source object, but a sound source object may also serve as an obstacle object that reflects sound emitted by another sound source object. The obstacle object may also be expressed as a reflection object.

Information assigned in common to both sound source objects and non-sound-emitting objects includes position information, geometry information, and the attenuation rate of sound volume when the object reflects sound.

The position information is represented by coordinate values of three axes, for example, the X-axis, the Y-axis, and the Z-axis of Euclidean space, but it does not necessarily have to be three-dimensional information. For example, the position information may be two-dimensional information represented by coordinate values of the two axes of the X-axis and the Y-axis. The position information of the object is defined by a representative position of the shape expressed by a mesh or voxel.

The geometry information may include information about the material of the surface.

The attenuation rate may be expressed as a real number greater than or equal to 0 and less than or equal to 1, or may be expressed as a negative decibel value. Since sound volume does not increase from reflection in real-world space, the attenuation rate is set to a negative decibel value. However, for example, to create an eerie atmosphere in a non-realistic space, an attenuation rate greater than or equal to 1, that is, a positive decibel value, may be intentionally set.

Furthermore, the attenuation rate may be set such that each frequency band included in a plurality of frequency bands has a different value, or values may be independently set for each frequency band. Furthermore, when the attenuation rate is set for each type of material of an object surface, the value of the corresponding attenuation rate may be used based on information about the surface material.

Furthermore, the spatial information may include, for example, information indicating whether the object belongs to an animate thing or information indicating whether the object is a mobile body. When the object is a mobile body, the position indicated by the position information may move over time. In this case, information on the changed position or the amount of change is transmitted to renderer 1300.

Information related to the sound source object includes, in addition to information assigned in common to both sound source objects and non-sound-emitting objects, sound data and information necessary for radiating the sound data into the sound space. The sound data is data representing sound perceived by the listener, and indicates information such as the frequency and intensity of the sound.

The sound data is typically a PCM signal, but may also be data compressed using an encoding method such as MP3. In this case, since the signal needs to be decoded at least before arriving at reproducer 1303, renderer 1300 may include a decoder (not illustrated). Alternatively, the signal may be decoded by audio data decoder 1202.

One item of sound data may be set for one sound source object, or a plurality of items of sound data may be set. Furthermore, identification information for identifying each item of sound data may be assigned to the sound data, or information related to the sound source object may include identification information for the sound data.

As information necessary for radiating sound data into the sound space, for example, information on a reference sound volume that is used as a standard in reproducing the sound data, information indicating a characteristic of sound data, information related to the position of the sound source object, information related to the orientation of the sound source object (in other words, information related to the directivity of the sound emitted by the sound source object), and the like may be included.

The information on the reference sound volume may be, for example, the root mean square value of the amplitude value of the sound data at the sound source position at the time of radiating the sound data into the sound space, and may be expressed as a floating-point decibel (dB) value.

For example, when the reference sound volume is 0 dB, the information on the reference sound volume may indicate that the sound is to be radiated into the sound space from the position indicated by the information related to the position of the sound source object, at the same sound volume as the signal level indicated by the sound data, without increase or decrease. Furthermore, when the reference sound volume is -6 dB, this may indicate that the sound is to be radiated into the sound space from the position indicated by the information related to the position of the sound source object at approximately half the sound volume of the signal level indicated by the sound data.

The information on the reference sound volume may be assigned to each item of sound data, or may be assigned collectively to a plurality of items of sound data.

The information indicating a characteristic of sound data is, for example, information on the sound volume of a sound source, and may be information indicating the chronological variation in the sound volume of a sound source.

For example, when the sound space is a virtual conference room and the sound source is a speaker, the sound volume transitions intermittently over short periods of time. In other words, sound portions and silent portions occur alternately. Furthermore, when the sound space is a concert hall and the sound source is a performer, the sound volume is maintained over a certain duration of time. Moreover, when the sound space is a battlefield and the sound source is an explosive, the sound volume of the explosion sound becomes large for only an instant and then continues to be silent or in a quiet state thereafter.

In this way, the sound volume information on the sound source may include not only information on the magnitude of sound but also information on the transition of the sound magnitude. Such information may be used as the information indicating a characteristic of the sound data.

The information on the transition may be expressed by data indicating frequency characteristics in chronological order. The information on the transition may be expressed by data indicating the duration of a sound interval. The information on the transition may be expressed by data indicating the chronological order of durations of sound intervals and durations of silent intervals. The information on the transition may be expressed by, for example, data that enumerates, in chronological order, a plurality of sets of a duration for which the amplitude of the sound signal can be considered stationary (can be considered approximately constant) and the amplitude value of said signal during that duration.

The information on the transition may be expressed by data of a duration during which the frequency characteristics of the sound signal can be considered stationary. The information on the transition may be expressed by, for example, data that enumerates, in chronological order, a plurality of sets of a duration during which the frequency characteristics of the sound signal can be considered stationary and the frequency characteristics during that duration. The information on the transition may be expressed in the format of, for example, data indicating the general shape of a spectrogram.

Furthermore, the sound volume that is used as the standard for the above-mentioned frequency characteristics may be used as the reference sound volume. The information on the reference sound volume and the information indicating a characteristic of the sound data may be used for calculation processing of the sound volume of direct sound or reflected sound to be perceived by the listener, and/or may be used for selection processing for selecting whether to make the listener perceive the sound. Other examples of and usage methods for the information indicating a characteristic of sound data will be described later.

It should be noted that the reflected sound according to the present embodiment is an example of indirect sound. Indirect sound may be reflected sound, diffracted sound, or the like. In the present embodiment, reflected sound, which is an example of indirect sound, is used for description, but the same processing is performed even if indirect sound other than reflected sound is used.

Information regarding the orientation of a sound source object (orientation information) is typically expressed in terms of yaw, pitch, and roll. Alternatively, the rotation of roll may be omitted, and the orientation information of a sound source object may be expressed in terms of azimuth (yaw) and elevation (pitch). The orientation information of a sound source object may change over time, and when changed, the orientation information is transmitted to renderer 1300.

Information related to the listener is information regarding the position and orientation of the listener in the sound space. The information regarding the position (position information) is represented by the position on the X-, Y-, and Z-axes of Euclidean space, but need not necessarily be three-dimensional information and may be two-dimensional information. Information regarding the orientation of the listener (orientation information) is typically expressed in terms of yaw, pitch, and roll. Alternatively, the rotation of roll may be omitted, and the listener orientation information may be expressed in terms of azimuth (yaw) and elevation (pitch).

The position information and orientation information regarding a listener may change over time, and when changed, the position information and orientation information are transmitted to renderer 1300.

The sensor information is information that includes, e.g., the rotation amount or displacement amount detected by sensor 1405 worn by the listener, and the position and orientation of the listener. The sensor information is transmitted to renderer 1300, and renderer 1300 updates the information on the position and orientation of the listener based on the sensor information. The sensor information may include position information obtained by performing self-localization estimation by a mobile terminal using GPS, a camera, or LiDAR, for example.

Furthermore, information obtained not from sensor 1405, but from an external source through a communication module, may also be detected as sensor information. Information indicating the temperature of audio signal processing device 1001, and information indicating the remaining level of the battery may be obtained from sensor 1405. Moreover, computational resources (CPU capability, memory resources, PC performance, and the like) of audio signal processing device 1001 or audio presentation device 1002 may be obtained in real time.

Analyzer 1301 analyzes an audio signal included in the input signal and spatial information received from spatial information managers 1201 and 1211 to calculate the information required for generating direct sounds and reflected sounds with reproducer 1303, and the information required for selecting whether to generate reflected sounds.

The information required for generating direct sounds and reflected sounds is, for example, for each of direct sounds and reflected sounds, values related to the path until arriving at the listening position, the time period taken until arrival, the sound volume at the arrival time, and the like. The values related to, e.g., the path until arriving at the listening position, the time period taken until arrival, and the sound volume at the arrival time are, for example, values representing the path until arriving at the listening position, the time period taken until arrival, and the sound volume at the arrival time, respectively.

The information required for selecting a reflected sound to be output is information indicating the relationship between the direct sound and the reflected sound, and is, for example, a value regarding a time difference between the direct sound and the reflected sound, a value regarding a sound volume ratio of the reflected sound to the direct sound at the listening position, and/or the like. The value related to the time difference between a direct sound and a reflected sound and the value related to the sound volume ratio between a direct sound and a reflected sound at the listening position are, for example, a value representing the time difference between the direct sound and the reflected sound and a value representing the sound volume ratio of the reflected sound to the direct sound at the listening position, respectively.

Note that it goes without saying that when the sound volume is expressed in units of decibels on a logarithmic scale (when the sound volume is expressed in the decibel domain), the sound volume ratio between the two signals is expressed as a decibel value difference. Specifically, the sound volume ratio between the two signals may be the difference when the amplitude value of each signal is expressed in the decibel domain. That value may be calculated based on, e.g., an energy value, a power value, or the like. Furthermore, this difference can be referred to as a difference in gain or simply a gain difference, in the decibel domain.

In other words, the sound volume ratio in the present disclosure is essentially the ratio between the amplitudes of signals; thus, the sound volume ratio may be expressed as a loudness ratio, a volume ratio, an amplitude ratio, a sound level ratio, a sound intensity ratio, a gain ratio, or the like. Furthermore, when the unit of sound volume is decibels, it goes without saying that the sound volume ratio in the present disclosure may be rephrased as the sound volume difference.

In the present disclosure, the "sound volume ratio" typically means the gain difference when the sound volume of each of two sounds is expressed in the unit of decibels, and in the examples of the embodiment, the threshold value data is also typically specified by the gain difference expressed in the decibel domain. However, the sound volume ratio is not limited to the gain difference in the decibel domain. When a sound volume ratio that is not expressed by the decibel domain is used, threshold value data specified in the decibel domain may be used by converting the threshold value data into the unit of the sound volume ratio calculated. Alternatively, threshold value data specified beforehand in each unit may be stored in the memory.

In other words, for example, even if a ratio between energy values, power value, or the like is used instead of the sound volume ratio, it is obvious that the algorithm in the present disclosure can be applied to solve the problem of the present disclosure.

The time difference between the arrival of a direct sound and the arrival of a reflected sound is, for example, the time difference between a direct sound arrival time period (arrival time) and a reflected sound arrival time period (arrival time). It should be noted that for simplicity, the time difference between the arrival of a direct sound and the arrival of a reflected sound may be referred to as the time difference between the direct sound and the reflected sound. The time difference between a direct sound and a reflected sound may be the time difference between the times at which each of the direct sound and the reflected sound arrive at the listening position, the difference in the time periods taken until each of the direct sound and the reflected sound arrive at the listening position, or the time difference between the time when emission of the direct sound ends and the time when the reflected sound arrives at the listening position. The methods for calculating these values will be described later.

Selector 1302 selects whether reproducer 1303 is to generate a reflected sound by using information calculated by analyzer 1301 and the threshold value data. To put it differently, selector 1302 determines whether to select a reflected sound as a reflected sound to be generated. To put it still differently, selector 1302 selects which reflected sounds reproducer 1303 is to generate, from a plurality of reflected sounds.

The threshold value data is, for example, a graph having a horizontal axis that indicates the time difference between a direct sound and reflected sounds and a vertical axis that indicates the sound volume ratios of reflected sounds to a direct sound, and is expressed as a boundary (threshold value) that demarcates whether each reflected sound is perceived. For example, the threshold value data may be expressed as an approximation formula that includes the time difference between a direct sound and a reflected sound as a variable, or may be expressed as an arrangement that includes values of time differences between direct sounds and reflected sounds as an index, and corresponding threshold values.

Selector 1302 selects the generation of a reflected sound when, for example, at the time difference between the arrival time of a direct sound and the arrival time of a reflected sound, the sound volume ratio of the arrival time sound volume of the reflected sound to the arrival time sound volume of the direct sound is a value that is larger than a threshold value set with reference to threshold value data. It should be noted that the arrival time sound volume means the sound volume when the sound arrives at the listening position.

To put it differently, the time difference between the arrival time of a direct sound and the arrival time of a reflected sound is the difference in the amount of time taken for the direct sound and the reflected sound to arrive at the listening position. Furthermore, the time difference between the time point at which emission of the direct sound stops and the time point at which the reflected sound arrives at the listening position may be used as the time difference between the direct sound and the reflected sound. In this case, threshold value data that is different from the threshold value data determined by using, as a reference, the time difference between the direct sound arrival time and the reflected sound arrive time may be used, or common threshold value data may be used.

The threshold value data may be obtained from memory 1404 of audio signal processing device 1001, or may be obtained from an external storage device via a communication module. The threshold value data storage method and the threshold value setting method will be described later.

Reproducer 1303 synthesizes the audio signals of direct sounds and the audio signals of reflected sounds selected for generation by selector 1302.

Specifically, reproducer 1303 processes the inputted audio signals to generate direct sounds, based on information on the direct sound arrival time and the direct sound arrival time sound volume calculated by analyzer 1301. Furthermore, reproducer 1303 processes the inputted audio signals to generate reflected sounds, based on information on the reflected sound arrival time and the reflected sound arrival time sound volume pertaining to the reflected sounds selected by selector 1302. Then, reproducer 1303 synthesizes and outputs the direct sounds and reflected sounds that were generated.

### [Operation Example of Renderer]

FIG. 8 is a flowchart illustrating an operation example of audio signal processing device 1001. FIG. 8 illustrates the processing performed mainly by renderer 1300 of audio signal processing device 1001.

In the analysis processing of the input signal (S101 in FIG. 8), analyzer 1301 analyzes the input signal inputted into audio signal processing device 1001 to detect direct sounds and reflected sounds that may be generated in the sound space. The reflected sounds detected here are candidates for the reflected sounds to be selected by selector 1302 as the reflected sounds to be ultimately generated by reproducer 1303. Furthermore, analyzer 1301 analyzes the input signal to calculate information necessary for generating direct sound and reflected sound, and information necessary for selecting the reflected sounds to be generated.

First, the characteristics of each of the direct sound and the reflected sound are calculated. Specifically, the arrival time period and the arrival time sound volume when each of the direct sound and the reflected sound arrive at the listener are calculated. When a plurality of objects are present in the sound space as reflection objects, reflected sound characteristics with respect to each of the plurality of objects are calculated.

The direct sound arrival time period (td) is calculated based on the direct sound arrival path (pd). The direct sound arrival path (pd) is a path that connects position information S (xs, ys, zs) of a sound source object with position information A1 (xa, ya, za) of the listener. The direct sound arrival time period (td) is a value obtained by dividing the length of the path that connects position information S (xs, ys, zs) with position information A1 (xa, ya, za), by the speed of sound (approximately 340 m/sec).

For example, the path length (X) is determined by the expression ((xs - xa)^2 + (ys - ya)^2 + (zs - za)^2)^0.5. The sound volume attenuates in inverse proportion to the distance. Thus, when the sound volume at position information S (xs, ys, zs) of a sound source object is denoted by N and the unit distance is denoted by U, the direct sound arrival time sound volume (ld) is determined by the expression ld = N * U/X.

Sound volume N at the sound source position may be the reference sound volume described above.

The reflected sound arrival time period (tr) is calculated based on the reflected sound arrival path (pr). The reflected sound arrival path (pr) is a path that connects the position of the sound image of a reflected sound with position information A1 (xa, ya, za).

Note that the position of the sound image of the reflected sound may be derived by using, for example, a "mirror image method" or a "ray tracing method", or by using any other method for deriving sound image positions. The mirror image method is a method that simulates a sound image by assuming that a reflected wave on the wall in a room has a mirror image in a position symmetrical to the sound source relative to the wall, and that sound waves are emitted from the position of that mirror image. The ray tracing method is a method that simulates, for example, an image (sound image) observed at a certain point by tracing waves that are transmitted in a linear manner, such as light rays or sound rays.

FIG. 9 is a diagram illustrating a comparatively distant positional relationship between a listener and an obstacle object. FIG. 10 is a diagram illustrating a comparatively close positional relationship between a listener and an obstacle object. In other words, each of FIG. 9 and FIG. 10 illustrate an example in which the sound image of a reflected sound is formed in a position symmetrical to the sound source position, with a wall interposed therebetween. Based on such a relationship, by determining the position of the sound image of the reflected sound on the x-, y-, and z-axes, the reflected sound arrival time period can be determined in the same manner as the method for calculating the direct sound arrival time period.

The reflected sound arrival time period (tr) is a value obtained by dividing the length of the path that connects the position of the sound image of a reflected sound with position information A1 (xa, ya, za), by the speed of sound (approximately 340 m/sec). The sound volume attenuates in inverse proportion to the distance. Thus, when the sound volume at the sound source position is denoted by N, the unit distance is denoted by U, and the attenuation rate of the sound volume at the reflection is denoted by G, the reflected sound arrival time sound volume (lr) is determined by the expression lr = N * G * U/Y.

As described above, attenuation rate G may be expressed as a real number greater than or equal to 0 and less than or equal to 1, or may be expressed as a negative decibel value. In this case, the sound volume of the signal as a whole attenuates by the amount of G. Furthermore, the attenuation rate may be set for each frequency band included in a plurality of frequency bands. In this case, analyzer 1301 multiplies each frequency component of the signal by the specified attenuation rate. Furthermore, in order to reduce the amount of computation, analyzer 1301 may, by using, as an overall attenuation rate, a representative value, an average value, or the like of a plurality of attenuation rates of a plurality of frequency bands, cause the sound volume of the signal as a whole to attenuate by that amount.

Next, analyzer 1301 calculates the sound volume ratio (L), which is the ratio of the reflected sound arrival time sound volume (lr) to the direct sound arrival time sound volume (ld), and the time difference (T) between the direct sound and the reflected sound, each of the sound volume ratio (L) and the time difference (T) being required for selection of the reflected sound to be generated.

The sound volume ratio (L), which is the ratio of the above-described lr to the direct sound arrival time sound volume (ld), is, for example, a value obtained by dividing the reflected sound arrival time sound volume (lr) by the direct sound arrival time sound volume (ld), and is determined by: L = (N * G * U/Y)/(N * U/X) = G * X/Y. Since the value to be determined is a sound volume ratio, the values of N and U may be any predetermined values.

The time difference (T) between a direct sound and a reflected sound may be, for example, the time difference between the time periods each of the direct sound and the reflected sound take to arrive at the listening position. For example, the time difference (T) between the time periods taken for each of a direct sound and a reflected sound to arrive at the listening position is determined by T = tr - td.

Furthermore, the time difference (T) may be the difference between the times at which each of a direct sound and a reflected sound arrive at the listening position. Moreover, the time difference (T) may be the time difference between the time at which the emission of the direct sound ends and the time at which the reflected sound arrives at the listening position. In other words, the time difference (T) may be the time difference, at the listening position, between the time at which the direct sound ends and the time at which the reflected sound begins.

Next, in reflected sound selection processing (S102 in FIG. 8), selector 1302 selects whether reproducer 1303 is to generate a reflected sound calculated by analyzer 1301. To put it differently, selector 1302 determines whether to select a reflected sound as a reflected sound to be generated. When there are a plurality of reflected sounds, selector 1302 selects whether to generate each reflected sound. As the result of selecting whether to generate each reflected sound, selector 1302 may select one or more reflected sounds to be generated from the plurality of reflected sounds, or may select one reflected sound to be generated.

Note that selector 1302 may select reflected sounds to which other processing is to be applied, not limited to generation processing. For example, selector 1302 may select reflected sounds to which binaural processing is to be applied. Furthermore, selector 1302 fundamentally selects only the one or more reflected sounds that are to be processed. However, selector 1302 may select only one or more reflected sounds that are not to be processed. Processing may then be applied to the one or more reflected sounds that were not selected.

For example, the selection of reflected sounds may be performed based on the sound volume ratio (L) and the time difference (T) calculated by analyzer 1301. Due to the selection processing being performed based on the time difference (T) between direct sounds and reflected sounds, it is possible to more appropriately select reflected sounds that have a large degree of influence on the listener's perception, in comparison to when performing the selection processing based only on the sound volume difference between direct sounds and reflected sounds.

Specifically, the selection of whether to generate a reflected sound is performed by comparing, to a preset threshold value, the sound volume ratio of a reflected sound to a direct sound, the sound volume ratio corresponding to the time difference between the direct sound and the reflected sound. The threshold value is set with reference to the threshold value data. The threshold value data is an indicator indicating the boundary that demarcates whether a reflected sound corresponding to a direct sound is perceived by the listener, and is defined as the ratio between the direct sound arrival time sound volume (ld) and the reflected sound arrival time sound volume (lr).

Note that the threshold value corresponds to a value expressed by, e.g., a numerical value determined based at the time difference (T). The threshold value data corresponds to the relationship between the time difference (T) and a threshold value, and corresponds to table data or a relational expression used for identifying or calculating the threshold value at the time difference (T). The format and type of the threshold value data is not limited to table data or a relational expression.

FIG. 11 is a diagram illustrating relationships between time differences between direct sounds and reflected sounds, and threshold values. For example, threshold value data of predetermined sound volume ratios may be referenced for each value of the time difference between a direct sound and a reflected sound, as illustrated in FIG. 11. Alternatively, threshold value data obtained by, e.g., interpolating or extrapolating from the threshold value data illustrated in FIG. 11 may be referenced.

Furthermore, the threshold value of the sound volume ratio at the time difference (T) calculated by analyzer 1301 is identified from the threshold value data. Moreover, selector 1302 determines whether to select a reflected sound as a reflected sound to be generated based on whether the sound volume ratio (L) of the reflected sound to the direct sound calculated by analyzer 1301 exceeds the threshold value.

Due to performing the selection processing by using the threshold value data of the sound volume ratio that is predetermined for each value of the time difference between a direct sound and a reflected sound, selection processing that considers post-masking or the precedence effect can be achieved. The type, format, storage method, setting method, and the like of the threshold value data will be described in detail later.

Next, in the generation processing of direct sounds and reflected sounds (S103 in FIG. 8), reproducer 1303 generates and synthesizes the audio signals for direct sounds and the audio signals for reflected sounds that have been selected by selector 1302 as reflected sounds to be generated.

The audio signals for direct sounds are generated by applying the direct sound arrival time period (td) and the direct sound arrival time sound volume (ld) calculated by analyzer 1301 to the sound data for the sound source objects included in the input signal. Specifically, processing in which the sound data is delayed by the amount of the direct sound arrival time period (td) and multiplied by the direct sound arrival time sound volume (ld) is performed. The processing to delay the sound data is processing in which the position of the sound data is moved forward or backward on the time axis. Processing in which the sound data is delayed may be applied without causing the sound quality to deteriorate, such as was disclosed in PTL 2.

The audio signals for reflected sounds are, similarly to the direct sounds, generated by applying the reflected sound arrival time period (tr) and the reflected sound arrival time sound volume (lr) calculated by analyzer 1301 to the sound data for the sound source objects.

However, the reflected sound arrival time sound volume (lr) in the generation of reflected sounds differs from the direct sound arrival time sound volume (ld) in that the arrival time sound volume of the reflected sounds is a value to which attenuation rate G of the sound volume in the reflection has been applied. G may be an attenuation rate that is applied globally to all frequency bands. Alternatively, in order to reflect the biases of frequency components generated by reflection, the reflectance may be defined for each predetermined frequency band. In this case, the processing to apply the reflected sound arrival time sound volume (lr) may be performed as frequency equalizer processing, which is processing that involves multiplying each band by the attenuation rate.

In the above example, for each of the direct sounds and the reflected sound candidates, the path length when arriving at the listener is calculated. Furthermore, the arrival time period and the arrival time sound volume are calculated based on each path length. The selection processing of the reflected sound candidates is then performed based on the time differences and the sound volume ratios of these.

Note that as a different example, the selection processing may be performed based on the path lengths when each of the direct sound and the reflected sound arrive at the listener, and the calculation of the arrival time period and the arrival time sound volume of each of the direct sound and the reflected sound and the calculation of the time difference and the sound volume ratio may be omitted. In this case, threshold values according to path length differences may be determined beforehand with respect to path length ratios. Then, selection processing may be performed based on whether the path length ratio calculated is greater than or equal to the threshold value according to the path length difference calculated. This makes it possible to perform selection processing based on path length differences that correspond to time differences, while reducing the amount of computation.

Furthermore, a parameter that indicates sound propagation speed or a parameter that has an impact on the sound propagation speed parameter may be used in addition to the path length difference.

### (Details of Selection Processing)

The selection processing that determines whether reflected sounds are generated will be explained in detail.

The selection of a reflected sound is performed by comparing, with the sound volume ratio (L) calculated by analyzer 1301, the threshold value determined for the sound volume ratio, which is the ratio of the reflected sound arrival time sound volume to the direct sound arrival time sound volume, at the time difference (T) between the direct sound and the reflected sound. For example, of threshold values of sound volume ratios that were determined beforehand for each value of a time difference between a direct sound and a reflected sound, the threshold value of the sound volume ratio at the time difference (T) between the direct sound and the reflected sound calculated by analyzer 1301 is referenced. Then, determination of whether the reflected sound is selected as a reflected sound to be generated is made based on whether the sound volume ratio (L) calculated by analyzer 1301 exceeds the threshold value.

The time difference (T) may be any of, for example, the difference in the times at which each of a direct sound and a reflected sound arrive at the listening position, the time difference between the time periods taken when each of a direct sound and a reflected sound arrive at the listening position, or the time difference between the time point when emission of a direct sound stops and the time point when a reflected sound arrives at the listening position. Here, the direct sound end time may be determined by adding the duration of a direct sound to the arrival time of the direct sound.

The threshold value data may be determined based on the minimum time difference at which the perception of the listener is able to detect the divergence of two sounds due to an action of the auditory nerve or a cognitive effect in the brain, and more specifically due to the precedence effect, described later, the temporal masking phenomenon, described later, or a combination of both. Specific numerical values may be derived from research results into the temporal masking effect, the precedence effect, the echo detection limit, etc. that are already known, or may be determined by an auditory test performed with the premise of application in the virtual space.

FIG. 12A, FIG. 12B, and FIG. 12C are diagrams illustrating examples of threshold value data setting methods. As illustrated in FIG. 12A, FIG. 12B, and FIG. 12C, the threshold value data represents the boundaries (threshold values) determining whether reflected sound is perceived or not perceived, in a graph having a horizontal axis that indicates the time difference between direct sound and reflected sound and a vertical axis that indicates the sound volume ratio of the reflected sound to the direct sound.

The threshold value data may be expressed by an approximation formula that includes the time difference between direct sound and reflected sound as a variable. Furthermore, as illustrated in FIG. 11, the threshold value data may be stored in the domain of memory 1404 as an arrangement of an index of time differences between direct sounds and reflected sounds, and threshold values corresponding to the index.

Note that when the height of a line parallel to the horizontal axis in Example 4 in FIG. 12C (the minimum audible limit) is used as the threshold value, what is compared to the threshold value is not the sound volume ratio (L) between a direct sound and a reflected sound, but the sound volume of the reflected sound itself. The reason for this is that the threshold value indicates the sound volume of the boundary demarcating whether a sound is perceivable to the listener, and is a threshold value for determining a sound having a lower sound volume than the threshold value to be a sound that is not to be reproduced. In other words, the threshold value corresponding to the minimum audible limit is not a threshold value with respect to the ratio of the sound volume of a reflected sound to the sound volume of a direct sound.

When the minimum audible limit is used as the threshold value, the threshold value is constant regardless of the time difference (T); thus, the time difference (T) need not be calculated.

Note that when a plurality of reflected sounds are generated in the analysis processing (S101 in FIG. 8), the selection processing may be performed on all of the reflected sounds, or the selection processing may be performed on only the reflected sounds having high evaluation values based on the evaluation values derived for each reflected sound by means of a preset evaluation method. Here, the evaluation value of a reflected sound corresponds to the sensory level of importance of the reflected sound. Note that the evaluation value being high corresponds to the evaluation value being large, and these expressions may be used interchangeably.

Selector 1302 may calculate an evaluation value for each reflected sound by an evaluation method set beforehand based on, for example, the sound volume of the sound source, the visual properties of the sound source, the localizability of the sound source, the visual properties of the reflection object (the obstacle object), the geometrical relationship between the direct sound and the reflected sound, and/or the like.

Specifically, the evaluation value may become higher as the sound volume of the sound source is greater. Furthermore, in order to cause visual localization and acoustic localization to match each other, the evaluation value may be high when a sound source object or a reflection object (obstacle object) is visible from the listener, or when the localizability of a sound source object is high.

Moreover, the size of the arrival angle formed by a direct sound and a reflected sound and the difference between the arrival time periods of a direct sound and a reflected sound greatly affect the grasping of the space. Thus, the evaluation value may be high when the size of the angle formed by the arrival of a direct sound and the arrival of a reflected sound is large, or when the difference between the arrival time periods of a direct sound and a reflected sound is large.

The sound volume information on the sound source may indicate the reference sound volume determined for each content, a temporal transition of sound volume, or both.

For example, when the virtual space is a virtual conference room and the direct sound is a speaking voice, the sound volume transitions intermittently over short periods of time. In other words, sound portions and silent portions occur alternately. Furthermore, when the virtual space is a concert hall and the direct sound is the performance of a musical piece, the sound volume is maintained over a certain duration of time. Moreover, when the virtual space is a battlefield and the direct sound is an explosion sound, the sound volume becomes large for only an instant and then continues to be silent or in a quiet state thereafter.

In this way, the sound volume information on the sound source may include not only information on the reference sound volume corresponding to the volume setting when the sound is radiated into the virtual space, but also information on the transition of the sound magnitude.

The information on the transition may be expressed by data indicating frequency characteristics in chronological order. The information on the transition may be expressed by data indicating the duration of a sound interval. The information on the transition may be expressed by data indicating the chronological order of durations of sound intervals and durations of silent intervals. The information on the transition may be expressed by, for example, data that enumerates, in chronological order, a plurality of sets of a duration for which the amplitude of the sound signal can be considered stationary (can be considered approximately constant) and the amplitude value of said signal during that duration.

The information on the transition may be expressed by data of a duration during which the frequency characteristics of the sound signal can be considered stationary. The information on the transition may be expressed by, for example, data that enumerates, in chronological order, a plurality of sets of a duration for which the frequency characteristics of the sound signal can be considered stationary and the frequency characteristics during that duration.

Furthermore, efforts to use temporal transitions in the frequency characteristics of signals for the acoustic processing of virtual spaces have been conventionally widely performed (PTL 1, etc.). When considering such conventional techniques, it goes without saying that the above-described sets may be sets that include durations of time in which the frequency characteristics are constant and those frequency characteristics.

The geometrical relationships may be positional relationships between a sound source, the listener, and a reflection object in a virtual space. The path lengths of each of the direct sound and the reflected sound arriving can be geometrically calculated based on these relationships. Therefore, using the relationship that sound volume is inversely proportional to distance, it is possible to calculate the reference sound volume of a reflected sound with respect to the reference sound volume of a direct sound.

A reflection coefficient of the reflection object may be used for calculation of the reference sound volume of a reflected sound. Furthermore, a generally used typical value may be used as the reflection coefficient. On the other hand, when special conditions are present, such as the reflection object being covered by a sound-absorbing material or the like, a specially assigned reflection coefficient may be used as the reflection coefficient of the reflection object.

Each reflected sound may be evaluated based on the sound volume of the reflected sound. The sound volume of the reflected sound may, as described above, be determined from the geometrical relationship between the direct sound and the reflected sound, and an indicator assigned to the reflection object. The reflected sound may be evaluated by comparing that sound volume with a predetermined threshold value.

Furthermore, information that indicates a temporal transition in the sound volume of the sound source may be reflected in the evaluation. For example, in a case in which the information that indicates a temporal transition in the sound volume of the sound source indicates the duration of a sound interval, the reflected sound evaluation value may be maintained as-is when the time is within the sound interval. On the other hand, when the time is outside of the sound interval, processing to reduce or make zero the evaluation value of the reflected sound may be performed, even if the reference sound volume of the reflected sound exceeds the threshold value.

Alternatively, the information that indicates a temporal transition in the sound volume of the sound source may be data that lists, in chronological order, a plurality of sets of a duration during which it is considered that the amplitude of the sound signal is largely constant and amplitude values of the signal during that period. In that case, processing may be performed such that reflected sounds are evaluated by changing the reference sound volume of the reflected sounds in coordination with changes in the amplitude values in the data.

Furthermore, both the information on the reference sound volume and the information on the temporally transitioning sound volume may be used as the information indicating the sound volume of a direct sound. For example, an evaluation value can be calculated based on the information on the reference sound volume, and then the evaluation value can be corrected by using the information on the transitioning sound volume.

In the evaluation of reflected sounds, all of the methods described above may be performed, or only some of the methods may be performed. For example, reflected sounds may be evaluated using a plurality of evaluation methods, or reflected sounds may be evaluated using one evaluation method.

When reflected sounds are evaluated using a plurality of evaluation methods, whether to select each reflected sound may be determined based on an evaluation value comprehensively determined by the plurality of evaluation methods, or may be determined based on the evaluation value of each of the plurality of evaluation methods.

When whether to select each reflected sound is determined based on each of the plurality of evaluation methods, audio signal processing device 1001 may select a sound when all of the plurality of evaluation results based on the plurality of evaluation methods indicate selecting the sound. Alternatively, audio signal processing device 1001 may select a sound when any one of the plurality of the evaluation results based on the plurality of evaluation methods indicates selecting the sound.

Furthermore, for example, an order of priority may be assigned to the first to third evaluation methods. When it is determined by the first evaluation method that a sound is not to be selected, audio signal processing device 1001 may then make a final determination that the sound is not to be selected, without depending on the determination results in the second and third evaluation methods. Moreover, when, although it has been determined by one of the second and third evaluation methods that a sound is not to be selected, it has been determined by the other of the second and third evaluation methods that the sound is to be selected, audio signal processing device 1001 may make a final determination that the sound is to be selected.

Furthermore, the selection processing and the evaluation processing may be performed independently of each other, or only one of these may be performed. Moreover, the evaluation processing may be performed only on reflected sounds that have been determined to be selected in the selection processing, and whether to select each reflected sound may be redetermined in the evaluation processing. Alternatively, the evaluation processing may be performed only on reflected sounds that have been determined to not be selected in the selection processing, and whether to select each reflected sound may be redetermined in the evaluation processing.

The selection processing described above can be interpreted as processing in which a reflected sound is selected in accordance with a characteristic of a direct sound. For example, in processing in which a reflected sound is selected in accordance with a characteristic of a direct sound, the threshold value used in selection of the reflected sound is set or adjusted in accordance with a characteristic of the direct sound. Alternatively, the evaluation value used in the selection of a reflected sound may be calculated based on one or more of, for example, the sound volume of the sound source, the visual properties of the sound source, the localizability of the sound source, the visual properties of the reflection object (the obstacle object), the geometrical relationship between the direct sound and the reflected sound, and/or the like.

Furthermore, the processing in which a reflected sound is selected based on a characteristic of a direct sound is not limited to processing in which the threshold value is set or adjusted in accordance with a characteristic of the direct sound and processing in which the evaluation value used for selection of the reflected sound to be processed is calculated, and other processes may be performed. Furthermore, even when performing the processing in which the threshold value is set or adjusted in accordance with a characteristic of the direct sound or the processing in which the evaluation value used in selection of the reflected sounds to be processed is calculated, the processing may be partially changed, or new processing may be added.

Note that setting the threshold value may include adjusting the threshold value, changing the threshold value, and the like.

### [Threshold Value Setting Method]

The threshold value data used in the selection processing may be set with reference to the value of an echo detection limit based on a known precedence effect or a masking threshold value based on the post-masking effect.

The precedence effect is a phenomenon in which, when sounds are heard from two locations, it is perceived that the sound source is present at the location from which the first sound was heard. If two short sounds fuse together to be heard as one sound, the position (localization position) from which the overall sound is heard is, for the most part, determined by the position of the first sound. The echo detection limit is a phenomenon that occurs due to the precedence effect, and is the minimum time difference at which the listener's perception detects the divergence of two sounds.

In Example 2 of FIG. 12C, the horizontal axis corresponds to the arrival time period of reflected sound (echo), and specifically corresponds to the delay time period from the arrival time of direct sound to the arrival time of reflected sound. The vertical axis corresponds to the sound volume ratio of detectable reflected sound to direct sound, and specifically corresponds to the threshold value that determines whether reflected sound that has arrived with a delay time period is detectable.

FIG. 13 is a diagram illustrating an example of a threshold value setting method. The horizontal axis in FIG. 13 corresponds to the arrival time period of reflected sound, and specifically corresponds to the time differences (T) between direct sound and reflected sound. The vertical axis in FIG. 13 corresponds to the sound volume of reflected sound. Specifically, the vertical axis in FIG. 13 may correspond to the sound volume (sound volume ratios) of reflected sound determined in relation to direct sound, or may correspond to the sound volume of reflected sound determined absolutely without depending on the sound volume of the direct sound.

For example, when, as illustrated in FIG. 9, the listener and an obstacle object are comparatively far from each other, the arrival time period of the reflected sound becomes longer, and, as illustrated in C in FIG. 13, the threshold value is set to be low. As a result, in the case of FIG. 9, the reflected sound is generated. On the other hand, when, as illustrated in FIG. 10, the listener and the obstacle object are comparatively close to each other, the arrival time period of the reflected sound is shorter than that in the case of FIG. 9, and as illustrated in B in FIG. 13, the threshold value is set to be high. As a result, in the case of FIG. 10, the reflected sound is not generated.

Furthermore, the threshold value data may be stored in memory 1404, obtained from memory 1404 at the time of the selection processing, and used in the selection processing.

FIG. 14 is a flowchart illustrating an example of selection processing. First, selector 1302 specifies a reflected sound detected by analyzer 1301 (S201). Selector 1302 then detects the sound volume ratio (L) of the reflected sound to the direct sound, and the time difference (T) between the direct sound and the reflected sound (S202 and S203).

The time difference (T) may be any of, for example, the time difference between the time periods each of the direct sound and the reflected sound take to arrive at the listening position, the time difference between the direct sound arrival time and the reflected sound arrival time, and the time difference between the time when emission of the direct sound ends and the time when the reflected sound arrives at the listening position. Here, an example will be described based on the time difference between the direct sound arrival time and the reflected sound arrival time.

Specifically, based on: the position information on the sound source object and the listener; and the position information and geometry information on the obstacle object, selector 1302 calculates the difference between the length of the path of the direct sound and the length of the path of the reflected sound. By dividing the difference between the lengths by the speed of sound, selector 1302 then detects the time difference (T) between the time when the direct sound arrives at the listener's position and the time when the reflected sound arrives at the listener's position.

The sound volume when arriving at the listener attenuates, with respect to the sound volume of the sound source, in proportion to the distance to the listener (in inverse proportion to the distance). Therefore, the sound volume of the direct sound is obtained by dividing the sound volume of the sound source by the length of the path of the direct sound. The sound volume of the reflected sound is obtained by dividing the sound volume of the sound source by the length of the path of the reflected sound, and then further multiplying by the attenuation rate assigned to the virtual obstacle object. Selector 1302 detects the sound volume ratio by calculating the ratio between these sound volumes.

Furthermore, using the threshold value data, selector 1302 identifies the threshold value corresponding to the time difference (T) (S204). Selector 1302 then determines whether the sound volume ratio (L) detected is greater than or equal to the threshold value (S205).

When the sound volume ratio (L) is greater than or equal to the threshold value ("Yes" in S205), selector 1302 selects the reflected sound as a reflected sound to be generated (S206). When the sound volume ratio (L) is less than the threshold value ("No" in S205), selector 1302 skips selecting the reflected sound as a reflected sound to be generated (S207). That is, in this case, selector 1302 determines the reflected sound to be a reflected sound that is not to be generated, i.e., a reflected sound to be culled.

Subsequently, selector 1302 determines whether there are any unspecified reflected sounds (S208). If there are unspecified reflected sounds ("Yes" in S208), selector 1302 repeats the above-described processing (S201 to S207). If there are no unspecified reflected sounds ("No" in S208), selector 1302 ends the processing.

This selection processing may be performed on all of the reflected sounds generated in the analysis processing, or may be performed on only the reflected sounds for which the above-described evaluation value is high.

### [Details of Threshold Value Storing Method]

The threshold value data according to the present embodiment is stored in memory 1404 of audio signal processing device 1001. The format and type of the threshold value data to be stored may be any format and any type. When threshold values having a plurality of formats and a plurality of types are stored, in the selection processing, the format and the type of the threshold values to be used in the selection processing of the reflected sounds may be decided. The method for determining which items of threshold value data to use in the selection processing will be described later.

Furthermore, a plurality of formats and a plurality of types of threshold value data may be stored in combination. The combined threshold value data may be read from spatial information managers 1201 and 1211 to set the threshold values to be used in the selection processing. Note that the threshold value data to be stored in memory 1404 may be stored in spatial information managers 1201 and 1211.

For example, the threshold value data may be stored as threshold values at each time difference, so as to plot a line between the threshold values as illustrated in [Example 1] and [Example 2] of FIG. 12C.

Furthermore, the threshold value data may be stored as table data in which, as illustrated in FIG. 11, the threshold values and the time differences (T) are associated with each other. In other words, the threshold value data may be stored as table data that includes the time differences (T) as an index. Naturally, the threshold values illustrated in FIG. 11 are examples, and the threshold values are not limited to the examples in FIG. 11. Furthermore, the threshold values may be approximated by functions that include the time differences (T) as variables, and coefficients of the functions may be stored, without storing the threshold values themselves. Moreover, a plurality of approximation expressions may be combined and stored.

For example, the threshold value data may be expressed by a formula such as that shown below, where timeDiff denotes the time difference (T), and gainThresh denotes the threshold value.$gainThresh = \left\{\begin{matrix}- 0.10 ∗ timeDiff - 17.5 & , if 1.0 < timeDiff < 10.0 \\ - 0.55 ∗ timeDiff - 13.0 & , if 10.0 \leq timeDiff < 20.0 \\ - 0.60 ∗ timeDiff - 12.0 & if 20.0 \leq timeDiff < 30.0 \\ - 0.80 ∗ timeDiff - 6.0 & , if 30.0 \leq timeDiff \leq 40.0\end{matrix}\right.$

The threshold value is defined only over the time range in which the precedence effect is considered to occur. When the time difference is outside of that time range (in the above formula, a value of 1 ms or less or 40 ms or greater), the determination may be performed not by gainThresh, but solely by a threshold value representing the minimum sound volume for reproduction in the virtual space, described later.

Experiments by the present inventors have clarified that in the time range in which the precedence effect is considered to occur, the threshold value may be approximated by a function that is convex upward. The above-described formula is an example of an approximation formula generated based on these experiments.

Information on a relational expression that indicates the relationship between time differences (T) and threshold values may be stored in memory 1404. In other words, an expression that includes the time difference (T) as a variable may be stored. The threshold values of the time differences (T) may be approximated by a straight line or a curved line, and a parameter that indicates the geometrical shape of the straight line or the curved line may be stored. For example, when the geometrical shape is a straight line, the start point and the slope for expressing the straight line may be stored.

Furthermore, the threshold value data may be stored having the type and format thereof defined for each characteristic of direct sound. Moreover, parameters for adjusting threshold values based on a characteristic of the direct sound and using the threshold values in the selection processing may be stored. Processing to adjust threshold values in accordance with a characteristic of the direct sound and use the threshold values in the selection processing is described later, as a variation of the threshold value setting method.

As an example in which a plurality of types of threshold value data are stored in combination, as illustrated in [Example 3] in FIG. 12C, for each time difference (T), the larger value of the masking threshold value and the echo detection limit threshold value may be stored. As illustrated in [Example 4] in FIG. 12C, for each time difference (T), the larger value of the minimum sound volume for reproduction in a virtual space and the echo detection limit threshold value may be stored.

The combination of the plurality of types of the threshold value data is not limited to these. For example, in a plurality of items of threshold value data, information on the maximum value may be stored for each time difference (T).

Furthermore, in the above description, the information on threshold values has time period items as a one-dimensional index. The information on threshold values may have a two-dimensional or three-dimensional index that further includes variables related to the direction of arrival.

FIG. 15 is a diagram illustrating relationships between directions of direct sounds, directions of reflected sounds, time differences, and threshold values. For example, as illustrated in FIG. 15, threshold values pre-calculated in accordance with the relationship between the direct sound direction (θ), the reflected sound direction (γ), the time difference (T), and the sound volume ratio (L) may be stored.

The direct sound direction (θ) corresponds to the angle, with respect to the listener, of the direction of arrival of a direct sound. The reflected sound direction (γ) corresponds to the angle, with respect to the listener, of the direction of arrival of a reflected sound. Here, the direction in which the listener is facing is defined as 0 degrees. The time difference (T) corresponds to the difference, until reaching the listening position, of the direct sound arrival time period and the reflected sound arrival time period. The sound volume ratio (L) corresponds to the sound volume ratio of the reflected sound arrival time sound volume to the direct sound arrival time sound volume.

Naturally, the threshold values illustrated in FIG. 15 are examples, and the threshold values are not limited to the examples in FIG. 15. Furthermore, in FIG. 15, mainly threshold values when the angle (θ) of the direct sound arrival direction is 0 degrees are exemplified. However, threshold values when the direct sound arrival direction (θ) is not 0 degrees are also stored in memory 1404.

Further, in the above description, the threshold values are stored in an arrangement that has the angle (θ) of the direct sound (more specifically, the angle (θ) of the direct sound arrival direction) and the angle (γ) of the reflected sound (more specifically, the angle (γ) of the reflected sound arrival direction) as independent variables or indexes. However, the angle (θ) of the direct sound arrival direction and the angle (γ) of the reflected sound arrival direction need not be used as independent variables.

For example, the angular difference between the angle (θ) of the direct sound arrival direction and the angle (γ) of the reflected sound arrival direction may be used. This angular difference corresponds to the angle formed between the direct sound arrival direction and the reflected sound arrival direction, and may be expressed as the arrival angle between a direct sound and a reflected sound.

FIG. 16 is a diagram illustrating relationships between angular differences, time differences, and threshold values. For example, threshold values pre-calculated by using, as a variable, the angular difference (Φ) between the angle (θ) of the direct sound arrival direction and the angle (γ) of the reflected sound arrival direction may be stored as in the example illustrated in FIG. 16. Naturally, the threshold values illustrated in FIG. 16 are examples, and the threshold values are not limited to the examples in FIG. 16.

In the example in FIG. 16, the number of variables used for deriving threshold values may be reduced. Thus, it is possible to reduce the number of threshold values stored in memory 1404. Therefore, it is possible to decrease the amount of data stored in memory 1404.

Furthermore, when the angular difference (Φ) between the angle (θ) of the direct sound arrival direction and the angle (γ) of the reflected sound arrival direction is used, the threshold value data may be stored in a two-dimensional arrangement. Moreover, in the selection processing, the difference between the angle (θ) of the direct sound arrival direction and the angle (γ) of the reflected sound arrival direction may be calculated by using a three-dimensional arrangement.

The method for selecting reflected sounds using threshold values based on the directions of arrival will be described later.

### [First Variation of Threshold Value Setting Method]

In the examples in FIG. 12A, FIG. 12B, and FIG. 12C, threshold values in a plurality of formats and of a plurality of types may be stored in spatial information managers 1201 and 1211. Then, of the threshold values having a plurality of formats and a plurality of types, the format and the type of the threshold values to be used in the selection processing of the reflected sounds may be decided. Specifically, as illustrated in Example 3 of FIG. 12C, in the time differences (T) corresponding to the reflected sound arrival times, the largest threshold value may be adopted.

Moreover, as illustrated in Example 4, the masking threshold value, the echo detection limit threshold value, and a threshold value indicating the minimum sound volume for reproduction in the virtual space may be stored. Then, the largest threshold value at the time difference (T) corresponding to the reflected sound arrival time may be adopted.

### [Second Variation of Threshold Value Setting Method]

As another example of the threshold value setting method, a method for setting threshold values in accordance with a characteristic of direct sounds will be described.

FIG. 17 is a block diagram illustrating another configuration example of renderer 1300 illustrated in FIG. 7. Renderer 1300 in FIG. 17 is different from renderer 1300 in FIG. 7 in the respect that renderer 1300 in FIG. 17 includes threshold value adjuster 1304. The description other than threshold value adjuster 1304 is the same as the matters described regarding FIG. 7, and has thus been omitted.

Threshold value adjuster 1304 selects, from the threshold value data, threshold values that are to be used by selector 1302, based on information indicating a characteristic of an audio signal. Alternatively, threshold value adjuster 1304 may adjust the threshold values included in the threshold value data, based on the information indicating a characteristic of the audio signal.

The information indicating a characteristic of the audio signal may be included in the input signal. Then, threshold value adjuster 1304 may obtain the information indicating a characteristic of the audio signal from the input signal. Alternatively, analyzer 1301 may derive a characteristic of the audio signal by analyzing the audio signal included in the input signal accepted by analyzer 1301, and output the information indicating the characteristic of the audio signal to threshold value adjuster 1304.

The information indicating a characteristic of the audio signal may be obtained before starting the rendering processing, or may be obtained each time during rendering.

Furthermore, threshold value adjuster 1304 need not be included in audio signal processing device 1001; another transmission device may have the role of threshold value adjuster 1304. In this case, analyzer 1301 or selector 1302 may obtain, from the other transmission device via communication I/F 1403, the information indicating a characteristic of the audio signal, the threshold value data corresponding to the characteristic, or information for adjusting the threshold value data in accordance with the characteristic.

FIG. 18 is a flowchart illustrating another example of selection processing. FIG. 19 is a flowchart illustrating yet another example of selection processing. In FIG. 18 and FIG. 19, the threshold value is set in accordance with a characteristic of the direct sound. Specifically, in FIG. 18, threshold value adjuster 1304 identifies a threshold value from the threshold value data, based on the time difference (T) and a characteristic of the audio signal. In FIG. 19, threshold value adjuster 1304 adjusts, based on a characteristic of the audio signal, the threshold value identified from the threshold value data based on the time difference (T).

Hereinafter, the operations of each example will be described. Note that description has been omitted for processes that are shared with the example in FIG. 14.

First, an example of the processing illustrated in FIG. 18 will be described. Here, the threshold value data is stored beforehand in memory 1404 for each nature of direct sound. Accordingly, a plurality of items of threshold value data corresponding to a plurality of natures are stored beforehand in memory 1404. Then, threshold value adjuster 1304 identifies, from the plurality of items of threshold value data, the threshold value data to be used in the selection processing of reflected sounds.

For example, threshold value adjuster 1304 obtains a characteristic of a direct sound based on the input signal (S211). Threshold value adjuster 1304 may obtain a characteristic of the direct sound that is associated with the input signal. Threshold value adjuster 1304 may then identify the threshold value corresponding to the time difference (T) and the characteristic of the direct sound (S212).

Furthermore, as illustrated in FIG. 19, threshold value adjuster 1304 may adjust the threshold value identified by selector 1302, based on the characteristic of the direct sound (S221).

In any of these cases, the information indicating a characteristic of the audio signal, the information for adjusting the threshold value in accordance with the characteristic of the audio signal, or both of these may be included in the input signal. Threshold value adjuster 1304 may adjust the threshold value using one or both of these.

Furthermore, the information indicating a characteristic of the audio signal, the information for adjusting the threshold value, or both of these may be transmitted by another input signal aside from the input signal that includes the audio signal. In this case, information for associating the other input signal aside from the input signal may be included in the input signal that includes the audio signal, or information for associating the other input signal with the input signal may be stored in memory 1404 together with the information on threshold values.

In the examples in FIG. 18 and FIG. 19, the threshold value used in selecting each reflected sound is set in accordance with a characteristic of the direct sound, that is, a characteristic of the audio signal. Threshold value data preset for each characteristic may be used, as in FIG. 18, or the threshold value may be adjusted in accordance with the characteristics of the audio signal, as in FIG. 19. Furthermore, threshold value data parameters may be adjusted in accordance with the characteristic of the audio signal.

Moreover, the operations performed by threshold value adjuster 1304 may be performed by analyzer 1301 or selector 1302. For example, analyzer 1301 may obtain a characteristic of the audio signal. Furthermore, selector 1302 may set threshold values in accordance with the characteristic of the audio signal.

Next, the relationship between the characteristic of the audio signal and the threshold value will be described.

Two short sounds that arrive at the listener's ears in succession are heard as one sound if the time period interval between the two short sounds is sufficiently short. This phenomenon is referred to as the precedence effect. The precedence effect is known to only occur with respect to unconnected sounds, that is, transient sounds (NPL 1). Thus, when an audio signal indicates a stationary sound, the echo detection limit may be set lower than when the audio signal indicates a non-stationary sound.

In other words, the threshold value is set low in accordance with the characteristics of this precedence effect when, for example, a direct sound is a stationary sound. Furthermore, the threshold value may be set lower as the stationarity is greater.

An example of processing when the characteristic of the audio signal is stationary will be explained. First, threshold value adjuster 1304 or analyzer 1301 makes a determination on the stationarity based on the amount of variation in a frequency component of an audio signal accompanying the passage of time. For example, when the amount of variation is small, it is determined that the stationarity is high. Conversely, when the amount of variation is great, it is determined that the stationarity is low. As a result of the determination, a graph indicating the level of stationarity may be set, or a parameter indicating the stationarity in accordance with the amount of variation may be set.

Next, threshold value adjuster 1304 adjusts the threshold value data or the threshold values based on information indicating the stationarity, such as the graph or the parameter indicating the stationarity of the audio signal, and sets the adjusted threshold value data or threshold values as threshold value data or threshold values to be used by selector 1302.

Alternatively, a parameter for setting the threshold value data in accordance with the information indicating direct sound stationarity may be stored beforehand in memory 1404. In this case, threshold value adjuster 1304 may make a determination on the stationarity of the audio signal and set the threshold value data to be used in the selection of reflected sounds, based on the information indicating stationarity and the parameter.

Alternatively, a plurality of parameters for threshold value data may be stored beforehand in memory 1404, corresponding to a plurality of patterns of direct sound stationarity. In this case, threshold value adjuster 1304 may make a determination on the stationarity of the audio signal, select the threshold value data parameter based on the pattern of direct sound stationarity, and set the threshold value data to be used in the selection of reflected sounds, based on the threshold value data parameter.

Note that a determination on the stationarity of an audio signal may be made based on the amount of variation of the frequency component of the audio signal, each time an audio signal is inputted.

Alternatively, a determination on the stationarity of an audio signal may be made based on information indicating stationarity that is pre-associated with the audio signal. In other words, the information indicating audio signal stationarity may be associated with the audio signal and pre-stored in memory 1404. Analyzer 1301 may, each time an audio signal is inputted, obtain information indicating stationarity that is associated with the audio signal. Threshold value adjuster 1304 may then adjust the threshold values based on the information indicating stationarity that is associated with the audio signal.

As another example of threshold values being set in accordance with a characteristic of the audio signal, when an audio signal indicates short sounds (clicking sounds, etc.), the application scope of the echo detection limit may be set shorter than when an audio signal indicates long sounds. This processing is based on the characteristics of the precedence effect.

It is known that due to the precedence effect, two short sounds that arrive at the listener's ears in succession are heard as one sound if the time period interval between the two short sounds is sufficiently short. The upper limit of this time period interval is dependent on the length of the sounds. For example, the upper limit of this time period interval is about 5 ms for clicking sounds, but for complex sounds such as a human voice or music, the upper limit may be 40 ms (NPL 1).

In accordance with the characteristics of this precedence effect, for example, in the case of a sound for which the duration of a direct sound is short, threshold values for short time period lengths are set. Furthermore, threshold values for shorter time period lengths are set as the duration of the direct sound is shorter.

Threshold values for short time period lengths being set means that within a range in which the time difference (T) between a direct sound and a reflected sound is small, threshold values corresponding to an echo detection limit based on the characteristics of the precedence effect are set. Threshold values corresponding to the echo detection limit based on the characteristics of the precedence effect are not set outside of this range. In other words, outside of this range, threshold values are low. Thus, threshold values for short time period lengths being set for short sounds can correspond to low threshold values being set for short sounds.

As another example of threshold values being set in accordance with a characteristic of a direct sound, when a direct sound is an intermittent sound (such as speech), threshold values may be set lower than when a direct sound is a continuous sound (such as music).

For example, when a direct sound corresponds to speech, sound portions and silent portions repeat, and in the silent portions, only the post-masking effect occurs as the masking effect. On the other hand, when the direct sound is a continuous sound such as musical content, the masking effects that occur include both the post-masking effect and a simultaneous masking effect that results from sound occurring at that time. Consequently, the overall masking effect is greater in the case of music, etc. than in the case of speech, etc.

In accordance with masking effect characteristics such as those described above, threshold values may be set higher in the case of music, etc. than in the case of speech, etc. Conversely, threshold values may be set lower in the case of speech, etc. than in the case of music, etc. That is, threshold values may be set to be low when a direct sound has numerous intermittent portions.

As described above, the information indicating a characteristic of a direct sound may be information indicating the stationarity, intermittency, duration, etc. of the direct sound. Furthermore, the information indicating a characteristic of a direct sound may be any combination of these. Furthermore, the information indicating a characteristic of a direct sound may be information indicating the time variation of one of these, or may be information indicating the time variation of any combination of these. That is, the information indicating a characteristic of a direct sound may be information indicating the time variation of the direct sound.

For example, as indicated in the description of the stationarity determination, the information indicating a characteristic of a direct sound may be chronological data on the frequency characteristics. Here, the frequency characteristics may be expressed in a commonly used form such as a gain value per frequency band, a Fourier series with respect to a time axis signal, a linear predictive coding (LPC) coefficient or cepstral coefficient for determining a frequency envelope, or the like.

Furthermore, the information indicating a characteristic of a direct sound may be, as information indicating the intermittency of direct sound, information (an amplitude envelope outline) enumerating, in chronological order, a plurality of sets of: the duration for which the amplitude of a signal is stationary; and the amplitude value of the signal for that duration. Here, the amplitude value may be expressed as a ratio with respect to the reference sound volume.

Furthermore, the information indicating a characteristic of a direct sound may be information on the frequency characteristics of the direct sound. For example, the information indicating a characteristic of a direct sound may be information indicating the stationarity of the frequency characteristics of the direct sound. Specifically, the information indicating a characteristic of a direct sound may be information (a spectrogram outline) enumerating, in chronological order, a plurality of sets of: a duration for which the variation in frequency characteristics is small; and the frequency characteristics of the signal for the duration. Here, the sound volume used as the reference for the frequency characteristics may be the reference sound volume.

For example, the information indicating the time variation of a direct sound may be information indicating a direct sound envelope. The information indicating the time variation of a direct sound may be used when the "minimum audible limit" described in [Example 4] of FIG. 12C is the threshold value. The signal compared to the minimum audible limit is the sound volume of a reflected sound.

The sound volume of a reflected sound is obtained by geometrical calculation from information on the positions of the sound source, the listener, and the reflection object. Specifically, the reference sound volume of the reflected sound is obtained with respect to the reference sound volume of the sound source. By adjusting the reference sound volume of the reflected sound using, as the information on a characteristic of a direct sound, information on the sound magnitude transition of the sound source, the sound volume of the reflected sound at each moment can be accurately determined. This is because the variation in the sound volume of the sound source is reflected in the variation in the sound volume of the reflected sound.

By comparing the sound volume of a reflected sound with the threshold value after adjusting the sound volume of the reflected sound, the reflected sounds that are auditorily necessary can be appropriately selected with more accuracy.

It goes without saying that naturally, the same result can be obtained by, without adjusting the reference sound volume of a reflected sound, adjusting the threshold value based on the inverse of the information on the sound magnitude transition of the sound source, and comparing the adjusted threshold value to the reference sound volume of the reflected sound. That is, the reference sound volume of a reflected sound may be adjusted using the information on the sound magnitude transition of the sound source, or the threshold value may be adjusted using the information on the sound magnitude transition of the sound source. The adjustment of the reference sound volume of a reflected sound and the adjustment of a threshold value correspond to each other.

Depending on the composition of the surface of an object that reflects sound, the reflectance of sound (the attenuation rate accompanying the reflection) is different for each frequency band. Accordingly, as described later, the reflectance (attenuation rate) of sound may be associated with each frequency band, for an object that reflects sound. Whether to select the reflected sound can be more accurately determined based on such reflectance information and spectrogram information. For example, processing such as the following is performed.

Specifically, for example, it is indicated by spectrogram information that a high-frequency component is more dominant than a low-frequency component at a certain time interval. Furthermore, for example, it is indicated by sound reflectance information that the reflectance is very low at the high-frequency component, compared to the low-frequency component.

In this case, there is a possibility that even if the amplitude of the sound source signal on the time axis is high, the sound volume of the reflected sound will be low, the sound volume of the reflected sound being obtained by multiplying, by the attenuation rate for each frequency band indicated by the reflectance information, the frequency component indicated by the spectrogram information. Thus, the reflected sound will not be selected.

As described above, the information indicating a characteristic of a direct sound may be information indicating the time variation of the direct sound. For example, the information indicating a characteristic of a direct sound may indicate a value obtained by analyzing the direct sound at a predetermined time length.

Specifically, the information indicating a characteristic of a direct sound may be information obtained by calculating the average energy or the average amplitude of the direct sound for each predetermined time length. Furthermore, the information indicating a characteristic of a direct sound may be information obtained by calculating the energy or average amplitude of the direct sound for each short time analysis length, and calculating the weighted average of the energy or the average amplitude for each long time analysis length that is longer than the short time analysis length.

More specifically, for example, the information indicating the time variation of a direct sound may be information obtained by calculating the energy or the average amplitude of the direct sound for each predetermined short time length (for example, 5 ms; hereinafter, time length frames are expressed as analysis frames). Furthermore, the information indicating the time variation of a direct sound may be information represented by a weighted average of the energy or average amplitude calculated using the past N-1 analysis frames.

When the energy of the n-th analysis frame is expressed by E(n), information I(n) indicating a characteristic of the direct sound is determined in accordance with the following formula.
[Math. 2] $I \left(n\right) = a \left(0\right) ⋅ E \left(n\right) + {\sum }_{i = 1}^{N - 1} a \left(i\right) ⋅ E \left(n-i\right)$

Here, parameter a(i) denotes a weighting factor. Typically, a(i) is set such that a(i) ≥ 0 and the sum of a(i) is 1. However, the method for setting a(i) is not limited thereto.

Note that information I(n) indicating a characteristic of direct sound is calculated each time 5 ms of direct sound is imported. That is to say, the time variation of information I(n) indicating a characteristic of a direct sound can be calculated with low delay. Thus, this method is suitably applied to an application requiring real-time performance.

Furthermore, information I(n) indicating a characteristic of a direct sound may be determined in accordance with the following formula.
[Math. 3] $I \left(n\right) = b \left(0\right) ⋅ E \left(n\right) + {\sum }_{i = 1}^{N - 1} b \left(i\right) ⋅ I \left(n-i\right)$

Here, parameter b(i) denotes a weighting factor. Typically, b(i) is set such that b(i) ≥ 0 and the sum of b(i) is 1. However, the method for setting b(i) is not limited thereto.

In this formula, information I(n) indicating a characteristic of a direct sound is recursively determined. Thus, the average energy for a long time length can be calculated with a small amount of computation.

Formula 1 and Formula 2 above can be considered to be filters in which E(n) is the input signal and I(n) is the output signal. In this case, Formula 1 is a moving average (MA) model filter and Formula 2 is an autoregressive (AR) model filter, and both of these have the characteristics of a low-pass filter. Furthermore, an ARMA model filter, in which both of these are combined, may be used.

Note that the method for deriving the information indicating the time variation of a direct sound is not limited to the above-described formulae or filters, and other well-known methods may be used. As described above, the information indicating the time variation of a direct sound indicates a value obtained by analyzing a direct sound at a predetermined time length. A direct sound may be analyzed from perspectives other than average energy.

Furthermore, as described above, the information indicating a characteristic of a direct sound may be information on the frequency characteristics of the direct sound. The information on the frequency characteristics of a direct sound may be information calculated by using the frequency characteristics of the direct sound. For example, the information on the frequency characteristics of a direct sound may be information obtained as the average energy of a low-frequency component, by averaging the low-frequency component of the direct sound at a predetermined analysis length.

Specifically, the low-frequency component of a direct sound can be determined by applying, to a direct sound contained in an analysis frame length, a filter having low-pass characteristics. From the energy or average amplitude of this low-frequency component, the information indicating a characteristic of a direct sound can be derived, similarly to Formula 1 described above.

When the energy of the low-frequency component of the n-th analysis frame is expressed by EL(n), information I(n) indicating a characteristic of the direct sound can be determined in accordance with the following formula.
[Math. 4] $I \left(n\right) = c \left(0\right) ⋅ {E}_{L} \left(n\right) + {\sum }_{i = 1}^{N - 1} c \left(i\right) ⋅ {E}_{L} \left(n-i\right)$

Here, parameter c(i) denotes a weighting factor. Typically, c(i) is set such that c(i) ≥ 0 and the sum of c(i) is 1. However, the method for setting c(i) is not limited thereto.

Note that information I(n) indicating a characteristic of direct sound is calculated each time 5 ms of direct sound is imported. That is to say, the time variation of information I(n) indicating a characteristic of a direct sound can be calculated with low delay. Thus, this method is suitably applied to an application requiring real-time performance.

Furthermore, similarly to Formula 2, information I(n) indicating a characteristic of a direct sound can be determined in accordance with the following formula.
[Math. 5] $I \left(n\right) = d \left(0\right) ⋅ {E}_{L} \left(n\right) + {\sum }_{i = 1}^{N - 1} d \left(i\right) ⋅ I \left(n-i\right)$

Here, parameter d(i) denotes a weighting factor. Typically, d(i) is set such that d(i) ≥ 0 and the sum of d(i) is 1. However, the method for setting d(i) is not limited thereto.

In this formula, information I(n) indicating a characteristic of a direct sound is recursively determined. Thus, the average energy for a long time length can be calculated with a small amount of computation.

Formula 3 and Formula 4 above can be considered to be filters in which E(n) is the input signal and I(n) is the output signal. In this case, Formula 3 is a moving average (MA) model filter and Formula 4 is an autoregressive (AR) model filter, and both of these have the characteristics of a low-pass filter. Furthermore, an ARMA model filter, in which both of these are combined, may be used.

In the above description, a filter having low-pass characteristics was used in the method for determining the low-frequency component of a direct sound, but the method for determining the low-frequency component of a direct sound is not limited thereto. Furthermore, the method for deriving the information indicating the time variation of direct sound is not limited to the above-described formulae or filters, and other well-known methods may be used. Furthermore, the spectrum of a direct sound can be calculated by applying frequency conversion to the direct sound. The energy or average amplitude of the low-frequency component of the spectrum can then be calculated.

Furthermore, in the above description, the MA model or the AR model is used for deriving the information indicating the time variation of a direct sound. The coefficients of these models may be predetermined fixed values, or may be variable values, which are values that temporally vary.

Furthermore, the relationship between the analysis frame length and the interval at which the information update threads are created may be as described below.

For example, when the time length of an analysis frame is TA (msec) and the interval at which information update threads are created is TU (msec), the value of N in (Formula 1) and (Formula 3), described above, in the MA filter may be approximately a value given by TU/TA. Furthermore, b(i) and d(i) (1 ≤ i < N) in (Formula 2) and (Formula 4), described above, in the AR filter may be a value that results in the time constant of the filter being about TU (msec).

The reason for this setting is that within the information update interval period, convergence of the filter is expected.

On the other hand, when, in the information indicating the time variation of a direct sound with the above-described setting, the value varies too sharply, I(n) may be precalculated. Furthermore, precalculated I(n) may be applied to the selection processing of reflected sounds. For example, in the processing of the t-th time frame, I(t + tau) may be used. Here, tau is a value defined in accordance with the characteristics of filter convergence. When the convergence is slow, the value of tau is large in comparison to when the convergence is fast.

Furthermore, as the information indicating the characteristics of a direct sound, information on auditory masking (frequency masking) calculated from the direct sound may be used. The auditory masking information indicates a threshold value of an amplitude value at a frequency region masked by a direct sound. Processing in which the amplitude values of reflected sounds in the same frequency range are compared to the threshold value, and a reflected sound having an amplitude value lower than the threshold value is not selected may be performed. The amplitude value of a reflected sound in a frequency range may be obtained by analyzer 1301 as information indicating the characteristics of a reflected sound.

When threshold values to be used in selecting reflected sounds are thus set in accordance with the characteristics of direct sound, it is possible to appropriately select reflected sounds that are auditorily necessary, and auditory characteristics can be effectively reflected in three-dimensional sound reproduction system 1000. Processing to detect characteristics of direct sound, processing to determine threshold values in accordance with the characteristics, and processing to adjust the threshold values in accordance with the characteristics may be performed during the rendering processing, or may be performed before starting the rendering processing.

For example, these processes may be performed, for example, during virtual space creation (during software creation), when starting processing of the virtual space (when launching the software or starting rendering), or when there is an occurrence of an information update thread that periodically occurs in processing of the virtual space. Furthermore, the time of virtual space creation may be when the virtual space is built before starting acoustic processing, may be when information (spatial information) on the virtual space is obtained, or may be when software is obtained.

Here, in the information update thread, processing to update the spatial information managed by spatial information managers 1201 and 1211 is performed.

The role of the information update thread is, for example, processing to update, based on the position and orientation of the VR goggles worn by the listener, the position and orientation of the listener's avatar positioned in the virtual space, updating of the positions of objects that have moved within the virtual space, and the like. Such processing is covered within a processing thread that launches relatively infrequently, at approximately tens of Hz.

Processing to update the information indicating a characteristic of a direct sound may be performed by such a processing thread that is created infrequently. The reason for this is that characteristics of direct sound vary less frequently than audio processing frames for audio output occur. This makes it possible to relatively reduce the computational load of the processing. Furthermore, when the information is updated at an unduly high frequency, there is a risk of pulsive noise being generated. Updating the information at a low frequency also makes it possible to avoid such a risk.

### [Third Variation of Threshold Value Setting Method]

As another example of a threshold value setting method, threshold values may be set in accordance with computation resources (CPU capability, memory resources, PC performance, remaining level of battery, etc.) for processing reproduction of the virtual space. More specifically, sensor 1405 of audio signal processing device 1001 detects the amount of computation resources, and when the amount of computation resources is low, the threshold values are set to be high. Since consequently, the sound volume of a greater number of reflected sounds falls below the threshold values, the number of reflected sounds on which binaural processing is to be performed can be reduced, whereby the amount of computation can be reduced.

Alternatively, when the signal processing is performed by equipment that is driven by a storage battery, such as a smartphone or VR goggles, it is expected that priority is given to allowing processing to be performed for a longer duration, and computation resources are used economically. In such a case, it is not necessary to detect the amount or remaining level of computation resources, and the threshold values may be set to be high.

### [Fourth Variation of Threshold Value Setting Method]

As another example of a threshold value setting method, by including a threshold value setter, not illustrated, in audio signal processing device 1001 or audio presentation device 1002, threshold values can be set by the manager of the virtual space or the listener.

For example, an "energy-saving mode", in which there are few reflected sounds to be heard and the amount of computation is low, or a "high-performance mode", in which there are many reflected sounds to be heard and the amount of computation is high, may be selectable by the listener to whom audio presentation device 1002 is equipped. Alternatively, the mode may be selectable by the manager who manages three-dimensional sound reproduction system 1000 or by the creator of the three-dimensional sound content. Furthermore, not the mode, but the threshold values or the threshold value data may be directly selectable.

### [First Variation of Operations of Renderer]

FIG. 20 is a flowchart illustrating a first variation of operations of audio signal processing device 1001. FIG. 20 illustrates the processing performed mainly by renderer 1300 of audio signal processing device 1001. In this variation, sound volume compensation processing is added to the operations of renderer 1300.

For example, analyzer 1301 obtains data (the input signal) (S301). Next, analyzer 1301 analyzes the data (S302). Next, selector 1302 determines whether to select reflected sounds based on the analysis results (S303). Next, reproducer 1303 performs sound volume compensation processing based on the reflected sounds that were not selected (S304). Next, reproducer 1303 performs acoustic processing on the direct sounds and the reflected sounds (S305). Reproducer 1303 then outputs the direct sounds and the reflected sounds as audio (S306).

The above-described processes (S301 to S306) other than the sound volume compensation processing (S304) are processes that are shared with the other examples described above; thus, explanation thereof has been omitted.

The sound volume compensation processing is performed in accordance with the reflected sounds that were not selected in the selection processing. For example, due to not selecting a reflected sound in the selection processing, an absence emerges in the sound volume sensation. The sound volume compensation processing reduces the incongruity that accompanies this absence in the sound volume sensation. As an example of compensating the sound volume sensation, the following two methods are disclosed. Either of these two methods may be used.

First, a method in which the sound volume sensation is compensated for by raising the sound volume of a direct sound will be described. Reproducer 1303 raises the sound volume of the direct sound by the amount of the sound volume of a reflected sound that was not selected, and generates the direct sound. Accordingly, the sound volume sensation lost due to the reflected sound not being generated is compensated for.

At the time of raising the sound volume, reproducer 1303 may raise the sound volume of each frequency component in accordance with the frequency characteristics of the reflected sound. In order to make such processing possible, an attenuation rate of the sound volume attenuated by the reflection object may be assigned to each of predetermined frequency bands. This makes it possible to derive the frequency characteristics of the reflected sound.

Next, a method in which the sound volume sensation is compensated for by causing a reflected sound to be synthesized in a direct sound will be described. In this method, reproducer 1303 adds, to a direct sound, a reflected sound that was not selected and generates the direct sound to compensate for the sound volume sensation that results from the reflected sound not being generated. The sound volume (amplitude), frequency, delay, and the like of the reflected sound that was not selected are reflected in the generated direct sound.

In the case of the method for raising the sound volume of the direct sound, while the amount of computation for the compensation processing is extremely slight, only the sound volume is compensated for. In the case of the method of causing a reflected sound to be synthesized in a direct sound, the amount of computation for the compensation processing is large compared to the method of raising the sound volume of the direct sound, but the characteristics of the reflected sound are more accurately compensated for.

Since in both cases, only the direct sound is generated and the reflected sound is not generated, the total amount of computation is reduced. In particular, since the amount of computation required for binaural processing, which includes processing to implement a head-related transfer function (HRTF), is reduced, the total amount of computation is greatly reduced. The reason for this is that the amount of computation required for binaural processing is much greater than the amount of processing required for the above-described compensation processing.

Note that when the reason for a reflected sound not being selected is that the sound volume of the reflected sound is less than the masking threshold value, the sound volume sensation is not lost; thus, the reflected sound may be simply removed without performing compensation processing.

### [Second Variation of Operations of Renderer]

FIG. 21 is a flowchart illustrating a second variation of operations of audio signal processing device 1001. FIG. 21 illustrates the processing performed mainly by renderer 1300 of audio signal processing device 1001. In this variation, left-right sound volume difference adjustment processing is added to the operations of renderer 1300.

For example, analyzer 1301 analyzes the input signal (S401). Next, analyzer 1301 detects the direction of arrival of sounds (S402). Next, selector 1302 adjusts the difference in sound volume between the sounds perceived by the left and right ears (S403). Furthermore, selector 1302 adjusts the difference in the arrival time periods (delay) between the sounds perceived by the left and right ears (S404). Selector 1302 determines whether to select reflected sounds based on information on the adjusted sounds (S405).

The above-described processes (S401 to S405) other than the left-right sound volume difference adjustment processing (S403) and the delay adjustment processing (S404) are processes that are shared with the other examples described above; thus, explanation thereof has been omitted.

FIG. 22 is a diagram illustrating an arrangement example of an avatar, a sound source object, and an obstacle object. For example, in a case in which the front direction of the listener is 0 degrees, when, as in FIG. 22, the polarities (for example, positive-negative) of the direction of arrival (θ) of the direct sound and the direction of arrival (γ) of the reflected sound (the direction (γ) of the reflected sound) are different, the sound volume difference that occurs between the ears is corrected.

Specifically, when the polarities of θ and γ are different, the ear which mainly (first) perceives the sound is different for each of the direct sound and the reflected sound. In this case, as the left-right sound volume difference adjustment processing (S403), selector 1302 adjusts the sound volume of the direct sound in accordance with the position of the ear that mainly perceives the reflected sound. For example, by multiplying the sound volume when the direct sound arrives at the listener by (1.0 - 0.3 sin(θ))(0 ≤ θ ≤ 180), selector 1302 causes attenuation of the sound volume when the direct sound arrives at the listener.

By calculating the sound volume ratio of the sound volume of the reflected sound to the sound volume of the direct sound, corrected as described above, and comparing the calculated sound volume ratio with threshold values, selector 1302 determines whether to select reflected sounds. Accordingly, the sound volume difference that occurs between the ears is corrected, the sound volume of direct sounds that affect reflected sounds is more accurately derived, and the determination of whether to select reflected sounds is more accurately performed.

Furthermore, in addition to the left-right sound volume difference adjustment processing (S403), selector 1302 may, as delay adjustment processing (S404), delay the direct sound arrival time period in accordance with the positions of the ears at which a reflected sound is perceived. Specifically, selector 1302 may delay the direct sound arrival time period by adding, to the direct sound arrival time period, (a (sinθ + θ)/c)ms (where a is the radius of the head and c is the speed of sound).

### [Third Variation of Operations of Renderer]

A method for setting threshold values in accordance with directions of arrival will be described.

FIG. 23 is a flowchart illustrating yet another example of the selection processing. Description has been omitted for processes that are shared with the example in FIG. 14. In the example in FIG. 23, selector 1302 selects reflected sounds by using threshold values in accordance with directions of arrival.

Specifically, from the direct sound arrival path (pd), the reflected sound arrival path (pr), and avatar orientation information D1, each calculated by analyzer 1301, selector 1302 calculates the direct sound arrival direction (θ) and the reflected sound arrival direction (γ) (the direction (γ) of the reflected sound), each defined using the orientation of an avatar as reference. In other words, selector 1302 detects the direct sound arrival direction (θ) and the reflected sound arrival direction (γ) (S231). The orientation of the avatar corresponds to the orientation of the listener. Avatar orientation information D1 may be included in the input signal.

By using three indexes including the time difference (T), in addition to the direct sound arrival direction (θ) and the reflected sound arrival direction (γ), selector 1302 identifies, from a three-dimensional arrangement such as that illustrated in FIG. 15, the threshold values to be used in the selection processing (S232).

As an example, a method for setting threshold values to be used in selection processing when, as in FIG. 22, an avatar, a sound source object, and an obstacle object are arranged will be described.

Position information on the avatar, the sound source object, and the obstacle object, and avatar orientation information D1 are obtained from the input information. The direction (θ) of the direct sound and the direction (γ) of the sound image of the reflected sound when the orientation of the avatar is determined to be 0 degrees are calculated by using these items of position information and orientation information D1. In the case of FIG. 22, the direction (θ) of the direct sound is about 20 degrees, and the direction (γ) of the sound image of the reflected sound is about 265 degrees (-95 degrees).

Next, referencing the threshold value data stored in the three-dimensional arrangement illustrated in FIG. 15, a threshold value is identified from an arrangement domain that corresponds to the values of the two directions (θ) and (γ), and the value of the time difference (T) calculated by analyzer 1301. When there is no index that corresponds to the values of (θ), (γ), and (T) that were calculated, the threshold value corresponding to the index that is closest may be identified.

As another method, threshold values may be identified by performing processing such as interpolation or extrapolation, based on one or more threshold values that correspond to one or more indexes that are closest to the values of (θ), (γ), and (T) that were calculated. For example, a threshold value corresponding to (20 degrees, 265 degrees, T) may be identified based on the four threshold values corresponding to the four indexes of (0 degrees, 225 degrees, T), (0 degrees, 270 degrees, T), (45 degrees, 225 degrees, T), and (45 degrees, 270 degrees, T).

Selection processing based on the difference between the direct sound arrival direction angle (θ) and the reflected sound arrival direction angle (γ) will be described.

For example, as illustrated in FIG. 16, threshold value data having, as a two-dimensional index arrangement: the angular difference (Φ) between the direct sound arrival direction (θ) and the reflected sound arrival direction (γ); and the time difference (T) may be pre-created and set. In this case, the angular difference (Φ) and the time difference (T) are referenced in the selection processing. Alternatively, the angular difference (Φ) between the angle (θ) of the direct sound arrival direction and the angle (γ) of the reflected sound arrival direction may be calculated in the selection processing, and the angular difference (Φ) calculated may be used to identify the threshold value.

Alternatively, threshold value data having, as an index arrangement, a combination of the angular difference (Φ), the direct sound arrival direction (θ), and the time difference (T), or a combination of the angular difference (Φ), the reflected sound arrival direction (γ), and the time difference (T) may be set.

Alternatively, as illustrated in FIG. 15, threshold value data having, as a three-dimensional index arrangement, values of (θ), (γ), and (T) may be set.

### [Fourth Variation of Operations of Renderer]

The processing performed by the above-described analyzer 1301, selector 1302, and reproducer 1303 may, for example, be performed as pipeline processing as described in PTL 3.

FIG. 24 is a block diagram illustrating a configuration example for renderer 1300 to perform pipeline processing.

Renderer 1300 in FIG. 24 includes reverberation processor 1311, early reflection processor 1312, distance attenuation processor 1313, selector 1314, generator 1315, and binaural processor 1316. These constituent elements may be configured as a plurality of the constituent elements of renderer 1300 illustrated in FIG. 7, or may be configured as at least a part of the plurality of constituent elements of audio signal processing device 1001 illustrated in FIG. 5.

Pipeline processing refers to dividing the processing for applying acoustic effects into a plurality of processes and executing each of the plurality of processes one by one in order. The plurality of processes include, for example, signal processing on the audio signal, generation of parameters used for signal processing, and the like.

Renderer 1300 may perform reverberation processing, early reflection processing, distance attenuation processing, binaural processing, and the like as pipeline processing. However, these types of processing are examples, and the pipeline processing may include processes other than these, or may not include some of these processes. For example, the pipeline processing may include diffraction processing and occlusion processing. Furthermore, for example, the reverberation processing may be omitted when unneeded.

Furthermore, each process may be expressed as a stage. Moreover, the audio signals of the reflected sounds and the like generated as the result of the processes may be expressed as rendering items. The plurality of stages and the order of these stages in the pipeline processing are not limited to the example illustrated in FIG. 24.

Here, the parameters (the arrival paths, the arrival time periods, and the sound volume ratios related to direct sounds and reflected sounds) used in the selection processing are calculated in one of the plurality of stages for generating the rendering items. In other words, the parameters used for selecting the reflected sounds are calculated as a part of the pipeline processing for generating the rendering items. Note that it is not necessary for all of the stages to be performed by renderer 1300. For example, a part of the stages may be omitted, or may be performed by an element other than renderer 1300.

The reverberation processing, the early reflection processing, the distance attenuation processing, the selection processing, the generation processing, and the binaural processing that may be included as stages in the pipeline processing will be described. In each stage, the metadata included in the input signal may be analyzed, and the parameters used for generating the reflected sounds may be calculated.

In the reverberation processing, reverberation processor 1311 generates an audio signal indicating reverberation sound or the parameters used in generating the audio signal. Reverberation sound is a sound that arrives at the listener as reverberation after the direct sound. As one example, the reverberation sound is a sound that arrives at the listener at a relatively late stage (for example, approximately 100 to 200 ms after the arrival of the direct sound) after the early reflected sound (to be described later) arrives at the listener, and after undergoing more reflections (for example, several tens of times) than the early reflected sound.

Reverberation processor 1311 refers to the audio signal and spatial information included in the input signal, and calculates reverberation sound by using, as a function for generating reverberation sound, a predetermined function prepared beforehand.

Reverberation processor 1311 may generate reverberation sound by applying a known reverberation generation method to the audio signal included in the input signal. One example of a known reverberation generation method is the Schroeder method, but the known reverberation generation method is not limited to the Schroeder method. Furthermore, reverberation processor 1311 uses the shape and acoustic characteristics of a sound reproduction space indicated by the spatial information when applying the known reverberation generation method. In this way, reverberation processor 1311 can calculate parameters for generating reverberation sound.

In the early reflection processing, early reflection processor 1312 calculates parameters for generating early reflection sounds based on the spatial information. The early reflected sound is reflected sound that arrives at the listener at a relatively early stage (for example, approximately several tens of ms after the arrival of the direct sound) after the direct sound from the sound source object arrives at the listener, and after undergoing one or more reflections.

Early reflection processor 1312 references, for example, the audio signal and metadata, and calculates the path, from reflection objects, of reflected sound that arrives at the listener after being reflected by the reflection objects. For example, in calculation of the path, the shape of the three-dimensional sound field (space), the size of the three-dimensional sound field, the positions of reflection objects such as structures, the reflectance of reflection objects, and the like may be used.

Early reflection processor 1312 may calculate the path of the direct sound. The information of said path may be used as a parameter for early reflection processor 1312 to generate the early reflected sound, and may be used as a parameter for selector 1314 to select reflected sounds.

In the distance attenuation processing, distance attenuation processor 1313 calculates the sound volume of the direct sound and the reflected sound that arrive at the listener, based on the lengths of the paths of the direct sound and the reflected sound. The sound volume of the direct sound and the reflected sound that arrive at the listener attenuate, with respect to the sound volume of the sound source, in proportion to the distance of the path to the listener (in inverse proportion to the distance). Thus, distance attenuation processor 1313 is able to calculate the sound volume of the direct sound by dividing the sound volume of the sound source by the length of the direct sound path, and is able to calculate the sound volume of the reflected sound by dividing the sound volume of the sound source by the length of the path of the reflected sound.

In the selection processing, selector 1314 selects the reflected sounds to be generated, based on the parameters calculated before the selection processing. One of the selection methods of the present disclosure may be used for selection of the reflected sounds to be generated.

The selection processing may be performed on all of the reflected sounds, or may be performed only on the reflected sounds having high evaluation values based on the evaluation processing, as described above. In other words, the reflected sounds having low evaluation values may be determined as not selected, without performing the selection processing. For example, reflected sounds for which the sound volume is extremely low may be considered to be reflected sounds having low evaluation values, and may be determined as not selected.

Furthermore, for example, the selection processing may be performed on all of the reflected sounds. Then, the evaluation values of the reflected sounds selected in the selection processing may be determined, and the reflected sounds having low determined evaluation values may be redetermined as not selected.

The selection processing and the evaluation processing may each be performed independently, or may be performed in combination with each other. When the selection processing and the evaluation processing are performed in combination with each other, either of the two processes may be performed first.

In the generation processing, generator 1315 generates direct sounds and reflected sounds. For example, generator 1315 generates direct sounds based on the direct sound arrival times and arrival time sound volume, from the audio signal included in the input signal. Furthermore, for each reflected sound selected in the selection processing, generator 1315 generates the reflected sound based on the reflected sound arrival time and the arrival time sound volume, from the audio signal included in the input signal.

In the binaural processing, binaural processor 1316 performs signal processing so that the audio signal of the direct sound is perceived as sound arriving at the listener from the direction of the sound source object. Furthermore, binaural processor 1316 performs signal processing so that the reflected sounds selected by selector 1314 are perceived as sounds arriving at the listener from the reflection object.

For example, based on the position and orientation of the listener in the sound space, binaural processor 1316 performs processing to apply an HRIR DB so that sound arrives at the listener from the position of the sound source object or the position of the obstacle object.

Note that Head-Related Impulse Response (HRIR) is the response characteristic when one impulse is generated. Specifically, HRIR is the response characteristic obtained by converting from an expression in the frequency domain to an expression in the time domain by Fourier transforming the head-related transfer function, in which the change in sound caused by surrounding objects including the auricle, the head, and the shoulders is expressed as a transfer function. The HRIR DB is a database including such information.

Furthermore, the position and orientation of the listener in the sound space are, for example, the position and orientation of a virtual listener in a virtual sound space. The position and orientation of the virtual listener in the virtual sound space may change in accordance with movement of the head of the listener. Furthermore, the position and orientation of the virtual listener in the virtual sound space may be determined based on information obtained from sensor 1405.

The program(s), spatial information, HRIR DB, threshold value data, other parameters, and/or the like used in the above-described processing are obtained from memory 1404 included in audio signal processing device 1001, or from outside of audio signal processing device 1001.

Furthermore, the pipeline processing may contain other processes. Moreover, renderer 1300 may contain a processor that is not illustrated, for performing another process included in the pipeline processing. For example, renderer 1300 may include a diffraction processor and an occlusion processor.

The diffraction processor executes processing to generate an audio signal indicating sound including diffracted sound caused by an obstacle object between the listener and the sound source object in a three-dimensional sound field (space). Diffracted sound is sound that when an obstacle object is present between the sound source object and the listener, arrives at the listener from the sound source object by going around the obstacle object.

The diffraction processor references, for example, the audio signal and metadata, and calculates the path by which diffracted sound arrives at the listener from the sound source object by detouring around the obstacle object, and generates diffracted sound based on the calculated path. In the calculation of the path, the sound source object in the three-dimensional sound field (space), the positions of the listener and the obstacle object, the shape and size of the obstacle object, and the like may be used.

When a sound source object is present on the other side of an obstacle object, the occlusion processor generates an audio signal for a sound that passes from the sound source object through the obstacle object and is audible therethrough, based on the spatial information and information on the material, etc. of the obstacle object.

### [Example of Sound Source Object]

As described above, in the position information assigned to the sound source object, a "point" in the virtual space indicates the position of a sound source object. In other words, as described above, the sound source is defined as a "point sound source".

On the other hand, a sound source in a virtual space may be defined as an object that has a length, size, shape, and the like, i.e., as a sound source that is not a point sound source, but a spatially extended sound source. In this case, the distance between the listener and the sound source, and the direction of arrival of the sound are not determined. Consequently, reflected sounds originating from such a sound source may be limited to being selected by selector 1302 without performing analysis by analyzer 1301, or regardless of the analysis result. By doing so, it is possible to avoid the sound quality degradation that might occur by not selecting the reflected sound.

Alternatively, a representative point such as the weighted centroid of the object may be determined, and the processing of the present disclosure may be applied on the assumption that sound is generated from that representative point. In this case, the threshold value may be adjusted in accordance with information on the spatial extension of the sound source.

### [Examples of Direct Sound and Reflected Sound]

For example, direct sound is sound that has not been reflected by a reflection object, and reflected sound is sound that has been reflected by a reflection object. Direct sound may be sound that has arrived at the listener from a sound source without being reflected by a reflection objection, and reflected sound may be sound that has arrived at the listener from a sound source due to being reflected by a reflection object.

Furthermore, each of direct sound and reflected sound are not limited to being sound that has arrived at the listener, and may each be sound that will arrive at the listener. For example, direct sound may be sound that has been outputted from a sound source, or to put it differently, a sound source sound.

FIG. 25 is a diagram illustrating transmission and diffraction of a sound. As illustrated in FIG. 25, a direct sound may not arrive at the listener due to the presence of an obstacle object between the sound source object and the listener. In this case, a sound that arrives at the listener after being emitted from the sound source object and passing through the obstacle object may be considered to be a direct sound. Furthermore, a sound that arrives at the listener after being emitted from the sound source object and diffracted by the obstacle object may be considered to be a reflected sound.

Furthermore, the two sounds compared in the selection processing are not limited to a direct sound and a reflected sound based on sound emitted from one sound source. For example, the selection of a sound may be performed by performing a comparison between two reflected sounds based on a sound emitted from one sound source. In this case, the direct sound in the present disclosure may be understood to be the sound that reaches the listener first, and the reflected sound in the present disclosure may be understood to be the sound that reaches the listener afterward.

### [Example of Bitstream Structure]

The bitstream includes, for example, an audio signal and metadata. The audio signal is sound data in which sound is expressed, and indicates, e.g., information on the frequency and intensity of sound. Furthermore, metadata includes spatial information on the sound space, which is the space of the sound field.

For example, the spatial information is information on the space in which the listener who hears sound based on the audio signal is positioned. Specifically, the spatial information is information about a predetermined position (localization position) in the sound space (for example, a three-dimensional sound field) for localizing the sound image of the sound at that predetermined position, that is, for causing the listener to perceive the sound as arriving from a direction that corresponds to the predetermined position. The spatial information includes, for example, sound source object information and position information indicating the position of the listener.

The sound source object information is information on a sound source object that generates sound based on the audio signal. In other words, the sound source object information is information on an object (a sound source object) that reproduces the audio signal, and is information on a virtual sound source object located in a virtual sound space. Here, the virtual sound space may correspond to real-world space in which an object that generates sound is located, and the sound source object in the virtual sound space may correspond to an object that generates sound in a real-world space.

The sound source object information may indicate, for example, the position of the sound source object located in the sound space, the orientation of the sound source object, the directivity of the sound emitted by the sound source object, whether the sound source object belongs to an animate thing, whether the sound source object is a mobile body, and the like. For example, the audio signal is associated with one or more sound source objects indicated by the sound source object information.

The bitstream includes, for example, metadata (control information) and an audio signal.

The audio signal and metadata may be contained in a single bitstream or may be separately contained in a plurality of bitstreams. Furthermore, the audio signal and metadata may be contained in a single file or may be separately contained in a plurality of files.

The bitstream may exist for each sound source or may exist for each playback time. Even in a case in which bitstreams exist for each playback time, a plurality of bitstreams may be processed in parallel simultaneously.

Metadata may be assigned to each bitstream, or may be collectively assigned to a plurality of bitstreams as information for controlling the plurality of bitstreams. In this case, the plurality of bitstreams may share the metadata. Furthermore, the metadata may be assigned for each playback time.

When a plurality of bitstreams or a plurality of files exist, information indicating a relevant bitstream or a relevant file may be contained in one or more bitstreams or one or more files. Alternatively, information indicating a relevant bitstream or a relevant file may be contained in each of all of the bitstreams or each of all of the files.

Here, the relevant bitstream or the relevant file is, for example, a bitstream or file that may be used simultaneously during acoustic processing. Furthermore, a bitstream or file that collectively describes the information indicating the relevant bitstream or the relevant file may be included.

Here, the information indicating the relevant bitstream or the relevant file may be, for example, an identifier indicating a relevant bitstream or a relevant file. Furthermore, the information indicating the relevant bitstream or the relevant file may be, for example, a file name indicating a relevant bitstream or a relevant file, a uniform resource locator (URL), a uniform resource identifier (URI), or the like.

In this case, an obtainer identifies and obtains a relevant bitstream or a relevant file based on the information indicating the relevant bitstream or the relevant file. Furthermore, the information indicating the relevant bitstream or the relevant file may be included in a bitstream or a file, and the information indicating the relevant bitstream or the relevant file may be included in a different bitstream or a different file.

Here, the file including the information indicating the relevant bitstream or the relevant file may be, for example, a control file such as a manifest file used in content distribution.

Note that the entire metadata or part of the metadata may be obtained from somewhere other than a bitstream of the audio signal. For example, either one of metadata for controlling an acoustic sound or metadata for controlling a video may be obtained from somewhere other than from a bitstream, or both may be obtained from somewhere other than from a bitstream.

Furthermore, the metadata for controlling a video may be included in the bitstream obtained by three-dimensional sound reproduction system 1000. In this case, three-dimensional sound reproduction system 1000 may output the metadata for controlling a video to a display device that displays images or a stereoscopic video reproduction device that reproduces stereoscopic videos.

### [Examples of Information Included in Metadata]

The metadata may be information used for describing a scene expressed in the sound space. As used herein, the term "scene" refers to a collection of all elements that represent three-dimensional video and acoustic events in the sound space, which are modeled in three-dimensional sound reproduction system 1000 using metadata.

Thus, the metadata may include not only information for controlling acoustic processing, but also information for controlling video processing. The metadata may include only one among the information for controlling acoustic processing or the information for controlling video processing, or may include both.

Three-dimensional sound reproduction system 1000 generates virtual acoustic effects by performing acoustic processing on the audio signal using the metadata included in the bitstream and additionally obtained interactive listener position information. Early reflection processing, obstacle processing, diffraction processing, occlusion processing, and reverberation processing may be performed as acoustic effects, and other acoustic processing may be performed using the metadata. For example, an acoustic effect such as a distance decay effect, localization, or a Doppler effect may be added.

In addition, information for switching between on and off of all or one or more of the acoustic effects, and priority information regarding a plurality of processes for the acoustic effects may be added to the metadata.

As an example, the metadata includes information about a sound space including a sound source object and an obstacle object and information about a localization position for localizing the sound image at a predetermined position in the sound space (that is, causing the listener to perceive the sound as arriving from a predetermined direction).

Here, an obstacle object is an object that can influence a sound emitted by a sound source object and perceived by the listener, by, for example, blocking or reflecting the sound between the sound source object and the listener. The obstacle object can include an animal or a movable body such as a machine, in addition to a stationary object. The animal may be a person or the like.

Furthermore, when a plurality of sound source objects are present in a sound space, another sound source object may be an obstacle object for a certain sound source object. In other words, non-sound-emitting objects such as building materials or inanimate objects, and sound source objects that emit sound can both be obstacle objects.

The metadata includes information indicating all or part of the shape of the sound space, the shapes and positions of obstacle objects in the sound space, the shapes and positions of sound source objects in the sound space, and the position and orientation of the listener in the sound space.

The sound space may be either a closed space or an open space. Furthermore, the metadata may include information indicating the reflectance of each obstacle object that can reflect sound in the sound space. For example, the floor, walls, ceiling, and the like constituting the boundaries of the sound space can be included in the obstacle objects.

The reflectance is an energy ratio between a reflected sound and an incident sound, and may be set for each sound frequency band. Of course, the reflectance may be uniformly set, irrespective of the sound frequency band. Note that when the sound space is an open space, for example, parameters such as a uniformly set attenuation rate, diffracted sound, and early reflected sound may be used.

The metadata may include information other than reflectance as a parameter with regard to an obstacle object or a sound source object. For example, the metadata may include information on the material of an object as a parameter related to both of a sound source object and a non-sound-emitting object. Specifically, the metadata may include information such as the diffusivity, transmittance, and sound absorption rate.

For example, information on a sound source object may include information indicating, for example, sound volume, radiation characteristics (directivity), a reproduction condition, the number and types of sound sources of one object, and a sound source region of an object. The reproduction condition may determine whether a sound is, for example, a sound that is continuously being emitted or is emitted at an event. The sound source region of an object may be determined by the relative relationship between the position of the listener and the position of the object, or may be determined using the object as a reference.

For example, when the sound source region is determined by the relative relationship between the position of the listener and the position of the object, it is possible to cause the listener to perceive sound E from the right side of the object and sound F from the left side of the object, the right side and the left side being as seen from the listener.

Furthermore, when the sound source region is determined using the object as a reference, it is possible to fix what sound is emitted from what region of the object, using the object as a reference. For example, it is possible, when the listener sees the object from the front, to cause the listener to perceive a high sound from the right side of the object and a low sound from the left side of the object. Furthermore, it is possible, when the listener sees the object from the rear, to cause the listener to perceive a low sound from the right side of the object and a high sound from the left side of the object.

Metadata related to the space may include the time period until early reflected sound, the reverberation time period, the ratio of direct sound to diffuse sound, and the like. When the ratio between a direct sound and a diffuse sound is zero, the listener can be caused to perceive only the direct sound.

### [Brief Summary]

Here, the present embodiment is briefly summarized.

When the relationship between a direct sound and a reflected sound is analyzed and the direct sound is the leading sound and the reflected sound is the lagging sound, if the relationship is such that the precedence effect occurs, i.e., if the reflected sound falls below the echo detection limit, the reflected sound is not perceived; thus, the auditory impact on the listener is small, even if the reflected sound is removed.

FIG. 26 is a diagram illustrating an example of the positional relationship between a listener and an obstacle object, according to the present embodiment. FIG. 27 is a diagram illustrating another example of the positional relationship between a listener and an obstacle object, according to the present embodiment. It should be noted that FIG. 26 has the same positional relationship as that illustrated in FIG. 9, and FIG. 27 has the same positional relationship as that shown in FIG. 10. Furthermore, FIG. 28 is an example of an echo detection limit threshold value according to the present embodiment. It should be noted that the echo detection limit threshold value shown in FIG. 28 is an example of the threshold value data shown in FIG. 12C and the like.

For example, comparing the positional relationship in FIG. 26 with the positional relationship in FIG. 27, the sound volume of the reflected sound heard by the listener at the positional relationship in FIG. 26 is lower than the sound volume of the reflected sound heard by the listener at the positional relationship in FIG. 27. This is because the path length until the reflected sound arrives in the positional relationship in FIG. 26 is longer than the path length until the reflected sound arrives in the positional relationship in FIG. 27.

Thus, when making the determination based solely on the sound volume of the reflected sound, the reflected sound illustrated in FIG. 26 has less auditory impact than the reflected sound illustrated in FIG. 27. However, comparing the arrival time of the reflected sound at the listening position illustrated in FIG. 26 with the arrival time of the reflected sound at the listening position illustrated in FIG. 27, the reflected sound arrives later in the case illustrated in FIG. 26.

Therefore, when the determination is made in terms of the echo detection limit, as illustrated in FIG. 28, the reflected sound illustrated in FIG. 27 is below the echo detection limit and is thus not perceived by the listener as a reflected sound, while the reflected sound illustrated in FIG. 26 is above the echo detection limit and is thus perceived by the listener as a reflected sound.

In the present embodiment, the amount of computation involved in processing reflected sounds is reduced by utilizing this to determine the auditory importance of reflected sounds, and not reproducing reflected sounds that are unimportant.

The above description is a brief summary of the present embodiment.

Further consideration can be made as follows.

As described above, when the direct sound is regarded as a leading sound and the reflected sound is regarded as a lagging sound, and the relationship is such that the precedence effect occurs, the processing related to the reflected sound can be reduced, by moving the sound image position of the reflected sound to the position of the direct sound and combining (merging) the audio signal indicating the reflected sound and the audio signal indicating the direct sound into one audio signal. Furthermore, in such a case, even when using one audio signal obtained by the merging, this rarely causes the listener to feel a sense of incongruity.

Here, consideration is given to the time difference between the arrival of a direct sound and a reflected sound. The arrival time difference is shorter in the case of the positional relationship illustrated in FIG. 27 than in the positional relationship illustrated in FIG. 26. For example, a case in which the precedence effect does not occur in the configuration illustrated in FIG. 26 and the precedence effect does occur in the configuration illustrated in FIG. 27 is examined. In this case, as illustrated in FIG. 27, the listener perceives the sound image position of the reflected sound as if it had moved to the sound image position of the direct sound.

Making use of this fact, when the condition that the precedence effect occurs is met, the amount of computation related to processing of the reflected sound can be reduced by bundling the direct sound and the reflected sound, i.e., by generating one audio signal (merged audio signal) indicating one combined sound (merged sound). At this time, the sound volume of the combined sound is a sound volume obtained adding the sound volume of the direct sound and the sound volume of the reflected sound.

FIG. 29 is a diagram illustrating an example of movement of a sound image position of the reflected sound in the positional relationship illustrated in FIG. 27. When the precedence effect occurs under the conditions illustrated in FIG. 27, processing in which the sound image position of the reflected sound is moved to the sound image position of the direct sound, and the sound volume of the direct sound is increased by an amount corresponding to the sound volume of the reflected sound is performed, as illustrated in FIG. 29. As a result, the processing related to the reflected sound can be reduced.

Incidentally, in processing in which a merged audio signal is generated exclusively when the precedence effect occurs, the following issues may occur. A description is provided with reference to FIG. 30 to FIG. 32.

FIG. 30 is a diagram illustrating an example in which a direct sound and an indirect sound arrive at the listener from the same direction. In FIG. 30, the indirect sound is a reflected sound reflected by the wall.

FIG. 31 is a diagram illustrating an example in which direct sounds and indirect sounds arrive at the listener from each of one sound source (sound source 101) and another sound source (sound source 102). The one sound source (sound source 101) and the other sound source (sound source 102) emit different types of sounds. For example, the one sound source (sound source 101) emits a sound representing a dog's bark, while the other sound source (sound source 102) emits the sound of a vehicle driving. As illustrated in FIG. 31, the indirect sound (reflected sound) from one sound source (sound source 101) and the direct sound from the other sound source (sound source 102) arrive at the listener from the same direction.

FIG. 32 is a diagram illustrating an example in which a transmitted sound and a diffracted sound emitted from one sound source arrive at a listener. In FIG. 32, the transmitted sound is the leading sound, and the diffracted sound, which is an indirect sound, is the lagging sound.

In the examples illustrated in FIG. 30 to FIG. 32, both the direct sound and the indirect sound arrive at the listener from the same direction or approximately the same direction. In such cases, it should be possible to bundle the direct sound and the indirect sound, i.e., to perform processing to merge the audio signal indicating the indirect sound and the audio signal indicating the direct sound into one audio signal. This is because even when such processing is performed, it rarely causes the listener to feel a sense of incongruity, and because the processing related to the reflected sound can be reduced.

However, the conditions for the precedence effect alone may not be sufficient to determine whether the processing for merging should be performed.

As a case in which a determination cannot be made, in the example illustrated in FIG. 30, there may be a case in which the time difference between the arrival of the direct sound and the arrival of the indirect sound (reflected sound) is either too short or too long, failing to meet the conditions for the precedence effect to occur. Furthermore, as a case in which a determination cannot be made, in the example illustrated in FIG. 31, there may be a case in which the indirect sound and the direct sound are not similar to each other, that is, a case in which the indirect sound does not originate from the direct sound. Furthermore, as a case in which a determination cannot be made, in the example illustrated in FIG. 32, there may be a case in which the sound volume of the leading sound is lower than the sound volume of the lagging sound.

Since the precedence effect does not occur in these cases, the above processing, in which a merged audio signal is generated only when the precedence effect occurs, do not allow for generation of a merged audio signal. That is, the processing related to the reflected sound cannot be reduced. In other words, in such an audio signal processing method, a problem in which the amount of computation and the computational load cannot be reduced may occur.

Therefore, the following is a more detailed description of an audio signal processing method that is able to reduce the amount of computation and the computational load in a sound space.

### [Embodiment 2]

Embodiment 2 is described below. The description below is centered on the points of difference from Embodiment 1, and descriptions of points in common are omitted or simplified.

### [Configuration of Renderer]

First, the configuration of renderer 2300 according to the present embodiment is described. FIG. 33 is a block diagram illustrating a configuration example of renderer 2300 according to the present embodiment.

Renderer 2300 includes analyzer 2301, selector 2302, and reproducer 2303. It should be noted that the audio signal processing device according to the present embodiment is an example of a decoding device. The decoding device includes a decoder, and the decoder includes renderer 2300. In other words, it can be stated that the audio signal processing device according to the present embodiment includes analyzer 2301, selector 2302, and reproducer 2303. Renderer 2300 applies acoustic processing to sound data included in the input signal, and outputs the result.

Similarly to Embodiment 1, the input signal includes, for example, spatial information, sensor information, and sound data. The spatial information also includes physical information such as reflection coefficients, transmission coefficients, and diffraction coefficients of non-emitting objects (obstacle objects).

It should be noted that in the present embodiment, mainly reflected sound, which is an example of indirect sound, is used for description, but the same processing is performed even if indirect sound other than reflected sound is used. Furthermore, examples of indirect sound include reflected sound, diffracted sound, and the like.

Analyzer 2301 may be able to perform all of the processing or some of the processing performed by analyzer 1301 according to Embodiment 1. Furthermore, similarly to analyzer 1301 according to Embodiment 1, analyzer 2301 performs analysis on the audio signal included in the input signal, as well as the spatial information received from spatial information managers 1201 and 1211. Analyzer 2301 thus calculates the information necessary to generate direct sound and reflected sound with reproducer 2303, as well as the information necessary to select whether to generate reflected sound. The method by which analyzer 2301 calculates these items of information is as described in Embodiment 1.

Analyzer 2301 also performs analysis processing on the input signal, as performed by analyzer 1301 according to Embodiment 1, in S101 of FIG. 8. In other words, analyzer 2301 analyzes the input signal input to the audio signal processing device according to the present embodiment to detect direct sound and reflected sound that may be generated in the sound space.

It should be noted that in the present embodiment, for example, indirect sound (more specifically, reflected sound) is an example of the first sound, and direct sound is an example of the second sound. The first sound and the second sound are different from each other.

When direct sound and reflected sound are detected, analyzer 2301 creates an audio signal indicating the reflected sound and an audio signal indicating the direct sound, based on the spatial information and the sound data.

More specifically, analyzer 2301 creates an audio signal indicating reflected sound and an audio signal indicating direct sound based on: the position information of the sound source objects, the position information of the non-sound emitting objects (obstacle objects), and the position information and physical information of the listener that are included in the spatial information; and the sound data.

In other words, analyzer 2301 creates audio signals generated in the virtual space, based on the spatial information and the sound data. Here, an audio signal (a first audio signal) indicating the first sound and an audio signal (a second audio signal) indicating the second sound are created. In the present embodiment, the first audio signal corresponds to an audio signal indicating reflected sound, and the second audio signal corresponds to an audio signal indicating direct sound.

Furthermore, the audio signals created by analyzer 2301 are each assigned attribute information that identifies the attributes of that audio signal. That is, analyzer 2301 creates audio signals that include such attribute information. Analyzer 2301 also creates attribute information. An audio signal including attribute information is created for each sound generated in the virtual space.

As described above, the first sound (reflected sound (indirect sound)) and the second sound (direct sound) are not limited to being indicated by audio signals. The attribute of the audio signal may include information indicating whether the audio indicated by the audio signal is the first sound (reflected sound (indirect sound)) or the second sound (direct sound).

An audio signal for which the attribute includes information indicating reflected sound (indirect sound) may be described as an audio signal indicating reflected sound (indirect sound), and an audio signal for which the attribute includes information indicating direct sound may be described as an audio signal indicating direct sound.

The first audio signal is an audio signal including first attribute information. The first attribute information is information that identifies the attribute of the first audio signal. The attribute may include information indicating the first sound. The second audio signal is an audio signal including second attribute information. The second attribute information is information that identifies the attribute of the second audio signal. The attribute may include information indicating the second sound.

Furthermore, the attribute information may include information necessary to radiate the audio signal into the sound space, such as, for example, gain information, gain characteristic information for each frequency bandwidth, position information, directivity information, and the like. In other words, the relevant necessary information may be retained in the attribute information. Furthermore, attribute information may be tied to the audio signal as metadata. The gain characteristics for each frequency bandwidth of the audio signal included in the attribute information may be identified based on, for example, the spatial information included in the input information. Information indicating frequency characteristics that indicate auditory sensitivity may be identified based on, for example, the spatial information included in the input information, especially as information tied to the avatar of the listener.

Sound that directly reaches the listener's head from one sound source is direct sound, and sound that reaches the listener's head after being output from that one sound source and then reflected by a non-emitting object or diffracted by a non-emitting object is indirect sound (reflected sound or diffracted sound).

It should be noted that in the present embodiment, analyzer 2301 creates an audio signal indicating a reflected sound (indirect sound) and an audio signal indicating the direct sound associated with that reflected sound (indirect sound).

Furthermore, a direct sound associated with an indirect sound means a direct sound that originates from the same sound source as that indirect sound. An indirect sound associated with a direct sound means an indirect sound that originates from the same sound source as that direct sound. Furthermore, a reflected sound is a sound resulting from the direct sound associated with that reflected sound being reflected by a reflector.

An audio signal indicating a reflected sound (indirect sound) includes information indicating an audio signal for the direct sound associated with that reflected sound (indirect sound).

Furthermore, in the present embodiment, analyzer 2301 also creates an audio signal indicating reflected sound (indirect sound) and an audio signal indicating direct sound originating from a sound source different from that of the reflected sound (indirect sound). That is, analyzer 2301 creates an audio signal indicating a reflected sound (indirect sound) originating from one sound source, and also creates an audio signal indicating a direct sound originating from another sound source.

Analyzer 2301 may cause the created audio signal to be stored in memory included in analyzer 2301. Furthermore, analyzer 2301 also creates a plurality of audio signals and causes the plurality of audio signals to be stored in the memory.

Furthermore, as in Embodiment 1, analyzer 2301 may calculate, for each of the direct sound and reflected sound, values related to: the path until arriving at the listening position; the time period taken until arrival; the sound volume at arrival; and the like. Similarly, analyzer 2301 may calculate information indicating the relationship between the direct sound and the reflected sound, such as, for example, a value related to the time difference between when the direct sound arrives and when the reflected sound arrives (the time difference between the direct sound and the reflected sound), and the like.

It should be noted that the reflected sound arrival time sound volume (lr) and the direct sound arrival time sound volume (ld) are examples of the arrival time sound volume and the like. The direct sound arrival time sound volume (ld) refers to the sound volume of a direct sound at the time of arrival at the listening position, which is the location at which the listener is present in a virtual space. In other words, the direct sound arrival time sound volume (ld) is the sound volume of the direct sound at the listening position. The reflected sound arrival time sound volume (lr) refers to the sound volume of a reflected sound, which is an example of an indirect sound, at the time of arrival at the listening position. In other words, the reflected sound arrival time sound volume (lr) is the sound volume of the indirect sound (the sound volume of the reflected sound) at the listening position.

In the present embodiment, each of the audio signal indicating reflected sound and the audio signal indicating direct sound may include information indicating the sound volume, at the listening position, of the sound indicated by the audio signal. In other words, in the present embodiment, the audio signal indicating reflected sound includes information indicating the reflected sound arrival time sound volume (lr) as the sound volume of the indirect sound (sound volume of the reflected sound). Similarly, the audio signal indicating direct sound includes information indicating the direct sound arrival time sound volume (ld) as the sound volume of the direct sound.

More specifically, the first attribute information includes first sound volume information indicating the reflected sound arrival time sound volume (lr) as the sound volume of the first sound, and the second attribute information includes second sound volume information indicating the direct sound arrival time sound volume (ld) as the sound volume of the second sound.

It should be noted that the audio signal indicating reflected sound may also include information indicating the sound volume of the indirect sound (sound volume of the reflected sound) and the sound volume of the direct sound associated with that reflected sound. Similarly, the audio signal indicating direct sound may include information indicating the sound volume of the direct sound and the sound volume of the indirect sound (sound volume of the reflected sound) associated with that direct sound.

Furthermore, analyzer 2301 creates first position information and second position information based on: the position information of the sound source objects, the position information of the non-sound-emitting objects (obstacle objects), and the position information and physical information of the listener that are included in the spatial information; and the sound data.

The first position information is information that indicates the position of the first sound, that is, for localizing the sound image of the first sound. The second position information is information that indicates the position of the second sound, that is, for localizing the sound image of the second sound.

In the present embodiment, the first attribute information includes the first position information, and the second attribute information includes the second position information.

Selector 2302 may be able to perform all of the processing or some of the processing performed by selector 1302 according to Embodiment 1. Furthermore, selector 2302 determines whether the output signal based on the audio signal created by analyzer 2301 is to be output (reproduced) by reproducer 2303. That is, selector 2302 first determines whether to merge the plurality of audio signals (e.g., the first audio signal and the second audio signal) created by analyzer 2301, and when it is determined that the plurality of audio signals are to be merged, selector 2302 generates a merged audio signal by merging these audio signals. The merged audio signal generated is output by reproducer 2303.

Selector 2302 has obtainer 2302a, determiner 2302b, and merger 2302c.

Obtainer 2302a obtains an audio signal that includes attribute information and was created by analyzer 2301 and stored in the memory of analyzer 2301. Obtainer 2302a obtains, for example, the first audio signal and the second audio signal. Furthermore, obtainer 2302a also obtains values related to the time difference between the direct sound and the reflected sound calculated by analyzer 2301.

Determiner 2302b calculates the first arrival direction from which the first sound (reflected sound) arrives at the listener position that is the position at which the listener is located. Determiner 2302b calculates the second arrival direction from which the second sound (direct sound) arrives at the listening position. Determiner 2302b calculates the reflected sound arrival direction as the first arrival direction and the direct sound arrival direction as the second arrival direction, using the method described in step S231 in FIG. 23 of Embodiment 1.

Then, determiner 2302b determines whether to merge the first audio signal obtained and the second audio signal obtained, based on an indicator corresponding to the first arrival direction and second arrival direction calculated.

Merger 2302c generates a merged audio signal by merging the first audio signal and the second audio signal, when determiner 2302b determines that the first audio signal and the second audio signal are to be merged. In this case, merger 2302c outputs the merged audio signal generated to reproducer 2303.

Furthermore, merger 2302c skips generating a merged audio signal, when it is determined that the first audio signal and the second audio signal are not to be merged. In this case, merger 2302c outputs the first audio signal and the second audio signal to reproducer 2303.

Furthermore, the merged audio signal is a signal indicating the merged sound obtained by combining the first sound and the second sound. The sound volume of the merged sound is a sound volume obtained by adding the first sound volume and the second sound volume. Furthermore, when the first sound is a reflected sound that is a sound indicating a dog's bark and the second sound is a direct sound that is the sound of a vehicle driving, the merged sound is a sound obtained by combining the sound indicating the dog's bark and the sound of the vehicle driving.

Reproducer 2303 may be able to perform all of the processing or some of the processing performed by reproducer 1303 according to Embodiment 1. Furthermore, reproducer 2303 obtains the merged audio signal, the first audio signal, and the second audio signal output from selector 2302 (more specifically, merger 2302c), and outputs an output signal based on each of the merged audio signal, the first audio signal, and the second audio signal obtained.

Reproducer 2303 generates an output signal based on each of the merged audio signal, the first audio signal, and the second audio signal obtained by performing processing such as binaural filter processing on each of the audio signals, and then outputs the output signals. Binaural filter processing is realized, for example, by performing processing (for example, convolution processing) in which a head-related transfer function is applied to each of the merged audio signal, the first audio signal, and the second audio signal obtained. In the present embodiment, for example, the output signal based on the merged audio signal is generated by applying the head-related transfer function to the merged audio signal.

Furthermore, reproducer 2303 may generate an output signal based on each of the merged audio signal, the first audio signal, and the second audio signal output from selector 2302 by performing both binaural filter processing and diffusion filter processing on each of these audio signals, and then output the output signals. The diffusion filter processing is, for example, processing that improves the realism of merged sound by diffusing the merged sound indicated by the merged audio signal in the merged audio signal obtained. Furthermore, the diffusion filter processing is processing in which a filter is used to simulate the auditory intensity of the diffusion of the merged sound indicated by the merged audio signal obtained (i.e., to simulate the auditory intensity of the sound diffusion as perceived by the listener). Finite impulse response filters and/or infinite impulse response filters are used in the diffusion filter processing.

Hereinafter, an example of the operation of the audio signal processing method performed by the audio signal processing device according to the present embodiment (more specifically, renderer 2300) is described.

### [Operation Example 1 of Renderer]

FIG. 34 is a flowchart illustrating Operation Example 1 of the audio signal processing device according to the present embodiment. FIG. 34 illustrates the processing performed mainly by renderer 2300 included in the audio signal processing device according to the present embodiment. It should be noted that here, descriptions of common points with FIG. 8 according to Embodiment 1 are omitted or simplified.

In this operation example, the first sound is an indirect sound (more specifically, a reflected sound), and the second sound is a direct sound.

First, analyzer 2301 performs analysis processing to analyze the input signal (S101a). For example, analyzer 2301 creates a plurality of first audio signals and a plurality of second audio signals, and stores the plurality of first audio signals created and the plurality of second audio signals created in the memory of analyzer 2301.

Selector 2302 determines whether to merge the first audio signal and the second audio signal, and when the merging is determined to be performed, generates and outputs a merged audio signal (S102a).

Reproducer 2303 obtains the merged audio signal output from selector 2302 and outputs an output signal that is based on the merged audio signal obtained (S103a).

The processing performed by selector 2302 and reproducer 2303 is described in greater detail with reference to FIG. 35.

FIG. 35 is a flowchart illustrating an operation example of processing performed by selector 2302 and reproducer 2303 in Operation Example 1 according to the present embodiment. It should be noted that here, descriptions of common points with FIG. 14 according to Embodiment 1 are omitted or simplified.

First, selector 2302 specifies a reflected sound and a direct sound detected by analyzer 2301 (S501). In other words, obtainer 2302a of selector 2302 specifies one first audio signal among the plurality of first audio signals created by analyzer 2301 and stored in the memory, and obtains the first audio signal specified. Furthermore, obtainer 2302a specifies a second audio signal among the plurality of second audio signals created by analyzer 2301 and stored in the memory, and obtains the second audio signal specified.

Determiner 2302b of selector 2302 calculates the first arrival direction (the reflected sound arrival direction) and calculates the second arrival direction (the direct sound arrival direction). More specifically, determiner 2302b calculates the reflected sound arrival direction for the first audio signal obtained and calculates the direct sound arrival direction for the second audio signal obtained.

Determiner 2302b determines whether to merge the first audio signal obtained and the second audio signal obtained, based on an indicator corresponding to the first arrival direction and second arrival direction calculated. Determiner 2302b performs the following processing as an example.

Determiner 2302b calculates arrival angle δ between the reflected sound and the direct sound (S502). That is, determiner 2302b calculates arrival angle δ, which is the angle formed between the first arrival direction and the second arrival direction. This arrival angle δ is one example of the indicator.

Here, the indicator (arrival angle δ) is described.

As described in Embodiment 1, the orientation information of a sound source object and the orientation information of a listener may each be expressed in terms of azimuth (yaw) and elevation (pitch). Therefore, arrival angle δ, which is one example of an indicator, may also be expressed in terms of azimuth (yaw) and elevation (pitch). The indicators according to the present embodiment are indicators consisting of the azimuth axis (yaw) and the elevation axis (pitch), that is, two mutually perpendicular axes.

Determiner 2302b compares arrival angle δ calculated and difference limen T for arrival angle δ. Difference limen T for arrival angle δ represents the minimum angle at which a listener can perceive that the sound image has moved, when the sound image has moved. A well-known value (e.g., FIG. 2.26 of NPL 2) may be used as difference limen T.

Difference limen T may be set, in advance, to a predetermined value before the operation example is performed. This difference limen T (the predetermined value) may be, for example, stored in the memory of analyzer 2301, and obtainer 2302a obtains difference limen T stored in the memory.

Then, determiner 2302b determines whether to merge the first audio signal and the second audio signal obtained, based on an indicator corresponding to the first arrival direction and second arrival direction calculated. That is, determiner 2302b determines whether arrival angle δ based on the first arrival direction and the second arrival direction is smaller than difference limen T (S503). Determiner 2302b thus determines whether to merge the first audio signal and the second audio signal.

When arrival angle δ is smaller than difference limen T ("Yes" in S503), determiner 2302b determines that the first audio signal and the second audio signal are to be merged. Then, merger 2302c combines (merges) the reflected sound (first sound) and the direct sound (second sound) (S504). That is, merger 2302c generates a merged audio signal by merging the first audio signal and the second audio signal. Merger 2302c outputs the merged audio signal generated to reproducer 2303. It should be noted that in this case, merger 2302c may perform processing to invalidate the pre-merge first audio signal and second audio signal. The invalidated first audio signal and second audio signal are not output by reproducer 2303.

Then, reproducer 2303 reproduces the combined sound (merged sound) (S505). That is, reproducer 2303 obtains the merged audio signal output from selector 2302 and outputs an output signal that is based on the merged audio signal obtained. Furthermore, more specifically, reproducer 2303 outputs an output signal generated by applying a head-related transfer function to the merged audio signal.

When arrival angle δ is greater than or equal to difference limen T ("No" in S503), determiner 2302b determines that the first audio signal and the second audio signal are not to be merged. Merger 2302c outputs the first audio signal and the second audio signal to reproducer 2303.

Reproducer 2303 reproduces both reflected sound and direct sound (S506). That is, reproducer 2303 obtains the first audio signal and the second audio signal output from selector 2302, and outputs an output signal that is based on the first audio signal obtained and an output signal that is based on the second audio signal obtained. Furthermore, more specifically, reproducer 2303 outputs an output signal generated by applying a head-related transfer function to the first audio signal, and outputs an output signal generated by applying a head-related transfer function to the second audio signal.

Here, a set of a first sound (reflected sound) indicated by one first audio signal and a second sound (direct sound) indicated by one second audio signal, selected from a plurality of first audio signals and a plurality of second audio signals created by analyzer 2301 and stored in the memory, is defined as one first combination. Selector 2302 determines whether the processing of step S501 to step S506 has been performed on all first combinations (S507). That is, selector 2302 determines whether the processing of steps S501 to S506 has been performed on the first audio signal and the second audio signal, which indicate the first sound and the second sound, respectively, for each set of all first combinations.

When the result in step S507 is "No", the processing of step S501 is performed again. When the result in Step S507 is "Yes", the operation ends.

### [Operation Example 2 of Renderer]

In Operation Example 2, the same processing as in Operation Example 1 is performed, except that the processing shown in FIG. 36 is performed instead of the processing shown in FIG. 35.

FIG. 36 is a flowchart illustrating an operation example of processing performed by selector 2302 and reproducer 2303 in Operation Example 2 according to the present embodiment. It should be noted that here, descriptions of common points with Operation Example 1 according to Embodiment 2 are omitted or simplified.

In Operation Example 2, step S101a shown in FIG. 34 is performed, as in Operation Example 1.

As illustrated in FIG. 36, selector 2302 specifies a direct sound detected by analyzer 2301 (S501a). In other words, obtainer 2302a of selector 2302 specifies a second audio signal among the plurality of second audio signals created by analyzer 2301 and stored in the memory, and obtains the second audio signal specified.

Determiner 2302b of selector 2302 calculates the second arrival direction (the direct sound arrival direction) (S508).

First, selector 2302 specifies a reflected sound detected by analyzer 2301 (S501aa). In other words, obtainer 2302a of selector 2302 specifies one first audio signal among the plurality of first audio signals created by analyzer 2301 and stored in the memory, and obtains the first audio signal specified.

Determiner 2302b of selector 2302 calculates the first arrival direction (the reflected sound arrival direction) (S509).

Determiner 2302b calculates arrival angle δ between the reflected sound and the direct sound (S502). That is, determiner 2302b calculates arrival angle δ, which is the angle formed between the first arrival direction and the second arrival direction.

Determiner 2302b identifies difference limen T for arrival angle δ with respect to the direct sound arrival direction (S509a). Here, determiner 2302b identifies difference limen T corresponding to arrival angle δ with respect to the direct sound arrival direction (the second arrival direction).

Here, a case in which the direct sound arrives from a direction such as above, behind, below, to the right, or to the left of the listener is examined. Difference limen T for arrival angle δ in this case may be determined according to that direction. Here, a database of difference limens T for arrival angles δ, defined in advance for each direct sound arrival direction, is stored in the memory of analyzer 2301. Determiner 2302b identifies difference limen T corresponding to the second arrival direction calculated.

In this database, one direct sound arrival direction and one difference limen T value are defined (determined) to correspond one-to-one. For example, determiner 2302b refers to the database to select the difference limen T value that corresponds one-to-one with the direct sound arrival direction (the second arrival direction), extracts the value selected, and identifies the value extracted as the difference limen T value.

A database of difference limens T for arrival angles δ, defined in advance for each direct sound arrival direction, may be established based on actual measurements from experiments with human subjects.

On the other hand, when the device or service in which this technique is implemented includes a database of head-related transfer functions (so-called head-related transfer functions (HRTFs) in the Spatially Oriented Format for Acoustics (SOFA)), difference limen T for arrival angle δ may be determined for each direction by means of calculation processing consistent with the HRTFs in SOFA. The method is described below.

FIG. 37 is a diagram illustrating head-related transfer functions (HRTFs) in the Spatially Oriented Format for Acoustics (SOFA), according to the present embodiment. FIG. 38 is a diagram illustrating a cone for illustrating the relationship between a position for which an HRTF is defined and a listening position, according to the present embodiment.

In FIG. 37, the listener is positioned at the center of a celestial sphere, and a plurality of points are arranged on the surface of this celestial sphere. One HRTF is assigned to (positioned on) the position of each of the plurality of points.

FIG. 38 shows a cone with the position of the listener (listening position) at the vertex, the direct sound arrival direction as the direction of a perpendicular line, and the angle formed between the perpendicular line and the generatrix being defined as γ.

When such a cone is applied to the HRTFs in SOFA, the maximum γ for which there are not K or more HRTFs defined within that cone is defined as difference limen T for arrival angle δ in the direct sound arrival direction. Considering the meaning of difference limen T, it is ideal to set K = 1. However, in practice, setting N to a somewhat large value (such as K = 10) allows difference limen T to be represented as a large value. This increases the opportunities for combining direct sounds and reflected sounds, thereby enabling a reduction in the amount of computation. Such a database may be used in step S509a.

Once more, a description is provided with reference to FIG. 36. Determiner 2302b compares arrival angle δ calculated and difference limen T for arrival angle δ identified.

Determiner 2302b determines whether arrival angle δ based on the first arrival direction and the second arrival direction is smaller than difference limen T (S503). Determiner 2302b thus determines whether to merge the first audio signal and the second audio signal.

When arrival angle δ is smaller than difference limen T ("Yes" in S503), determiner 2302b determines that the first audio signal and the second audio signal are to be merged. Merger 2302c combines (merges) the reflected sound (first sound) and the direct sound (second sound) (S504).

Reproducer 2303 reproduces the combined sound (merged sound) (S505).

When arrival angle δ is greater than or equal to difference limen T ("No" in S503), determiner 2302b determines that the first audio signal and the second audio signal are not to be merged. Merger 2302c outputs the first audio signal and the second audio signal to reproducer 2303.

Reproducer 2303 reproduces both reflected sound and direct sound (S506).

Selector 2302 determines whether the processing of step S501aa to step S506 has been performed on all of the plurality of first audio signals created by analyzer 2301 and stored in the memory. That is, selector 2302 determines whether the processing of step S501aa to step S506 has been performed on all reflected sounds indicated by the plurality of first audio signals created by analyzer 2301 and stored in the memory (S507a).

When the result in step S507a is "No", the processing of step S501aa is performed again. When the result in Step S507a is "Yes", the following processing is further performed.

Selector 2302 determines whether the processing of step S501a to step S507a has been performed on all of the plurality of second audio signals created by analyzer 2301 and stored in the memory. That is, selector 2302 determines whether the processing of step S501a to step S507a has been performed on all direct sounds indicated by the plurality of second audio signals created by analyzer 2301 and stored in the memory (S507aa).

When the result in step S507aa is "No", the processing of step S501a is performed again. When the result in Step S507aa is "Yes", the operation ends.

### [Operation Example 3 of Renderer]

In Operation Example 3, the same processing as in Operation Example 1 is performed, except that the processing shown in FIG. 39 is performed instead of the processing shown in FIG. 35.

FIG. 39 is a flowchart illustrating an operation example of processing performed by selector 2302 and reproducer 2303 in Operation Example 3 according to the present embodiment. It should be noted that here, descriptions of common points with Operation Example 1 according to Embodiment 2 are omitted or simplified.

It should be noted that in Operation Example 1, the first sound was an indirect sound (more specifically, a reflected sound), and the second sound was a direct sound; however, in Operation Example 3, this is not necessarily the case. That is, in Operation Example 2, both the first sound and the second sound may be direct sounds, both the first sound and the second sound may be indirect sounds, the first sound may be a direct sound and the second sound may be an indirect sound, or the first sound may be an indirect sound and the second sound may be a direct sound.

In Operation Example 3, step S101a shown in FIG. 34 is performed, as in Operation Example 1.

Then, as shown in FIG. 39, selector 2302 specifies two sounds detected by analyzer 2301 (S501b). In other words, obtainer 2302a of selector 2302 specifies two audio signals among the plurality of first audio signals and the plurality of second audio signals created by analyzer 2301 and stored in the memory, and obtains the two audio signals specified.

It should be noted that the two sounds specified may be two first sounds, may be two second sounds, or may be one first sound and one second sound. That is, the two audio signals specified may be two first audio signals, may be two second audio signals, or may be one first audio signal and one second audio signal.

Determiner 2302b of selector 2302 calculates the arrival direction of each of the two sounds.

Determiner 2302b calculates arrival angle δ between the two sounds (S502b). That is, determiner 2302b calculates arrival angle δ, which is the angle formed between the arrival direction of one sound of the two sounds, and the arrival direction of the other sound.

For example, when the two sounds specified are two first sounds, determiner 2302b calculates arrival angle δ, which is the angle formed between the first arrival direction corresponding to one first sound and the first arrival direction corresponding to the other first sound. Furthermore, for example, when the two sounds specified are two second sounds, determiner 2302b calculates arrival angle δ, which is the angle formed between the second arrival direction corresponding to one second sound and the second arrival direction corresponding to the other second sound. Furthermore, for example, when the two sounds specified are one first sound and one second sound, determiner 2302b calculates arrival angle δ, which is the angle formed between the first arrival direction corresponding to one first sound and the second arrival direction corresponding to one second sound.

Determiner 2302b compares arrival angle δ calculated and difference limen T for arrival angle δ. In the present operation example, difference limen T determined as follows is used.

First, before the operation example is performed, a database indicating difference limen T values corresponding to respective sound arrival directions is stored in the memory of analyzer 2301. Determiner 2302b selects one sound from the two sounds specified. Determiner 2302b refers to the database to extract the value corresponding to the arrival direction of the one sound selected (S510) and determines the value extracted as the difference limen T value.

In the database, one sound arrival direction and one difference limen T value are defined (determined) to correspond one-to-one. For example, determiner 2302b refers to the database to select the difference limen T value that corresponds one-to-one with the first arrival direction, extracts the value selected, and determines the value extracted as the difference limen T value.

It should be noted that this is not intended to be limiting, and in the present operation example as well, a predetermined value may be defined in advance for difference limen T, before the present operation example is performed.

Determiner 2302b determines whether to merge the two audio signals, based on an indicator based on the arrival direction of each of the two sounds calculated. That is, determiner 2302b determines whether arrival angle δ based on the two arrival directions is smaller than difference limen T (S503b). Determiner 2302b thus determines whether to merge the two audio signals.

When arrival angle δ is smaller than difference limen T ("Yes" in S503b), determiner 2302b determines that the two audio signals are to be merged. Then, merger 2302c merges the two sounds (S504b). That is, merger 2302c generates a merged audio signal by merging the two audio signals. Merger 2302c outputs the merged audio signal generated to reproducer 2303. It should be noted that in this case, merger 2302c may perform processing to invalidate the two pre-merge audio signals. The two invalidated audio signals are not output by reproducer 2303.

When arrival angle δ is greater than or equal to difference limen T ("No" in S503b), determiner 2302b determines that the two audio signals are not to be merged. Merger 2302c outputs the two audio signals to reproducer 2303. The two sounds indicated by these two audio signals are sounds that have not been merged.

Here, a set of two sounds indicated by two audio signals selected from among the plurality of first audio signals and the plurality of second audio signals created by analyzer 2301 and stored in the memory is defined as one second combination. Selector 2302 determines whether the processing of step S501b to step S504b has been performed on all second combinations (S507b). That is, selector 2302 determines, for all second combinations, whether the processing of steps S501b to S504b has been performed on the two audio signals indicating the two sounds constituting the set.

When the result in step S507b is "No", the processing of step S501b is performed again. When the result in step S507b is "Yes", the following processing is performed.

Reproducer 2303 applies, to sounds that have not been merged and sounds obtained by the merging (the merged sounds) a head-related transfer function based on the arrival directions (S505b). More specifically, reproducer 2303 outputs an output signal generated by applying, to one of the two audio signals determined by determiner 2302b not to be merged, a head-related transfer function based on the sound arrival direction indicated by the one audio signal. Furthermore, reproducer 2303 outputs an output signal generated by applying, to the other one of the two audio signals determined by determiner 2302b not to be merged, a head-related transfer function based on the sound arrival direction indicated by the other audio signal.

That is, for example, when the two audio signals determined not to be merged are one first audio signal and one second audio signal, reproducer 2303 performs the following processing. Reproducer 2303 outputs an output signal generated by applying a head-related transfer function based on the first arrival direction to the first audio signal, and an output signal generated by applying a head-related transfer function based on the second arrival direction to the second audio signal.

Moreover, reproducer 2303 outputs an output signal generated by applying, to the merged audio signal generated by merger 2302c, a head-related transfer function that is based on the merged sound arrival direction from which the merged sound indicated by the merged audio signal arrives at the listening position.

Furthermore, reproducer 2303 may select the head-related transfer function to apply by, for example, using a database (e.g., HRIRs in SOFA) that indicates head-related transfer functions defined for respective sound arrival directions. In this database, one sound arrival direction and one head-related transfer function are defined (determined) to correspond one-to-one.

For example, reproducer 2303 may generate an output signal by referring to the database to select the head-related transfer function that corresponds one-to-one with the first arrival direction and applying the head-related transfer function selected to the first audio signal, and output the output signal. It should be noted that the processing is similarly performed for the second arrival direction and the merged sound arrival direction.

Here, the merged sound arrival direction used in step S505b is described. Furthermore, in the description regarding the merged sound arrival direction, the two sounds specified in step S501b are described as one first sound and one second sound.

Since one first sound and one second sound were specified in step S501b, obtainer 2302a obtains the first audio signal and the second audio signal.

As described above, the first attribute information included in the first audio signal obtained includes first position information indicating the position of the first sound and first sound volume information indicating the sound volume of the first sound. Furthermore, the second attribute information included in the second audio signal obtained includes second position information indicating the position of the second sound and second sound volume information indicating the sound volume of the second sound.

Merger 2302c determines the merged sound arrival direction from which the merged sound indicated by the merged audio signal arrives at the listening position, based on the first position information and the first sound volume information, and the second position information and the second sound volume information. A specific example is described with reference to FIG. 40.

FIG. 40 is a diagram for illustrating a merged sound arrival direction used in Operation Example 3 according to the present embodiment.

The first position information and second position information are information indicating the positions of the first sound and the second sound, respectively, in polar coordinates. For example, as illustrated in FIG. 40, the first position information indicates that the argument, in polar coordinates, of the position of the first sound is 135°, and the second position information indicates that the argument, in polar coordinates, of the position of the second sound is 45°. It should be noted that when the first position information and the second position information are expressed in polar coordinates, the argument of the respective sound corresponds to the arrival direction of that sound at the listener.

Furthermore, as illustrated in FIG. 40, the first sound volume information indicates that the sound volume of the first sound (the sound volume at the listening position) is 1.0, and the second sound volume information indicates that the sound volume of the second sound (the sound volume at the listening position) is 3.0.

Merger 2302c first determines the position of the merged sound as follows.

Merger 2302c regards the sound volume of the first sound indicated by the first sound volume information as a weight corresponding to the position of the first sound indicated by the first position information. Merger 2302c regards the sound volume of the second sound indicated by the second sound volume information as a weight corresponding to the position of the second sound indicated by the second position information. In this case, merger 2302c determines that the position of the merged sound is the position of the weighted centroid of the first sound and the second sound.

In other words, merger 2302c determines the position of the weighted centroid of the first sound and the second sound as the position of the merged sound (more specifically, the position at which the merged sound is generated). In FIG. 40, the position of the weighted centroid is calculated to have an argument (arrival direction) of 67.5°. Furthermore, since the sound volume of the merged sound is a sound volume obtained by adding the sound volume of the first sound and the sound volume of the second sound, the sound volume of the merged sound is calculated to be 4.0. Merger 2302c thus determines the position of the merged sound.

Then, merger 2302c determines the merged sound arrival direction by using the determined position of the merged sound, the position information of the avatar (listener) included in the input signal, and orientation information D1 of the avatar (listener). In other words, merger 2302c determines the direction from the determined position of the merged sound (the position of the weighted centroid of the first sound and the second sound) toward the listening position as the merged sound arrival direction.

Thus, in the present embodiment, merger 2302c determines the merged sound arrival direction based on the first position information and the first sound volume information, and the second position information and the second sound volume information.

Furthermore, in the above description, the sound volume was used to determine the position of the weighted centroid, but this is not intended to be limiting, and loudness may be used instead of the sound volume.

Then, in step S505b, reproducer 2303 outputs an output signal generated by applying, to the merged audio signal, a head-related transfer function that is based on the merged sound arrival direction.

It should be noted that in step S510, determiner 2302b may select one sound from among the two sounds specified, according to the following conditions. For example, when one of the two sounds specified is a direct sound, determiner 2302b selects the direct sound. For example, when both of the two sounds specified are either direct sounds or indirect sounds (reflected sounds), determiner 2302b selects the sound with the greater sound volume, the sound with the greater loudness, the sound whose arrival direction is stationary (that is, for which the sound source that emits the sound is not moving), or the sound whose arrival direction is closer to the front of the listener. Determiner 2302b may determine, as the difference limen T value, a value corresponding to the arrival direction of the merged sound obtained by merging the two sounds.

### [Operation Example 4 of Renderer]

In Operation Example 4, the same processing as in Operation Example 1 is performed, except that the processing shown in FIG. 41 is performed instead of the processing shown in FIG. 35.

FIG. 41 is a flowchart illustrating an operation example of processing performed by selector 2302 and reproducer 2303 in Operation Example 4 according to the present embodiment. It should be noted that here, descriptions of common points with Operation Example 3 according to Embodiment 2 are omitted or simplified.

In Operation Example 4, step S101a shown in FIG. 34 is performed, as in Operation Example 1.

Then, as shown in FIG. 41, selector 2302 specifies two sounds detected by analyzer 2301 (S501b).

Determiner 2302b of selector 2302 calculates the position at which the merged sound is generated when the two sounds specified are merged, and the arrival direction (merged sound arrival direction) from the position at which the merged sound is generated to the listening position.

It should be noted that the methods for calculating the position at which the merged sound is generated and the merged sound arrival direction are as described in Operation Example 3.

Furthermore, determiner 2302b calculates the arrival direction of each of the two sounds specified.

Determiner 2302b calculates the arrival angles (arrival angle δ1 and arrival angle δ2) between the merged sound when the two sounds are merged, and each of the two sounds specified (S502c). That is, determiner 2302b calculates arrival angle δ1, which is the angle formed between the merged sound arrival direction and the arrival direction of one sound of the two sounds specified, and calculates arrival angle δ2, which is the angle formed between the merged sound arrival direction and the arrival direction of the other sound of the two sounds specified.

Determiner 2302b compares arrival angles δ1 and δ2 calculated and difference limens T of the arrival angles. In the present operation example, difference limen T determined as follows is used.

A database indicating difference limen T values corresponding to respective sound arrival directions is stored in the memory of analyzer 2301. Determiner 2302b refers to the database to extract the value corresponding to the arrival direction (merged sound arrival direction) from the position at which the merged sound is generated when the two specified sounds are merged to the listening position (S511), and determines the value extracted as the difference limen T value.

Determiner 2302b determines whether to merge the two audio signals, based on an indicator based on the arrival direction of each of the two sounds calculated. That is, determiner 2302b determines whether arrival angle δ1 calculated is smaller than difference limen T and whether arrival angle δ2 calculated is smaller than difference limen T (S503c). Determiner 2302b thus determines whether to merge the two audio signals.

When arrival angle δ1 is smaller than difference limen T and arrival angle δ2 is smaller than difference limen T ("Yes" in S503c), determiner 2302b determines that the two audio signals are to be merged. Then, merger 2302c merges the two sounds (S504b).

When arrival angle δ1 is greater than or equal to difference limen T, or arrival angle δ2 is greater than or equal to difference limen T ("No" in S503c), determiner 2302b determines that the two audio signals are not to be merged.

Selector 2302 determines whether the processing of step S501b to step S504b has been performed on all second combinations (S507b).

When the result in step S507b is "No", the processing of step S501b is performed again. When the result in step S507b is "Yes", the following processing is performed.

Reproducer 2303 applies, to sounds that have not been merged and sounds obtained by the merging (the merged sounds) a head-related transfer function based on the arrival directions (S505b).

### [Operation Example 5 of Renderer]

In Operation Example 5, the same processing as in Operation Example 1 is performed, except that the processing shown in FIG. 42 is performed instead of the processing shown in FIG. 35.

FIG. 42 is a flowchart illustrating an operation example of processing performed by selector 2302 and reproducer 2303 in Operation Example 5 according to the present embodiment. It should be noted that here, descriptions of common points with Operation Examples 1 and 4 according to Embodiment 2 are omitted or simplified.

In Operation Example 5, step S101a shown in FIG. 34 is performed, as in Operation Example 1.

Selector 2302 specifies a reflected sound and a direct sound detected by analyzer 2301 (S501).

Determiner 2302b calculates arrival angle δ between the reflected sound and the direct sound (S502).

Determiner 2302b determines whether arrival angle δ based on the first arrival direction and the second arrival direction is smaller than difference limen T (S503). Difference limen T may be obtained by obtainer 2302a, similar to difference limen T for arrival angle δ in Operation Example 1.

When arrival angle δ is smaller than difference limen T ("Yes" in S503), merger 2302c combines (merges) the reflected sound (first sound) and the direct sound (second sound) (S504). It should be noted that in this case, merger 2302c may perform processing to invalidate the pre-merge first audio signal and second audio signal.

When arrival angle δ is greater than or equal to difference limen T ("No" in S503), determiner 2302b determines that the first audio signal and the second audio signal are not to be merged. Merger 2302c outputs the first audio signal and the second audio signal to reproducer 2303.

Selector 2302 determines whether the processing of step S501 to step S504 has been performed on all first combinations (S507).

When the result in step S507 is "No", the processing of step S501 is performed again. When the result in step S507 is "Yes", the following processing is performed.

Reproducer 2303 applies, to each of the direct sounds and the non-invalidated reflected sounds, the head-related transfer function based on the corresponding arrival directions (S505d). More specifically, reproducer 2303 outputs output signals generated by applying, to each second audio signal indicating a direct sound, the head-related transfer function based on the arrival direction of the second sound indicated by the second audio signal. Furthermore, reproducer 2303 outputs output signals generated by applying, to each first audio signal for which invalidation was not performed by merger 2302c, the head-related transfer function based on the arrival direction of the reflected sound indicated by that first audio signal.

Reproducer 2303 may use a database indicating head-related transfer functions based on respective sound arrival directions, as in Operation Example 3.

It should be noted that in Operation Example 5, reflected sounds were used; however, the same processing is performed when indirect sounds are used instead of reflected sounds.

### [Operation Example 6 of Renderer]

Operation Example 6 is similar to Operation Example 5, except that difference limen T is extracted as follows.

FIG. 43 is a flowchart illustrating an operation example of processing performed by selector 2302 and reproducer 2303 in Operation Example 6 according to the present embodiment. It should be noted that here, descriptions of common points with Operation Example 5 according to Embodiment 2 are omitted or simplified.

In Operation Example 5, step S101a shown in FIG. 34 is performed, as in Operation Example 1.

Step S501 and step S502 are performed.

In the present operation example, similarly to Operation Example 3, a database indicating difference limen T values corresponding to respective sound arrival directions is stored in the memory of analyzer 2301. Determiner 2302b refers to the database to extract the value corresponding to the arrival direction of the direct sound (S512) and determines the value extracted as the difference limen T value.

Difference limen T determined as described above is used, and step S503 is performed.

Step S504, step S507, and step S505d are performed.

It should be noted that a database is used in each of step S512 and step S505d. The threshold values indicated in the database used in step S512 and the head-related transfer functions indicated in the database used in step S505d may be stored in a common address region for each sound arrival direction.

### [Operation Example 7 of Renderer]

In Operation Example 7, the same processing as in Operation Example 1 is performed, except that the processing shown in FIG. 44 is performed instead of the processing shown in FIG. 35.

FIG. 44 is a flowchart illustrating an operation example of processing performed by selector 2302 and reproducer 2303 in Operation Example 7 according to the present embodiment. It should be noted that here, descriptions of common points with Operation Examples 1, 2, and 6 according to Embodiment 2 are omitted or simplified.

In Operation Example 7, step S101a shown in FIG. 34 is performed, as in Operation Example 1.

First, selector 2302 specifies a reflected sound detected by analyzer 2301 (S501aa). It should be noted that the reflected sound specified at this time (the first audio signal) may be described as the first reflected sound.

First, selector 2302 specifies a direct sound detected by analyzer 2301 (S501a).

Determiner 2302b calculates arrival angle δ between the reflected sound and the direct sound (S502).

In the present operation example, similarly to Operation Example 3, a database indicating difference limen T values corresponding to respective sound arrival directions is stored in the memory of analyzer 2301. Determiner 2302b refers to the database to extract the value corresponding to the reflected sound arrival direction or the value corresponding to the direct sound arrival direction (S513), and determines the value extracted as the difference limen T value.

Determiner 2302b determines whether arrival angle δ based on the first arrival direction and the second arrival direction is smaller than difference limen T (S503). In the present operation example, for example, the value corresponding to the reflected sound arrival direction is used as the difference limen T value.

When arrival angle δ is smaller than difference limen T ("Yes" in S503), determiner 2302b determines that the direct sound (the second sound) is to be combined (merged) (S514).

When arrival angle δ is greater than or equal to difference limen T ("No" in S503), determiner 2302b determines that the direct sound (second sound) is not to be combined (merged). In other words, determiner 2302b determines that the first audio signal and the second audio signal are not to be merged.

Selector 2302 determines whether the processing of step S501a to step S514 has been performed on all of the plurality of second audio signals created by analyzer 2301 and stored in the memory. That is, selector 2302 determines whether the processing of step S501a to step S514 has been performed on all direct sounds indicated by the plurality of second audio signals created by analyzer 2301 and stored in the memory (S515).

When the result in step S515 is "No", the processing of step S501a is performed again. When the result in Step S515 is "Yes", the following processing is further performed.

Merger 2302c combines the direct sound determined to be merged in step S514 with the reflected sound (the first reflected sound) specified in step S501aa (S516). That is, merger 2302c generates a merged audio signal by merging the second audio signal indicating the direct sound determined to be merged with the first audio signal indicating the first reflected sound. Merger 2302c outputs the merged audio signal generated to reproducer 2303. It should be noted that in this case, merger 2302c may perform processing to invalidate the pre-merge first audio signal.

It should be noted that here, when a plurality of direct sounds are determined to be merged, merger 2302c may perform the following processing, for example.

Merger 2302c may merge each of the plurality of direct sounds with the first reflected sound to generate a plurality of merged audio signals equal in number to the plurality of direct sounds. Furthermore, merger 2302c may merge the direct sound located closest to the first reflected sound, among the plurality of direct sounds, with the first reflected sound. Merger 2302c may merge the direct sound having the highest sound volume, among the plurality of direct sounds, with the first reflected sound. Merger 2302c may merge the direct sound whose sound emission position is stationary, among the plurality of direct sounds, with the first reflected sound. Merger 2302c may merge the direct sound for which the position most easily visible to the listener is the sound emission position, among the plurality of direct sounds, with the first reflected sound.

Selector 2302 determines whether the processing of step S501aa to step S516 has been performed on all of the plurality of first audio signals created by analyzer 2301 and stored in the memory. That is, selector 2302 determines whether the processing of step S501aa to step S516 has been performed on all reflected sounds indicated by the plurality of first audio signals created by analyzer 2301 and stored in the memory (S517).

When the result in step S517 is "No", the processing of step S501aa is performed again. It should be noted that when the processing of step S501aa is performed again, a reflected sound is specified again, and the reflected sound (the first audio signal) specified at this time is the second reflected sound.

When step S516 is further performed subsequently, merger 2302c merges the direct sound determined to be merged in S514 with the reflected sound (the second reflected sound) specified again in step S501aa. The same applies to processing the third time and thereafter.

When the result in step S517 is "Yes", step S505d is performed.

It should be noted that in Operation Example 7, reflected sounds were used; however, the same processing is performed when indirect sounds are used instead of reflected sounds.

It should be noted that in Operation Examples 3, 4, 6, and 7, difference limen T may be changed according to the following.

For example, difference limen T may be changed according to the listener's movement amount, that is, the amount of rotation of the listener's head.

When the head is rotating at high speed, the listener's perception is less affected by the merging of the first sound and the second sound, for example, compared to when the listener is stationary. Therefore, when the listener's movement amount is large, setting (determining) difference limen T to be a larger value compared to when the listener is stationary makes it possible to reduce the processing amount without compromising the listener's listening experience. The listener's movement amount may be obtained by sensors included in the audio signal processing device, or may be obtained by the audio signal processing device from an external sensor.

Furthermore, for example, difference limen T may be changed based on whether video is displayed.

When video is presented to the listener at the same time as the sound output, visual perception can support the perception of the arrival direction, even if the acoustic effects used to allow perception of the arrival direction are not precise. Therefore, by setting (determining) difference limen T to be a larger value when video is presented compared to when video is not presented, the processing amount can be reduced without compromising the listener's listening experience.

The following is a summary of the present embodiment.

The audio signal processing method according to the present embodiment is an audio signal processing method executed by an audio signal processing device. The audio signal processing method includes an obtaining step, a determining step, a merging step, and a reproducing step.

In the obtaining step, a first audio signal and a second audio signal are obtained. The first audio signal indicates a first sound and includes first attribute information identifying an attribute of the first audio signal. The second audio signal indicates a second sound and includes second attribute information identifying an attribute of the second audio signal. In the determining step, whether to merge the first audio signal obtained and the second audio signal obtained is determined, based on an indicator that is based on a first arrival direction and a second arrival direction. The first arrival direction is a direction from which the first sound arrives at a listening position that is a position at which a listener is present. The second arrival direction is a direction from which the second sound arrives at the listening position.

In the merging step, a merged audio signal is generated by merging the first audio signal and the second audio signal, when the first audio signal and the second audio signal are determined to be merged. In the reproducing step, an output signal that is based on the merged audio signal generated is output.

Whether the first audio signal and the second audio signal are to be merged is thus determined, based on the indicator that is based on the first arrival direction of the first sound and the second arrival direction of the second sound. When it is determined that the first audio signal and the second audio signal are to be merged, the output signal that is based on the merged audio signal is output in the reproducing step. When it is determined that the first audio signal and the second audio signal are not to be merged, an output signal based on the first audio signal and an output signal based on the second audio signal are output in the reproducing step. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

Furthermore, the indicator is, for example, arrival angle δ. When arrival angle δ is smaller than difference limen T, in the determining step, the first audio signal and the second audio signal are determined to be merged. When arrival angle δ is smaller than difference limen T, this corresponds to a case in which the first sound and the second sound arrive at the listener from the same direction or approximately the same direction. In this case, the first sound (the reflected sound) and the second sound (the direct sound) are bundled, that is, processing in which the first audio signal and the second audio signal are merged to generate a single merged audio signal is performed. Even when this processing is performed, this rarely causes the listener to feel a sense of incongruity. Furthermore, as described above, since the number of output signals to be output is reduced, it is possible to realize an audio signal processing method that can more appropriately reduce the amount of computation and the computational load.

In the audio signal processing method according to the present embodiment, the indicator is an indicator consisting of two axes orthogonal to each other.

This makes it possible to use a simplified indicator; that is, compared to a case of using a complex indicator, a large amount of computation and a heavy computational load are not required, thereby making it possible to realize an audio signal processing method that can reduce the amount of computation and the computational load.

In the audio signal processing method according to the present embodiment, the first attribute information included in the first audio signal obtained includes first position information indicating the position of the first sound and first sound volume information indicating the sound volume of the first sound. The second attribute information included in the second audio signal obtained includes second position information indicating the position of the second sound and second sound volume information indicating the sound volume of the second sound. In the merging step, the merged sound arrival direction from which the merged sound indicated by the merged audio signal arrives at the listening position is determined, based on the first position information and the first sound volume information, and the second position information and the second sound volume information.

This makes it possible, in the merging step, to determine the merged sound arrival direction, based on the first position information and the first sound volume information, and the second position information and the second sound volume information.

In the audio signal processing method according to the present embodiment, in the merging step, the sound volume of the first sound indicated by the first sound volume information is regarded as a weight corresponding to the position of the first sound indicated by the first position information. Furthermore, in the merging step, when the second sound volume indicated by the second sound volume information is regarded as a weight corresponding to the position of the second sound indicated by the second position information, the following processing is performed. In the merging step, the position of the merged sound is determined to be the position of the weighted centroid of the first sound and the second sound, and the direction from the position of the weighted centroid determined toward the listening position is determined as the merged sound arrival direction.

This makes it possible to determine the merged sound arrival direction based on the position of the weighted centroid of the first sound and the second sound, i.e., to easily determine the merged sound arrival direction. That is, since determining the merged sound arrival direction does not require a large amount of computation and a heavy computational load, it is possible to realize an audio signal processing method that can reduce the amount of computation and the computational load.

The audio signal processing method according to the present embodiment is an audio signal processing method executed by an audio signal processing device. The audio signal processing method includes an obtaining step, a merging step, and a reproducing step.

In the obtaining step, a first audio signal and a second audio signal are obtained. The first audio signal indicates a first sound and includes first attribute information identifying an attribute of the first audio signal. The second audio signal indicates a second sound and includes second attribute information identifying an attribute of the second audio signal. In the merging step, a merged audio signal is generated by merging the first audio signal obtained and the second audio signal obtained, when the first audio signal and the second audio signal are determined to be merged. In the reproducing step, an output signal that is based on the merged audio signal generated is output.

The first attribute information included in the first audio signal obtained includes first position information indicating the position of the first sound and first sound volume information indicating the sound volume of the first sound. The second attribute information included in the second audio signal obtained includes second position information indicating the position of the second sound and second sound volume information indicating the sound volume of the second sound. In the merging step, the merged sound arrival direction from which the merged sound indicated by the merged audio signal arrives at a listening position is determined, based on the first position information and the first sound volume information, and the second position information and the second sound volume information. The listening position is a position at which a listener is present.

Thus, when it is determined that the first audio signal and the second audio signal are to be merged, the output signal that is based on the merged audio signal is output in the reproducing step. When it is determined that the first audio signal and the second audio signal are not to be merged, an output signal based on the first audio signal and an output signal based on the second audio signal are output in the reproducing step. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

In the audio signal processing method according to the present embodiment, when the first audio signal and the second audio signal are determined to be merged, in the reproducing step, an output signal generated by applying, to the merged audio signal generated, a head-related transfer function that is based on the merged sound arrival direction determined is output.

This makes it possible to realize an audio signal processing method that allows the listener to hear a merged sound that has greater presence.

In the audio signal processing method according to the present embodiment, when the first audio signal and the second audio signal are determined not to be merged, in the reproducing step, an output signal generated by applying, to the first audio signal, a head-related transfer function that is based on the first arrival direction is output. Furthermore, in the reproducing step, an output signal generated by applying, to the second audio signal, a head-related transfer function that is based on the second arrival direction is output.

This makes it possible to realize an audio signal processing method that allows the listener to hear a first sound and a second sound that have greater presence.

A computer program according to the present embodiment is a computer program for causing a computer to execute the audio signal processing method described above.

This makes it possible for a computer to execute the above-described audio signal processing method, according to the computer program.

The audio signal processing device according to the present embodiment includes obtainer 2302a, determiner 2302b, merger 2302c, and reproducer 2303.

Obtainer 2302a obtains a first audio signal and a second audio signal. The first audio signal indicates a first sound and includes first attribute information identifying an attribute of the first audio signal. The second audio signal indicates a second sound and includes second attribute information identifying an attribute of the second audio signal. Determiner 2302b determines whether to merge the first audio signal obtained and the second audio signal obtained, based on an indicator that is based on a first arrival direction and a second arrival direction. The first arrival direction is a direction from which the first sound arrives at a listening position that is a position at which a listener is present. The second arrival direction is a direction from which the second sound arrives at the listening position.

Merger 2302c generates a merged audio signal by merging the first audio signal and the second audio signal, when the first audio signal and the second audio signal are determined to be merged. Reproducer 2303 outputs an output signal that is based on the merged audio signal generated.

Whether the first audio signal and the second audio signal are to be merged is thus determined, based on the indicator that is based on the first arrival direction of the first sound and the second arrival direction of the second sound. When it is determined that the first audio signal and the second audio signal are to be merged, reproducer 2303 outputs the output signal that is based on the merged audio signal. When it is determined that the first audio signal and the second audio signal are not to be merged, reproducer 2303 outputs an output signal based on the first audio signal and an output signal based on the second audio signal. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

Furthermore, the indicator is, for example, arrival angle δ. When arrival angle δ is smaller than difference limen T, determiner 2302b determines that the first audio signal and the second audio signal are to be merged. When arrival angle δ is smaller than difference limen T, this corresponds to a case in which the first sound and the second sound arrive at the listener from the same direction or approximately the same direction. In this case, the first sound (the reflected sound) and the second sound (the direct sound) are bundled, that is, processing in which the first audio signal and the second audio signal are merged to generate a single merged audio signal is performed. Even when this processing is performed, this rarely causes the listener to feel a sense of incongruity. Furthermore, as described above, since the number of output signals to be output is reduced, it is possible to realize an audio signal processing device that can more appropriately reduce the amount of computation and the computational load.

### [Embodiment 3]

Embodiment 3 is described below. The description below is centered on the points of difference from Embodiments 1 and 2, and descriptions of points in common are omitted or simplified.

### [Configuration of Renderer]

First, the configuration of renderer 3300 according to the present embodiment is described. FIG. 45 is a block diagram illustrating a configuration example of renderer 3300 according to the present embodiment.

Renderer 3300 includes analyzer 3301, selector 3302, and reproducer 3303. It should be noted that the audio signal processing device according to the present embodiment is an example of a decoding device. The decoding device includes a decoder, and the decoder includes renderer 3300. In other words, it can be stated that the audio signal processing device according to the present embodiment includes analyzer 3301, selector 3302, and reproducer 3303. Renderer 3300 applies acoustic processing to sound data included in the input signal, and outputs the result.

In Embodiment 2, a first audio signal and a second audio signal were used, that is, a first sound (e.g., a reflected sound) and a second sound (e.g., a direct sound) were used. However, in the present embodiment, the sounds are not limited thereto.

In the present embodiment, instead of the first audio signal and the second audio signal, an audio signal that indicates a predetermined sound and includes attribute information that is information identifying an attribute of the audio signal is used. That is, the audio signal includes attribute information, and this attribute information is information that identifies the attribute of the audio signal. The attribute may include information indicating the predetermined sound. The predetermined sound is the indirect sound (the reflected sound) or the direct sound described in Embodiments 1 and 2.

It should be noted that for simplicity, an audio signal whose attribute is information indicating a predetermined sound may be described as an audio signal indicating a predetermined sound.

The constituent elements included in renderer 3300 are described below.

Analyzer 3301 performs analysis processing to analyze the input signal. A specific description is as follows.

Analyzer 3301 may be able to perform all of the processing or some of the processing performed by analyzer 1301 according to Embodiment 1 and analyzer 2301 according to Embodiment 2.

Analyzer 3301 also performs analysis processing on the input signal, as performed by analyzer 1301 according to Embodiment 1, in S101 of FIG. 8. In other words, analyzer 3301 analyzes the input signal input to the audio signal processing device according to the present embodiment to detect predetermined sound that may be generated in the sound space.

When such a predetermined sound is detected, analyzer 3301 creates an audio signal indicating the predetermined sound, based on spatial information and sound data. The method by which analyzer 3301 creates the audio signal is the same as the method by which analyzer 2301 creates the first audio signal and the second audio signal in Embodiment 2.

Analyzer 3301 may cause the created audio signal to be stored in memory included in analyzer 3301. In the present embodiment, analyzer 3301 detects M predetermined sounds that may occur in the sound space, creates M audio signals, and stores the M audio signals in the memory. M is an integer greater than or equal to 2.

It should be noted that all M audio signals may be direct sounds, or may be reflected sounds. Furthermore, some of the M audio signals may be direct sounds, and others may be reflected sounds.

Furthermore, as in Embodiments 1 and 2, analyzer 2301 may calculate, for each of the M predetermined sounds, values related to: the path until arriving at the listening position; the time period taken until arrival; the sound volume at arrival; and the like.

For example, when one predetermined sound is a direct sound, the arrival time sound volume of that one predetermined sound (the sound volume of the predetermined sound) is the direct sound arrival time sound volume (ld). For example, when another one predetermined sound is a reflected sound, the arrival time sound volume of the other one predetermined sound (the sound volume of the predetermined sound) is the reflected sound arrival time sound volume (lr).

The attribute information included in one audio signal includes predetermined-sound sound volume information indicating the sound volume of the predetermined sound indicated by the one audio signal (more specifically, the arrival time sound volume of the predetermined sound).

Furthermore, analyzer 3301 creates predetermined sound position information based on: the position information of the sound source objects, the position information of the non-sound-emitting objects (obstacle objects), and the position information and physical information of the listener that are included in the spatial information; and the sound data.

The predetermined sound position information is information that indicates the position of the predetermined sound, that is, information for localizing the sound image of the predetermined sound.

In the present embodiment, the attribute information included in one audio signal includes the predetermined sound position information indicating the position of the predetermined sound indicated by the one audio signal.

Selector 3302 may be able to perform all of the processing or some of the processing performed by selector 1302 according to Embodiment 1 and selector 2302 according to Embodiment 2. Furthermore, selector 3302 determines whether the output signal based on the M audio signals created by analyzer 2301 is to be output (reproduced) by reproducer 2303. That is, selector 3302 first determines whether to merge N audio signals from among the M audio signals created by analyzer 2301, and when it is determined that the N audio signals are to be merged, selector 2302 generates a merged audio signal by merging these N audio signals. N is an integer greater than or equal to 1 and less than or equal to M. The merged audio signal generated is output by reproducer 3303.

Selector 3302 has obtainer 3302a, determiner 3302b, and merger 3302c.

Obtainer 3302a obtains an audio signal that includes attribute information and was created by analyzer 3301 and stored in the memory of analyzer 3301. Obtainer 3302a obtains M audio signals.

Determiner 3302b calculates, for each of predetermined sounds indicated by M audio signals, the arrival direction from which the predetermined sound arrives at a listening position that is a position at which a listener is located. That is, determiner 3302b calculates M arrival directions. Determiner 3302b calculates the M arrival directions using the method described in step S231 in FIG. 23 of Embodiment 1.

Then, determiner 3302b determines whether to merge N audio signals among the M audio signals obtained, based on the M arrival directions calculated.

Here, one example of the method by which determiner 3302b determines whether to merge the N audio signals is described.

As described in Embodiment 1, the orientation information of a sound source object and the orientation information of a listener may each be expressed in terms of azimuth (yaw) and elevation (pitch). Therefore, the arrival direction of a sound, e.g., the arrival direction of a predetermined sound, may be expressed in terms of azimuth and elevation.

FIG. 46 is a diagram illustrating an example of a merge region according to the present embodiment.

FIG. 46 illustrates a sound space represented by an azimuth axis and an elevation axis. FIG. 46 shows the listener's avatar, one direct sound arrival direction, two reflected sound arrival directions (indirect sound arrival directions), and merge region 110. It should be noted that merge region 110 is indicated by a dashed line.

Merge region 110 is a closed region that can be mapped onto the sound space defined by the azimuth axis and the elevation axis. Here, one direct sound and one reflected sound are located within merge region 110; that is, the position indicating one direct sound arrival direction and the position indicating one reflected sound arrival direction are located within merge region 110.

Determiner 3302b determines that a plurality of sounds are to be merged, when a plurality of sound arrival directions are present within one merge region 110. For example, in the sound space shown in FIG. 46, determiner 3302b determines that the direct sound, for which the position indicating the direct sound arrival direction is located within merge region 110, and the reflected sound, for which the position indicating the reflected sound arrival direction is located within merge region 110, are to be merged. The example shown in FIG. 46 is an example in which N is 2.

It should be noted that the merge region shown in FIG. 46 is determined (defined) by analyzer 3301 and stored in the memory of analyzer 3301.

Merger 3302c generates a merged audio signal by merging N audio signals, when determiner 3302b determines that the N audio signals are to be merged, that is, when the N predetermined sounds are present within one merge region. In this case, merger 3302c outputs the merged audio signal generated to reproducer 3303.

The merged audio signal is a signal indicating a merged sound obtained by combining N predetermined sounds. The sound volume of the merged sound is the sound volume obtained by adding the sound volumes of the N predetermined sounds.

Furthermore, merger 3302c skips generating the merged audio signal, when it is determined that the N audio signals are not to be merged. In this case, merger 3302c outputs the N audio signals to reproducer 3303.

Reproducer 3303 may be able to perform all of the processing or some of the processing performed by reproducer 1303 according to Embodiment 1 and reproducer 2303 according to Embodiment 2. Furthermore, reproducer 3303 obtains the merged audio signal and the N audio signals output from selector 3302 (more specifically, merger 3302c), and outputs an output signal based on each of the merged audio signal and the N audio signals obtained.

Reproducer 3303 generates an output signal based on each of the merged audio signal and the N audio signals obtained by performing processing such as binaural filter processing on each of the audio signals, and then outputs the output signals. Binaural filter processing is realized, for example, by performing processing (for example, convolution processing) in which a head-related transfer function is applied to each of the merged audio signal and the N audio signals obtained. In the present embodiment, for example, the output signal based on the merged audio signal is generated by applying the head-related transfer function to the merged audio signal.

Furthermore, reproducer 3303 may generate an output signal based on each of the merged audio signal and the N audio signals output from selector 3302 by performing both binaural filter processing and diffusion filter processing on each of these audio signals, and then output these audio signals.

Hereinafter, an example of the operation of the audio signal processing method performed by the audio signal processing device (more specifically, renderer 3300) according to the present embodiment is described.

### [Operation Example 1 of Renderer]

FIG. 47 is a flowchart illustrating Operation Example 1 of the audio signal processing device according to the present embodiment. FIG. 47 illustrates the processing performed mainly by renderer 3300 included in the audio signal processing device according to the present embodiment. It should be noted that here, descriptions of common points with FIG. 8 according to Embodiment 1 are omitted or simplified.

First, analyzer 3301 performs analysis processing to analyze the input signal (S101h). For example, analyzer 3301 creates M audio signals and stores the M audio signals created in the memory of analyzer 3301.

Selector 2302 determines whether to merge N audio signals (M ≥ N > 1) among the M audio signals, and generates and outputs a merged audio signal, when the N audio signals are determined to be merged (S102h).

Reproducer 3303 obtains the merged audio signal output from selector 3302 and outputs an output signal that is based on the merged audio signal obtained (S103h).

The processing performed by selector 3302 and reproducer 3303 is described in greater detail with reference to FIG. 48.

FIG. 48 is a flowchart illustrating an operation example of processing performed by selector 3302 and reproducer 3303 in Operation Example 1 according to the present embodiment. It should be noted that here, descriptions of common points with FIG. 14 according to Embodiment 1 are omitted or simplified.

First, selector 3302 specifies a merge region (S601).

Here, the merge region according to the present operation example is described.

FIG. 49 is a diagram for illustrating a merge region according to the present embodiment, and FIG. 50 is another diagram for illustrating the merge region according to the present embodiment.

FIG. 49 shows a celestial sphere with the listener's avatar positioned at its center, and positions indicating predetermined sound arrival directions are arranged on the surface of the celestial sphere. FIG. 50 shows a diagram of the surface of the celestial sphere shown in FIG. 49, divided into uniform predetermined shapes.

The zenith, equator, and nadir shown in each of FIG. 49 and FIG. 50 are in corresponding relationships.

The predetermined shape shown in FIG. 50 is formed by two bow-shaped elements joined together so that their chords contact each other. FIG. 50 shows a plurality of (twelve) figures indicating this predetermined shape, each divided into a plurality of ranges, thereby constituting regions 1 to 41 each corresponding to a merge region. It should be noted that there may be a region constituted across three ranges each obtained by dividing a figure indicating the predetermined shape, as in region 37. The same applies to region 38 to region 40. Furthermore, there may be a region constituted across twelve ranges each obtained by dividing a figure indicating the predetermined shape, as in region 41.

That is, in step S601, selector 3302 specifies one merge region of the plurality of merge regions (the forty-one regions 1 to 41).

Furthermore, obtainer 3302a obtains the M audio signals created by analyzer 3301 and stored in the memory.

Then, selector 3302 (determiner 3302b) determines whether to merge N audio signals among the M audio signals obtained, based on the arrival direction from which each of the M predetermined sounds arrives at the listening position. A more specific description is as follows.

Determiner 3302b detects predetermined sounds (also referred to as Rendering Items (RI)) that are included in the merge region specified in step S601, and counts the number of predetermined sounds detected (S602). More specifically, determiner 3302b calculates the arrival direction from which the predetermined sound indicated by each one of the M audio signals obtained arrives at the listening position. Determiner 3302b refers to the M arrival directions calculated and the position of the merge region specified, i.e., the position of the merge region indicated by the azimuth axis and the elevation axis, to detect audio signals indicating predetermined sounds included within the merge region.

Determiner 3302b counts the number of audio signals indicating predetermined sounds whose positions indicating their respective arrival directions are located within the merge region specified. Here, determiner 3302b detects one or more audio signals, counts the number of the one or more audio signals detected, and determines that number to be N.

Determiner 3302b determines whether the number N determined is greater than one (S603).

When N is greater than 1 ("Yes" in S603), determiner 3302b determines that the N predetermined sounds are to be merged. Then, merger 3302c merges the N predetermined sounds (S604). That is, merger 3302c generates a merged audio signal by merging the N audio signals indicating the N predetermined sounds. Merger 3302c may generate the merged audio signal by, for example, performing addition processing on the N audio signals. Merger 3302c determines the merged audio signal generated to be a valid RI. Merger 3302c outputs the merged audio signal generated to reproducer 3303.

Furthermore, merger 3302c determines the arrival direction (merged sound arrival direction) of the merged sound indicated by the merged audio signal generated. Merger 3302c determines the merged sound arrival direction from which the merged sound indicated by the merged audio signal arrives at the listening position, based on N items of predetermined sound position information and N items of predetermined-sound sound volume information included in the N audio signals indicating the N predetermined sounds. For example, merger 3302c determines (sets) the merged sound arrival direction by the following method.

FIG. 51 is a diagram for illustrating a method for calculating a merged sound arrival direction according to the present embodiment.

In FIG. 51, region 13 in FIG. 50 is shown as an example of a merge region, and includes the positions of three predetermined sounds (RIs) 121, 122, and 123 within the merge region. That is, an example in which N is 3 is shown. The predetermined sound position information included in each of the three audio signals indicating the three predetermined sounds 121 to 123 is information indicating the position of the one corresponding predetermined sound in polar coordinates.

For example, the predetermined sound position information for predetermined sound 121 indicates that the azimuth angle indicating the argument of the polar coordinates for the position of predetermined sound 121 is a1, and the elevation angle indicating the argument of the polar coordinates is e1. The predetermined sound position information for predetermined sound 122 indicates that the azimuth angle indicating the argument of the polar coordinates for the position of predetermined sound 122 is a2 and the elevation angle indicating the argument of the polar coordinates is e2. The predetermined sound position information for predetermined sound 123 indicates that the azimuth angle indicating the argument of the polar coordinates for the position of predetermined sound 123 is a3 and the elevation angle indicating the argument of the polar coordinates is e3.

It should be noted that when the predetermined sound position information is expressed in polar coordinates, the argument of that predetermined sound corresponds to the arrival direction from which that sound arrives at the listener.

Furthermore, for example, the predetermined-sound sound volume information for predetermined sound 121 indicates that the sound volume of predetermined sound 121 (the sound volume at the listening position) is v1. The predetermined-sound sound volume information for predetermined sound 122 indicates that the sound volume of predetermined sound 122 (the sound volume at the listening position) is v2. The predetermined-sound sound volume information for predetermined sound 123 indicates that the sound volume of predetermined sound 123 (the sound volume at the listening position) is v3.

It should be noted that the sound volumes of predetermined sounds 121 to 123 may be indicated by amplitude or loudness.

Merger 3302c regards the sound volume of the predetermined sound indicated by the predetermined-sound sound volume information as a weight corresponding to the position of the predetermined sound indicated by the predetermined sound position information for that predetermined sound. In this case, merger 3302c determines that the position of the merged sound (merged sound 124) is the position of the weighted centroid of the plurality of predetermined sounds (predetermined sounds 121 to 123).

In other words, merger 3302c determines the position of the weighted centroid of predetermined sounds 121 to 123 as the position of merged sound 124 (more specifically, the position at which merged sound 124 is generated). In FIG. 51, for the position of the weighted centroid, the azimuth angle indicating the argument (arrival direction) satisfies Formula 5.$\left(a1\times v1+a2\times v2+a3\times v3\right) / \left(v1+v2+v3\right)$

In FIG. 51, for the position of the weighted centroid, the elevation angle indicating the argument (arrival direction) satisfies Formula 6.$\left(e1\times v1+e2\times v2+e3\times v3\right) / \left(v1+v2+v3\right)$

Furthermore, the sound volume of merged sound 124 is calculated as v1 + v2 + v3, since this sound volume is the sound volume obtained by adding the sound volumes of predetermined sounds 121 to 123.

Merger 3302c thus determines the position of merged sound 124. Then, merger 3302c determines the merged sound arrival direction by using the determined position of merged sound 124, the position information of the avatar (listener) included in the input signal, and orientation information D1 of the avatar (listener). In other words, merger 3302c determines (sets) the direction from the determined position of merged sound 124 (the position of the weighted centroid) toward the listening position as the merged sound arrival direction. Furthermore, merger 3302c sets the merged sound arrival direction determined as the arrival direction information.

Merger 3302c performs processing to invalidate the N audio signals indicating the N pre-merge predetermined sounds.

When N is 1 ("No" in S603), determiner 3302b determines that the N (1) predetermined sound is not to be merged (S605), that is, determiner 3302b determines that the one audio signal indicating the N (1) predetermined sound is not to be merged. Then, merger 3302c detects the arrival direction of the one predetermined sound. The arrival direction of the one predetermined sound has already been calculated in step S602. Merger 3302c sets the arrival direction detected to be the arrival direction information, as the arrival direction of the one predetermined sound.

It should be noted that here, merger 3302c determines the one audio signal to be a valid RI; in other words, merger 3302c does not invalidate the one audio signal.

Selector 3302 determines whether all merge regions, among the plurality of merge regions determined (defined) by analyzer 3301 and stored in the memory, have been specified (S606). That is, selector 3302 determines whether the processing of steps S602 to S604 has been performed for all of the plurality of merge regions determined by analyzer 3301 and stored in the memory.

When the result in step S606 is "No", the processing of step S601 is performed again. When the result in Step S606 is "Yes", the following processing is further performed.

Reproducer 3303 applies, to valid RIs, the head transfer function corresponding to the arrival direction information set (S607). More specifically, reproducer 3303 outputs an output signal generated by applying, to the merged audio signal generated by merger 3302c in step S604 and determined to be a valid RI, a head-related transfer function corresponding to the arrival direction (the merged sound arrival direction) of the merged sound indicated by the merged audio signal. Furthermore, reproducer 3303 outputs an output signal generated by applying, to one audio signal determined in step S605 not to be merged and to be a valid RI, a head-related transfer function corresponding to the arrival direction of the predetermined sound indicated by the audio signal.

Furthermore, reproducer 3303 may select the head-related transfer function to apply by, for example, using a database (e.g., HRIRs in SOFA) that indicates head-related transfer functions corresponding to respective sound arrival directions.

It should be noted that as described above, the shape of the merge region is not limited to the above examples. Other examples are described below with reference to FIG. 52 to FIG. 57. It should be noted that in FIG. 52 to FIG. 57, the merge regions are indicated by dashed lines.

FIG. 52 is a diagram illustrating another, first example of the merge region according to the present embodiment. FIG. 53 is a diagram illustrating another, second example of the merge region according to the present embodiment.

As shown in FIG. 52, the merge region may be rectangular, and as shown in FIG. 53, the merge region may be diamond-shaped.

The size of the merge region may be determined according to the directional difference limens in the azimuth axis direction and the elevation axis direction. For example, when the merge region is diamond-shaped, the lengths of the two diagonal lines become shorter as the difference limen becomes finer, and longer as the difference limen becomes coarser. The directional difference limen in the azimuth axis direction is considered finer than the directional difference limen in the elevation axis direction; thus, in this case, the merge region is a region that is vertically elongated (long in the elevation axis direction).

FIG. 54 is a diagram illustrating another, third example of the merge region according to the present embodiment. FIG. 55 is a diagram illustrating another, fourth example of the merge region according to the present embodiment.

As shown in FIG. 54 and FIG. 55, the merge regions here are elliptical.

FIG. 54 shows the merge region in the forward direction, that is, the direction in which the azimuth angle (a) is 0.0 and the elevation angle (e) is 0.0 (a = 0.0, e = 0.0). FIG. 55 shows the merge region in the zenith direction, that is, the direction in which the azimuth angle (a) is 0.0 and the elevation angle (e) is 90.0 (a = 0.0, e = 90.0).

The directional difference limen in the forward direction is considered finer than the directional difference limen in the zenith direction; thus, in this case, as shown in FIG. 54 and FIG. 55, the area of the merge region is small in the forward direction and large in the zenith direction.

FIG. 56 is a diagram illustrating another, fifth example of the merge region according to the present embodiment. FIG. 57 is a diagram illustrating another, sixth example of the merge region according to the present embodiment.

As shown in FIG. 56 and FIG. 57, the merge regions here are elliptical.

FIG. 56 shows the merge region in the forward direction, that is, the direction in which the azimuth angle (a) is 0.0 and the elevation angle (e) is 0.0 (a = 0.0, e = 0.0). FIG. 57 shows the merge region in the forward-diagonal-up direction at 60°, that is, the direction in which the azimuth angle (a) is 0.0 and the elevation angle (e) is 60.0 (a = 0.0, e = 60.0).

Here, an example in which equipment or software that has a database of HRIRs with sufficient spatial resolution (e.g., the FABIAN dataset in SOFA) is used is described. The merge region may be determined based on the density of the points at which an HRIR is located. For example, in the case of the forward direction (a = 0.0, e = 0.0), an HRIR is located every 2 degrees in both the azimuth axis direction and the elevation axis direction. On the other hand, for the forward-diagonal-up direction at 60° (a = 0.0, e = 60.0), an HRIR is located every 3 degrees in the azimuth axis direction and every 2 degrees in the elevation axis direction. In this case, the length in the azimuth axis direction of the merge region in the forward direction, shown in FIG. 56, is shorter than the length in the azimuth axis direction of the merge region in the forward-diagonal-up direction at 60°, shown in FIG. 57.

Furthermore, the position of the weighted centroid of the predetermined sounds described in FIG. 51 is described in detail.

In FIG. 51, the merged sound arrival direction is determined to be the direction from the position of the weighted centroid of the predetermined sounds toward the listening position. The direction of the position of this weighted centroid is calculated based on: the arrival direction of each predetermined sound (each RI) as seen from the listening position; and the conceptual weight of that predetermined sound.

That is, when ax denotes the azimuth angle of the arrival direction of RIx, ex denotes the elevation angle thereof, wx denotes the weight of RIx, AM denotes the azimuth angle of the direction of the weighted centroid of the predetermined sounds, and EM denotes the elevation angle thereof, Formula 7 and Formula 8 below are satisfied.
[Math. 6] $AM = {\sum }_{x = 1}^{N} \left(ax\times wx\right) \div {\sum }_{x = 1}^{N} \left(wx\right)$
[Math. 7] $EM = {\sum }_{x = 1}^{N} \left(ex\times wx\right) \div {\sum }_{x = 1}^{N} \left(wx\right)$

In the example in FIG. 51, weight wx of RIx was set as sound volume vx of that RI, but this is not intended to be limiting. The value of weight wx when RIx is a direct sound may be greater than the value of weight wx when RIx is an indirect sound.

In the example in FIG. 51, setting weight wx as the sound volume merely represents a general tendency. Furthermore, the value of weight wx of RIx when RIx is a sound emitted from a stationary object may be greater than the value of weight wx of RIx when RIx is a sound emitted from a non-stationary object.

Furthermore, the value of weight wx of RIx when RIx is a sound emitted from an object visible to the listener may be greater than the value of weight wx of RIx when RIx is a sound emitted from an object not visible to the listener.

The weighted centroid of the predetermined sounds may be calculated solely from direct sounds, which are examples of predetermined sounds. This is because accurately reproducing the arrival directions of direct sounds is auditorily more important than accurately reproducing the arrival directions of indirect sounds. This is because the arrival direction of a direct sound is often visually recognized, whereas the arrival direction of an indirect sound is often not visually recognized.

Considering this, when only one direct sound is included in the merge region, the head-related transfer function may be applied such that the merged sound arrives from the position of that direct sound. If not even one direct sound is included in the merge region, the weighted centroid of the predetermined sounds may be calculated from indirect sounds.

When an RI is associated with an object indicating a living being, particularly a human, the weight of that RI may be set higher than the weight of an RI not indicating a living being or a human. This is to facilitate the reproduction of the psychoacoustic phenomenon in which human voices are easily recognizable to the listener. Here, the RI associated with an object indicating a human may be assigned flag information such as a human flag or a living being flag.

The following is a summary of the present embodiment.

The audio signal processing method according to the present embodiment is an audio signal processing method executed by an audio signal processing device. The audio signal processing method includes an obtaining step, a determining step, a merging step, and a reproducing step.

In the obtaining step, M audio signals each of which is an audio signal that indicates a predetermined sound and includes attribute information identifying an attribute of the audio signal is obtained. M is an integer greater than or equal to 2. In the determining step, whether to merge N audio signals among the M audio signals obtained is determined, based on an arrival direction from which each of the M predetermined sounds arrives at a listening position that is a position at which a listener is present. N is an integer greater than or equal to 1 and less than or equal to M.

In the merging step, a merged audio signal obtained by merging the N audio signals is generated, when the N audio signals are determined to be merged. In the reproducing step, an output signal that is based on the merged audio signal generated is output.

Whether the N audio signals are to be merged is thus determined, based on the arrival directions of the predetermined sounds. When it is determined that the N audio signals are to be merged, the output signal that is based on the merged audio signal is output in the reproducing step. When it is determined that the N audio signals are not to be merged, output signals based on each of the N audio signals are output in the reproducing step. Compared to a case in which output signals based on each of the N audio signals are output, in the case in which the output signal that is based on the merged audio signal is output, the number of output signals to be output decreases, whereby the amount of computation and the computational load are reduced. In other words, it is possible to realize an audio signal processing method that can reduce the amount of computation and the computational load.

In the audio signal processing method according to the present embodiment, the attribute information included in each of the M audio signals obtained includes predetermined sound position information indicating the position of the predetermined sound, and predetermined-sound sound volume information indicating the sound volume of the predetermined sound. In the merging step, a merged sound arrival direction is determined, based on N items of the predetermined sound position information and N items of the predetermined-sound sound volume information. The merged sound arrival direction is a direction from which a merged sound indicated by the merged audio signal arrives at the listening position

The merged sound arrival direction is thus determined in the merging step, based on the predetermined sound position information and the predetermined-sound sound volume information.

In the audio signal processing method according to the present embodiment, in the merging step, the following processing is performed when, for each predetermined sound, the sound volume of the predetermined sound indicated by the predetermined-sound sound volume information is regarded as a weight corresponding to the position of the predetermined sound indicated by the predetermined sound position information. In the merging step, the position of the merged sound is determined to be the position of the weighted centroid of the N predetermined sounds, and the direction from the position of the weighted centroid determined toward the listening position is determined as the merged sound arrival direction.

This makes it possible to determine the merged sound arrival direction based on the position of the weighted centroid of the N predetermined sounds, i.e., to easily determine the merged sound arrival direction. That is, since determining the merged sound arrival direction does not require a large amount of computation and a heavy computational load, it is possible to realize an audio signal processing method that can reduce the amount of computation and the computational load.

### [Embodiment 4]

Embodiment 4 is described below. The description below is centered on the points of difference from Embodiments 1 to 3, and descriptions of points in common are omitted or simplified.

Incidentally, in the [Brief Summary] of Embodiment 1, it was described that as one example, processing is performed to increase the sound volume of a direct sound by the amount of a sound volume of a reflected sound. However, whether the sound volume of the direct sound is amplified (increased) or attenuated (decreased) differs depending on the phase difference between the direct sound and the reflected sound. Therefore, using only processing that increases the sound volume of the direct sound may not result in the correct direct sound.

FIG. 58 is diagram illustrating an example for showing a phase difference between a direct sound and a reflected sound, according to the present embodiment. FIG. 59 is diagram illustrating another example for showing a phase difference between a direct sound and a reflected sound, according to the present embodiment.

In FIG. 58, the phase difference between the direct sound and the reflected sound is 2π. Therefore, the sound volume of the direct sound obtained through the processing is amplified.

In FIG. 59, the phase difference between the direct sound and the reflected sound is 3π. Therefore, the sound volume of the direct sound obtained through the processing is attenuated.

The sound volume of the direct sound may thus be amplified or attenuated based on the phase difference between the direct sound and the reflected sound. In the present embodiment, such a direct sound is examined.

In the present embodiment, renderer 1300 used in Embodiment 1 is employed. Renderer 1300 performs the same processing as in Embodiment 1, except that mainly selector 1302 performs the following processing.

Selector 1302 according to the present embodiment performs processing to adjust the sound volume of a direct sound, based on the phase difference between the direct sound and a reflected sound.

Hereinafter, an example of the operation of the audio signal processing method performed by the audio signal processing device (more specifically, renderer 1300) according to the present embodiment is described.

### [Operation Example 1 of Renderer]

In the present embodiment, the same processing as in Embodiment 1 is performed, except that the processing shown in FIG. 60 is performed instead of the processing shown in FIG. 14 according to Embodiment 1.

FIG. 60 is a flowchart illustrating an operation example of processing performed by selector 1302 in Operation Example 1 according to the present embodiment. It should be noted that here, descriptions of common points with FIG. 14 according to Embodiment 1 are omitted or simplified.

First, step S201 is performed.

Selector 1302 identifies the reflector that reflects the reflected sound specified in step S201 (S701).

Instead of step S202 in FIG. 14, selector 1302 detects the sound volume ratio (L) between the direct sound and the reflected sound using the frequency characteristic of the reflection coefficient (S702). That is, selector 1302 detects the sound volume ratio (L), using the frequency characteristic of the reflection coefficient of the reflector identified in step S701.

Then, step S203 to step S207 are performed.

Selector 1302 performs processing to adjust the sound volume of the direct sound, based on the phase difference between the direct sound and the reflected sound (S703).

Then, step S208 is performed.

Here, the details of the processing of step S703 are described by way of a first example to a third example.

### [First Example]

FIG. 61 is a flowchart illustrating a first example of the details of the processing of step S703, according to the present embodiment.

Selector 1302 identifies a direct sound and a reflected sound (S703a). That is, selector 1302 identifies the reflected sound specified in step S201 and the direct sound associated with that reflected sound.

Selector 1302 creates a frequency equalizer based on the arrival path length of the direct sound identified in step S703a and the arrival path length of the reflected sound identified in step S703a, and the reflection coefficient of the reflector (S703b). That is, selector 1302 creates a frequency equalizer based on the length of the direct sound arrival path (pd) and the length of the reflected sound arrival path (pr), and the reflection coefficient of the reflector identified in step S701.

Selector 1302 applies the frequency equalizer created in step S703b to the direct sound (S703c). This makes it possible for selector 1302 to perform processing to adjust the sound volume of the direct sound.

Here, step S703b is described in greater detail.

In step S703b, selector 1302 first defines H frequency bands, where H is an integer greater than or equal to 1 (S703b1). For example, selector 1302 divides the entire frequency band into H 1/3-octave bands. The divided octave bands correspond to frequency bands.

Selector 1302 defines a reflection coefficient (g(i)) for each frequency band, where i is an integer greater than or equal to 0 and less than H (S703b2). For example, selector 1302 defines the reflection coefficients up to g(i) as g(0), g(1), g(2), and so forth, in ascending order of frequency bands.

Selector 1302 identifies a representative frequency (f(i)) for each frequency band (S703b3). For example, selector 1302 may determine the center frequency for each frequency band as the representative frequency. Representative frequencies up to f(i) are defined as f(0), f(1), f(2), and so forth, in ascending order of frequency bands.

Selector 1302 calculates the time difference (T) between the direct sound and the reflected sound (S703b4). In other words, selector 1302 calculates the arrival time difference between the direct sound and the reflected sound. Here, the time difference (T) satisfies Formula 9 below. 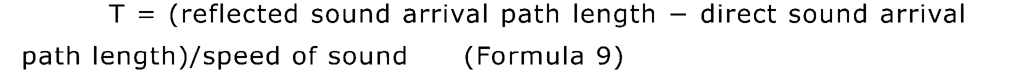 T = (reflected sound arrival path length - direct sound arrival path length)/speed of sound

Selector 1302 calculates, for each frequency band, the sound volume ratio (a(i)) between the sound volume (amplitude) of the direct sound and the sound volume (amplitude) of the reflected sound (S703b5). For example, selector 1302 defines the ratios up to a(i) as a(0), a(1), a(2), and so forth, in ascending order of frequency bands. a(i) satisfies Formula 10 below. 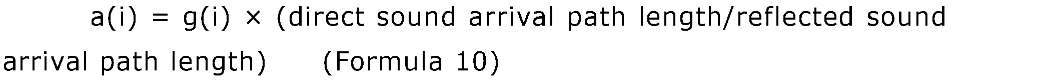 a(i) = g(i) × (direct sound arrival path length/reflected sound arrival path length)

Selector 1302 calculates the phase difference (θ(i)) between the direct sound and the reflected sound for each frequency band (S703b6). For example, selector 1302 defines the phase differences up to θ(i) as θ(0), θ(1), θ(2), and so forth, in ascending order of frequency bands. θ(i) satisfies Formula 11 below.$θ \left(i\right) = T \times f \left(i\right) \times 2 π$

Selector 1302 creates a frequency equalizer such that the gain for each frequency band is G(i) (S703b7). For example, selector 1302 defines the gains up to G(i) as G(0), G(1), G(2), and so forth, in ascending order of frequency bands. G(i) satisfies Formula 12 below.
[Math. 8] $G \left(i\right) = \sqrt{\left.1+2\times a\left(i\right)\times cosθ\left(i\right)+a{\left(i\right)}^{2}\right)}$

Then, in step S703c, selector 1302 applies the frequency equalizer created in step S703b (more specifically, step S703b7) to the direct sound.

It should be noted that in step S703b5, Formula 10 above was used. This Formula 10 is used in the following case. For simplicity of explanation, Formula 10 is used under the assumption that direct sound exhibits no distortion in its frequency characteristics during sound propagation and that reflected sound does exhibit distortion in its frequency characteristics during sound propagation, but that this is a phenomenon due solely to the reflection coefficient (g(i)) due to the reflector. If such a simple model cannot be applied, the following processing may be performed.

Processing may be performed on g(i) as follows, when: a change in the frequency characteristic occurs in the direct sound, as if an equalizer (Eqp) simulating the frequency characteristic distortion occurring during the direct sound propagation process were applied; and a change in the frequency characteristic occurs in the reflected sound, as if an equalizer (Eqr) simulating the frequency characteristic distortion occurring during the reflected sound propagation process (including the reflection itself) were applied. That is, in this case, when Eqp(i) and Eqr(i) are each set as the coefficient (gain factor) of the i-th band of the respective equalizer, g(i) may be updated to satisfy Formula 13 below.$g \left(i\right) = Eqr \left(i\right) / Eqp \left(i\right)$

Furthermore, (direct sound arrival path length/reflected sound arrival path length) multiplied by g(i) represents (sound volume of reflected sound (Ggr)/sound volume of direct sound (Ggp)). This is an application of the well-known technique in which, for simplification, the sound volume is inversely proportional to the arrival path length. If there are factors that cannot be calculated using only such a well-known technique, (Ggr)/(Ggp) may be calculated taking these elements into consideration.

Furthermore, a(i) may satisfy Formula 14 below.$a \left(i\right) = g \left(i\right) \times \left(Ggr/Ggp\right) = \left(Ggr\times Eqr\left(i\right)\right) / \left(Ggp\times Eqp\left(i\right)\right)$

Furthermore, the basis for using Formula 12 above is described.

Here, selector 1302 represents the direct sound as A × e^{iγ} and the reflected sound as a × A × e^{i(γ + θ)}. FIG. 62 is a diagram showing a direct sound, a reflected sound, and a sound obtained by combining the direct sound and the reflected sound, according to the present embodiment. Here, the sound obtained by combining the direct sound and the reflected sound is expressed by Formula 15 below.$\begin{matrix}A \times {e}^{iγ} + a \times A \times {e}^{i \left(γ+θ\right)} \\ = A \times {e}^{iγ} + a \times A \times {e}^{iγ} \times {e}^{iθ} \\ = A \times {e}^{iγ} \times \left(1+a\times {e}^{iθ}\right)\end{matrix}$

Therefore, (1 + a × e^{iθ}) is the multiplier for the direct sound, that is, the multiplier for adjusting the sound volume of the direct sound.

Furthermore, when the value obtained from Formula 15 above is converted, it satisfies Formula 16 below.
[Math. 9] $\begin{matrix}\left|\left(1+a\times {e}^{i θ}\right)\right| \\ = \left|1+a\times cos\left(θ\right)+a\times i\times sin\left(θ\right)\right| \\ = \sqrt{{\left(1+a\times cosθ\right)}^{2} + {\left(a\times sinθ\right)}^{2}} \\ = \sqrt{1 + 2 \times a \times cosθ + {a}^{2}}\end{matrix}$

According to Formula 16 above, for example, when θ = 0, the magnification is 1 + a; when θ = π, the magnification is 1 - a; and when θ = π/2, the magnification is (1 + a²)^{1/2}.

This makes possible the mathematically accurate generation of the sound obtained by combining the direct sound and the reflected sound. In the present embodiment, the sound obtained by combining the direct sound and the reflected sound corresponds to the direct sound for which the sound volume has been increased by the amount of the sound volume of the reflected sound. When this processing is performed, the reflected sound can be deleted based on the precedence effect, without causing auditory incongruity.

### [Second Example]

In the second example, the same processing as in the first example is performed, except that G(i) created in step S703b7 differs from that in the first example.

In the second example, in step S703b7, selector 1302 creates a frequency equalizer such that the gain for each frequency band is G(i). G(i) according to the second example satisfies Formula 17 below.$G \left(i\right) = 1 + a \left(i\right) \times cosθ \left(i\right)$

The basis for using Formula 17 above is described.

The expression |1 + a × cos(θ) + a × i × sin(θ)| shown in Formula 16 above, when the imaginary part is omitted, is represented by Formula 18 below.$\left|\left(1+a\times {e}^{iθ}\right)\right| \approx 1 + a \times cos \left(θ\right)$

According to Formula 18 above, for example, when θ = 0, the magnification is 1 + a; when θ = π, the magnification is 1 - a; and when θ = π/2, the magnification is 1.

When θ is near an even multiple of π/2, the result is identical to that of the first example. When θ is near an odd multiple of π/2, the result differs slightly from that of the first example. However, considering that a is a small value less than 1.0, the result of the first example and the result of the second example are not greatly different values. Using such an approximation formula (i.e., Formula 17) makes it possible to omit operations involving sums of squares and square roots.

### [Third Example]

In the third example, the same processing as in the first example is performed, except that step S703b8 is performed instead of step S703b6, and G(i) created in step S703b7 differs from that in the first example.

FIG. 63 is a flowchart illustrating a third example of the details of the processing of step S703, according to the present embodiment.

As shown in FIG. 63, after step S703b5 is performed, selector 1302 calculates the phase differences (X(i), Y(i)) between the direct sound and the reflected sound at the upper frequency limit of each frequency band (S703b8). The phase differences (X(i), Y(i)) satisfy Formula 19 and Formula 20 below.$X \left(i\right) = T \times f \left(i\right) \times {2}^{\left(1/W\right)} \times 2 π$$Y \left(i\right) = T \times f \left(i\right) \times {2}^{\left(-1/W\right)} \times 2 π$

It should be noted that W is 6 when the band division is 1/3-octave bands, and is 2 × Z when the band division is 1/Z-octave bands.

Then, step S703b7 is performed. In the present operation example, G(i) created by selector 1302 satisfies Formula 21 below.$G \left(i\right) = 1.0 + a \left(i\right) \times \left(\left(sin\left(X\left(i\right)\right)-sin\left(Y\left(i\right)\right)\right)/\left(X\left(i\right)-Y\left(i\right)\right)\right.$

However, when T × f(i) > 4.31, G(i) = 0 may be employed.

Furthermore, the basis for using either Formula 21 above or G(i) = 0 is described.

Here, the case in which the frequency band is divided into 1/3-octave bands is described. In this case, as an example, the lower frequency limit (Fl) and upper frequency limit (Fh) of the frequency band of representative frequency f(i), which is the center frequency, satisfy Formula 22 and Formula 23 below.$Fl = f \left(i\right) \times {2}^{- 1 / 6}$$Fh = f \left(i\right) \times {2}^{1 / 6}$

Here, when T denotes the delay time (that is, the time difference) of the reflected sound, phase difference θ between the direct sound and the reflected sound at the time the reflected sound arrives satisfies Formula 24 at the lower frequency limit and Formula 25 at the upper frequency limit.$θl = T \times Fl \times 2 π$$θh = T \times Fh \times 2 π$

The loudness compensation value accompanying the combining of the direct sound and the reflected sound satisfies Formula 26 below, where θ denotes the phase difference and a denotes the sound volume ratio.$1 + a \times {e}^{iθ}$

As described above, even within one frequency band, phase difference θ has a range. Therefore, even if the sound volume compensation value is amplified (or attenuated) at the center frequency, it does not necessarily follow that the entire frequency band should be amplified (or attenuated).

For example, when the difference between θh and θl is 2π, within that band, instances where the sound volume compensation value amplifies the sound volume and instances where it attenuates the sound volume occur evenly (more specifically, nearly evenly). Therefore, on the whole, an approximation in which sound volume compensation is not performed is considered to be rather accurate.

Alternatively, when the difference between θh and θl exceeds 2π, instances where the sound volume compensation value amplifies the sound volume and instances where it attenuates the sound volume may occur. Therefore, it is believed that even if an approximation in which sound volume compensation is not performed is made, the listener can perceive sound that does not significantly deviate from reality.

The difference between the phase differences described above is calculated using Formula 27 below.$T \times Fh \times 2 π - T \times Fl \times 2 π = 0.232 \times T \times F \times 2 π$

When (T × f(i)) is greater than or equal to 1/0.232 (=4.31), the difference between the phase differences is 2π or greater, whereby the sound volume compensation may be omitted.

For example, in the case of a reflected sound with a delay time of 2 msec and a center frequency of 1 kHz, (T × f(i)) is 2.0, thereby not falling under the above case. However, for example, in the case of a reflected sound with a delay time of 10 msec and a center frequency of 4 kHz, (T × f(i)) is 40.0, thereby falling under the above case. In this case, it is considered that not performing sound volume compensation for the frequency band, regardless of whether the sound volume compensation value at the center frequency is amplification or attenuation, is an appropriate approximation.

On the other hand, even when the above case does not apply, applying the sound volume compensation value at the center frequency across the entire frequency band may be excessive (i.e., may involve excessive amplification or attenuation). Therefore, the sound volume may be compensated by using the average value (|E| as shown below) within the band as G(i).

Below, |E| is described. More specifically, how to obtain a formula for approximating |E| is described.

As described above, the sound volume compensation value is expressed as 1 + a × e^{iθ}. When this is integrated, Formula 28 below is satisfied.
[Math. 10] $\begin{matrix}{\int }_{Y = T \times f \left(i\right) \times {2}^{\left(-1/6\right)} \times 2 π}^{X = T \times f \left(i\right) \times {2}^{\left(1/6\right)} \times 2 π} \left(1+a\times {e}^{iθ}\right) dθ \\ = X + a \left(sin\left(X\right)-i\times cos\left(X\right)\right) - \left(Y+a\left(sin\left(Y\right)-i\times cos\left(Y\right)\right)\right) \\ = X - Y + a \left(sin\left(X\right)-sin\left(Y\right)\right) - i \times a \times \left(cos\left(X\right)-cos\left(Y\right)\right)\end{matrix}$

It should be noted that in Formula 28 above, the fact that the indefinite integral satisfies Formula 29 below is used.$\begin{matrix}θ + \left(1/i\right) \times a \times {e}^{iθ} + C \\ = θ - i \times a \times {e}^{iθ} + C \\ = θ + a \left(sin\left(θ\right)-i\times cos\left(θ\right)\right) + C\end{matrix}$

Furthermore, when the average over θ is calculated in Formula 29, the expected value of the sound volume compensation amount (E) satisfies Formula 30 below.$E = 1 + a \left(sin\left(X\right)-sin\left(Y\right)\right) / \left(X-Y\right) - i \times a \times \left(\begin{matrix}cos \left(X\right) - \\ cos \left(Y\right)\end{matrix}\right) / \left(X-Y\right)$

It should be noted that here, S = (sin(X) - sin(Y)), C = (cos(X) - cos(Y)), and b = a/(X - Y).

As a result, Formula 30 is converted into Formula 31 below.
[Math. 11] $\begin{matrix}\left|E\right| = \left|1+b\times S-i\times b\times C\right| \\ = \sqrt{{\left(1+b\times S\right)}^{2} + {\left(b\times C\right)}^{2}} \\ = \sqrt{1 + 2 \times b \times S + {\left(b\times S\right)}^{2} + {\left(b\times C\right)}^{2}} \\ = \sqrt{1 + 2 \times b \times S + \left({b}^{2}\right) \times \left({S}^{2}+{C}^{2}\right)} \\ = \sqrt{1 + 2 \times b \times \left(sin\left(X\right)-sin\left(Y\right)\right) + 2 \times \left({b}^{2}\right) \times \left(1-cos\left(X-Y\right)\right)}\end{matrix}$

Furthermore, when the imaginary part is omitted from Formula 30, Formula 32 is calculated.$\left|E\right| = \left(1+b\times S\right) = \left(1+a\times \left(\left(sin\left(X\right)-sin\left(Y\right)\right)/\left(X-Y\right)\right)\right.$

However, to reduce the computational load, when T × F > 4.31, sound volume compensation processing is not performed; for example, |E| = 1 is used.

Incidentally, in Formula 32, in the case where Y tends to X, the term ((sin(X) - sin(Y))/(X - Y) in Formula 32 is the definition of the derivative of the sine function, and thus approaches cos(X), whereby |E| satisfies Formula 33.$\left|E\right| = 1 + a \times cos \left(X\right)$

The |E| shown in Formula 33 agrees with a case in which only the center frequency is approximated as the representative value.

Adopting this approach reduces the risk that the sound volume compensation accompanying the removal of the reflected sound will become excessive.

### (Supplement)

Note that the aspects understood based on the present disclosure are not limited to the embodiment, and various changes may be performed.

For example, a process performed by a certain constituent element in the embodiment may be performed by another constituent element instead of the specific constituent element. Furthermore, the order of a plurality of processes may be changed, or a plurality of processes may be performed in parallel.

Moreover, ordinals such as first and second used for description may be interchanged, removed, or newly assigned as appropriate. These ordinals do not necessarily correspond to meaningful orders, and may be used to distinguish between elements.

Furthermore, for example, in comparisons between threshold values, "greater than or equal to" a threshold value and "greater than" a threshold value may be read interchangeably. Similarly, "less than or equal to" a threshold value and "less than" a threshold value may be read interchangeably. Moreover, for example, there may be cases in which the terms "time period" and "time" are read interchangeably.

Furthermore, in a process for selecting one or more sounds to be processed from a plurality of sounds, no sounds need be selected as a sound to be processed if no sounds that satisfy the conditions exist. In other words, a case in which no sounds to be processed are selected may be included in the process for selecting one or more sounds to be processed from a plurality of sounds.

Furthermore, at least one of a first element, a second element, or a third element can correspond to the first element, the second element, the third element, or any combination of these.

Furthermore, an example of the HRTFs in SOFA was described with reference to FIG. 37, but the HRTFs in SOFA are not limited thereto. Here, a case of the HRTFs in SOFA having low spatial resolution is described.

FIG. 64 is a diagram illustrating a first example of the HRTFs in SOFA, according to another embodiment. FIG. 65 is a diagram illustrating a second example of the HRTFs in SOFA, according to another embodiment. FIG. 66 is a diagram illustrating a third example of the HRTFs in SOFA, according to another embodiment.

The HRTFs in SOFA constitute a database of HRTFs organized in the SOFA format, where a finite set of items of arrival direction information (a plurality of items of arrival direction information) is defined relative to a celestial sphere, and an HRTF is assigned to each point.

FIG. 37 is an image diagram showing HRTFs in SOFA, defined with sufficient spatial resolution on the celestial sphere. As described above, a plurality of points are arranged on the surface of the celestial sphere, and one HRTF is assigned to (placed at) each of the plurality of points. Here, sufficient spatial resolution means a case such as when directions are defined every 2 degrees.

In FIG. 64 to FIG. 66 as well, an HRTF is assigned to each point in each drawing.

FIG. 64 is an image diagram showing HRTFs in SOFA, defined with insufficient spatial resolution on the celestial sphere. An HRTF is assigned to each point in FIG. 64. FIG. 64 illustrates that the spatial resolution is insufficient due to the number of points being significantly fewer than in FIG. 37.

In FIG. 65, arrival direction information (an HRTF) is defined at each vertex of a regular icosahedron instead of a celestial sphere, and in FIG. 66, arrival direction information (an HRTF) is defined at each vertex of a regular octahedron instead of a celestial sphere. The examples shown in FIG. 65 and FIG. 66 are extreme examples illustrating HRTFs in SOFA, defined with insufficient spatial resolution on a celestial sphere.

Here, a case in which each RI is processed using SOFA data with high spatial resolution is described; that is, for each RI, the HRTF defined at the position nearest to the position of that RI, among HRTFs in the SOFA data, is selected and the RI is processed. In this case, while the arrival directions of sounds can be precisely simulated, a significant amount of computation is required because even RIs from similar directions are assigned separate HRTFs.

On the other hand, when items of arrival direction information (HRTFs) are set at a density such as the example shown in FIG. 64, the arrival directions of sounds are not precisely identified. Consequently, a case in which an HRTF simulating the same arrival direction information is assigned to two or more RIs could frequently occur. That is, a plurality of RIs are processed using the same HRFT. In such a case, rather than applying an HRTF individually to each RI, a plurality of such RIs are first merged. Subsequently applying the common HRTF can reduce the number of times the HRTF processing is applied, achieving the effect of reducing the amount of computation. When HRTFs in SOFA shown in FIG. 65 or FIG. 66 are used, this tendency (effect) becomes even more pronounced.

As indicated in the descriptions regarding FIG. 37 and FIG. 64 to FIG. 66 above, HRTFs in SOFA may also produce achieve the effect of reducing the amount of computation. Considering this effect, different processing performed by the audio signal processing device (renderer 2300) according to Embodiment 2 is described.

For example, determiner 2302b according to Embodiment 2 may determine whether merging is to be performed, even without an indicator. More specifically, determiner 2302b determines whether to perform merging, based on the first arrival direction and the second arrival direction.

In this case, in Operation Example 3 described in FIG. 39, selector 2302 specifies two sounds detected by analyzer 2301 (S501b). Here, the two sounds specified are one first sound and one second sound.

Then, determiner 2302b may perform the following processing instead of step S502b and step S503b in FIG. 39.

First, determiner 2302b calculates the arrival direction of each of the two sounds, that is, the first sound arrival direction and the second sound arrival direction. Determiner 2302b determines, from among a plurality of items of arrival direction information, one item of arrival direction information corresponding to the first arrival direction calculated, and determines, from among the plurality of items of arrival direction information, one item of arrival direction information corresponding to the second arrival direction calculated.

Each of the plurality of items of arrival direction information corresponds to one of the plurality of points shown in FIG. 37, for example. One item of arrival direction information indicates an arrival direction that is the direction from a point corresponding to the one item of arrival direction information (i.e., one point shown in FIG. 37) toward the listening position. Furthermore, one item of arrival direction information indicates the head-related transfer function based on that arrival direction, that is, the head-related transfer function that corresponds one-to-one with that arrival direction. Therefore, each of the plurality of items of arrival direction information indicates the direction from which the sound arrives at the listening position and the head-related transfer function based on that arrival direction.

Determiner 2302b determines, as the one item of arrival direction information corresponding to the first arrival direction, the arrival direction information indicating the arrival direction closest to the first arrival direction among the plurality of items of arrival direction information. Furthermore, determiner 2302b determines, as the one item of arrival direction information corresponding to the second arrival direction, the arrival direction information indicating the arrival direction closest to the second arrival direction among the plurality of items of arrival direction information.

In order to distinguish, hereinafter, the one item of arrival direction information corresponding to the first arrival direction may be referred to as arrival direction information D1, and the one item of arrival direction information corresponding to the second arrival direction may be referred to as arrival direction information D2.

Furthermore, determiner 2302b determines whether arrival direction information D1 and arrival direction information D2 are the same arrival direction information.

Determiner 2302b performs the above-described processing instead of step S502b and step S503b in FIG. 39.

When arrival direction information D1 and arrival direction information D2 are the same arrival direction information, determiner 2302b determines that the two audio signals (i.e., the first audio signal and the second audio signal) are to be merged. Then, merger 2302c merges the two sounds (the first sound and the second sound) (S504b).

Furthermore, when arrival direction information D1 and arrival direction information D2 are items of arrival direction information that are different from each other, determiner 2302b determines that the two audio signals are not to be merged.

Then, processing to determine whether to perform repetition, such as step S507b, for example, may be performed.

When merger 2302c merges the two sounds, reproducer 2303 applies the head-related transfer function based on the arrival direction to the sound obtained by the merging (the merged sound). More specifically, reproducer 2303 outputs an output signal generated by applying, to the merged audio signal, the head-related transfer function indicated by arrival direction information D1.

When the two sounds are not merged, reproducer 2303 applies, to the first sound determined not to be merged, the head-related transfer function based on the arrival direction, and applies, to the second sound determined not to be merged, the head-related transfer function based on the arrival direction. More specifically, reproducer 2303 outputs an output signal generated by applying, to the first audio signal, the head-related transfer function indicated by arrival direction information D1, and outputs an output signal generated by applying, to the second audio signal, the head-related transfer function indicated by arrival direction information D2.

This processing can be summarized as follows.

The audio signal processing method related to this processing is an audio signal processing method executed by an audio signal processing device. The audio signal processing method includes an obtaining step, a determining step, a merging step, and a reproducing step.

In the obtaining step, a first audio signal and a second audio signal are obtained. The first audio signal indicates a first sound and includes first attribute information identifying an attribute of the first audio signal. The second audio signal indicates a second sound and includes second attribute information identifying an attribute of the second audio signal. In the determining step, whether to merge the first audio signal obtained and the second audio signal obtained is determined, based on a first arrival direction and a second arrival direction. The first arrival direction is a direction from which the first sound arrives at a listening position that is a position at which a listener is present. The second arrival direction is a direction from which the second sound arrives at the listening position.

In the merging step, a merged audio signal is generated by merging the first audio signal and the second audio signal, when the first audio signal and the second audio signal are determined to be merged. In the reproducing step, an output signal that is based on the merged audio signal generated is output.

In the determining step, the one item of arrival direction information (arrival direction information D1) corresponding to the first arrival direction and the one item of arrival direction information (arrival direction information D2) corresponding to the second arrival direction are determined, from among a plurality of items of arrival direction information each indicating: an arrival direction from which a sound arrives at the listening position; and a head-related transfer function that is based on the arrival direction.

In the merging step, the merged audio signal is generated when the one item of arrival direction information (arrival direction information D1) corresponding to the first arrival direction and determined in the determining step is the same as the one item of arrival direction information (arrival direction information D2) corresponding to the second arrival direction and determined in the determining step.

In the reproducing step, the output signal generated by applying, to the merged audio signal generated, the head-related transfer function indicated by the one item of arrival direction information corresponding to the first arrival direction is output. In the reproducing step, when the one item of arrival direction information (arrival direction D1) corresponding to the first arrival direction and determined in the determining step is different from the one item of arrival direction information (arrival direction information D2) corresponding to the second arrival direction and determined in the determining step, both of (i) an output signal generated by applying, to the first audio signal, the head-related transfer function indicated by the one item of arrival direction information corresponding to the first arrival direction and (ii) an output signal generated by applying, to the second audio signal, the head-related transfer function indicated by the one item of arrival direction information corresponding to the second arrival direction are output.

Whether to merge the first audio signal and the second audio signal is thus determined, based on the arrival direction information (arrival direction information D1) corresponding to the first arrival direction of the first sound and the arrival direction information (arrival direction information D2) corresponding to the second arrival direction of the second sound. When it is determined that the first audio signal and the second audio signal are to be merged, the output signal that is based on the merged audio signal is output in the reproducing step. When it is determined that the first audio signal and the second audio signal are not to be merged, an output signal based on the first audio signal and an output signal based on the second audio signal are output in the reproducing step. Compared to a case in which both the output signal based on the first audio signal and the output signal based on the second audio signal are output, when the output signal based on the merged audio signal is output, the number of output signals to be output decreases, thereby reducing the amount of computation and the computational load. In other words, it is possible to realize an audio signal processing method that can reduce the amount of computation and the computational load.

It should be noted that in step S501b of Operation Example 4 of Embodiment 2 described in FIG. 41, the number of sounds specified was two, but this is not intended to be limiting. That is, the number of sounds specified may be three or more. In this case, the position at which the merged sound used in step S502c is generated may be calculated using the method used in Embodiment 3. Furthermore, in this case, the arrival angles between the merged sound and each of the three or more sounds specified may be calculated, and the processing of step S503c may be performed using the three or more arrival angles calculated.

Furthermore, another technique according to the present disclosure is described below.

### [Technique 1]

An acoustic processing device including:
a circuit; and
a memory, wherein
using the memory, the circuit:
   calculates a time difference (T) between: a time when a sound emitted from a sound source arrives as a direct sound; and a time when a sound emitted from a sound source arrives as a reflected sound;
   calculates a sound volume ratio (L) between: a sound volume of the direct sound of the sound emitted from the sound source; and a sound volume of the reflected sound;
   determines whether to select the reflected sound, based on the time difference (T) and the sound volume ratio (L); and
   corrects the sound volume of the direct sound, based on a phase difference between the direct sound and the reflected sound that was not selected.

### [Technique 2]

An acoustic processing device including:
a circuit; and
a memory, wherein
using the memory, the circuit:
   calculates an angle (δ) between: a direction from which a sound emitted from a sound source arrives as a direct sound; and a direction from which a reflected sound generated based on the direct sound arrives;
   determines whether to select the reflected sound, based on the angle (δ); and
   corrects a sound volume of the direct sound, based on a phase difference between the direct sound and the reflected sound that was not selected.

### [Technique 3]

The acoustic processing device according to Technique 1 or 2, wherein
for each of a plurality of frequency bands, a phase difference between the direct sound and the reflected sound not selected is calculated, and a sound volume is corrected for each frequency band.

### [Technique 4]

The acoustic processing device according to Technique 3, wherein
when, for each of a plurality of (N) frequency bands, a sound volume ratio between the direct sound and the reflected sound is a(i)(0 ≤ i < N), and
for each of the plurality of (N) frequency bands, the phase difference between the direct sound and the reflected sound is θ(i)(0 ≤ i < N),
the sound volume of the direct sound is corrected by multiplying the signal in the i-th frequency band of the direct sound by a value calculated based on a formula that is based on a(i) and θ(i).

### [Technique 5]

The acoustic processing device according to Technique 4, wherein
the formula that is based on a(i) and θ(i) is 1 + a(i) * cosθ(i).

### [Technique 6]

The acoustic processing device according to Technique 4, wherein
the formula that is based on a(i) and θ(i) is √(1 + 2 * a(i) * cosθ(i) + a(i)²).

### [Technique 7]

The acoustic processing device according to any one of Techniques 4 to 6, wherein
when Fh(i) denotes an upper frequency limit of the i-th frequency band and Fl(i) denotes a lower frequency limit of the i-th frequency band,
when a difference between phase difference θh(i) between the signal of the direct sound and the signal of the reflected sound at frequency Fh(i) and phase difference θl(i) between the signal of the direct sound and the signal of the reflected sound at frequency Fl(i) is greater than or equal to a predetermined value,
correcting the sound volume of the direct sound is skipped for the i-th frequency band.

### [Technique 8]

The acoustic processing device according to Technique 7, wherein
the N frequency bands are each a frequency band obtained by dividing a wide frequency band into (1/B) octave bands, and
when Fh(i) is F(i) * 2^(1/(2 * B)), and Fl(i) is F(i) * 2^(-1/(2 * B)), $θh \left(i\right) is T * Fh \left(i\right) * 2 π , and θl \left(i\right) is T * Fl \left(i\right) * 2 π ,$ and $\left(θh\left(i\right)-θl\left(i\right)\right) > 2 π ,$
where F(i) denotes a center frequency of each band (0 ≤ i < N),
correcting the sound volume of the direct sound is skipped for the i-th frequency band.

### [Technique 9]

An acoustic processing device including:
a circuit; and
a memory, wherein
using the memory, the circuit has:
   a determining means for determining whether to merge a first sound and a second sound, based on a direction from which the first sound arrives and a direction from which the second sound arrives; and
   a rendering means for: when merging is determined to be performed, outputting a signal obtained by: merging the first sound and the second sound before applying a head-related transfer function; and applying the head-related transfer function to a resulting merged sound, and when the merging is determined not to be performed, outputting signals obtained by applying a different head-related transfer function to each of the first sound and the second sound.

### [Technique 10] (Basic Configuration)

The acoustic processing device according to Technique 9, wherein
the first sound is a direct sound and the second sound is an indirect sound, and
the head-related transfer function applied to the merged signal is a head-related transfer function based on an arrival direction of the first sound.

### [Technique 11] (Variation 1)

The acoustic processing device according to Technique 10, wherein
threshold value T is defined based on a sound arrival direction, and
the determining means:
   determines whether to merge the first sound and the second sound, based on information δ of an angle formed between a direction from which the first sound arrives and a direction from which the second sound arrives; and
   determines whether to merge the first sound and the second sound, by comparing threshold value T with respect to the direction from which the first sound arrives, and information δ.

### [Technique 12] (Basic Configuration)

The acoustic processing device according to Technique 9, wherein
the first sound and the second sound are both direct sounds or are both indirect sounds, and
the head-related transfer function applied to the merged signal is a head-related transfer function based on a direction from which the merged signal is caused to arrive.

### [Technique 13] (Variation 1)

The acoustic processing device according to Technique 12, wherein
threshold value T is defined based on a sound arrival direction, and
the determining means:
   determines whether to merge the first sound and the second sound, based on information δ of an angle formed between a direction from which the first sound arrives and a direction from which the second sound arrives; and
   determines whether to merge the first sound and the second sound, by comparing threshold value T with respect to the direction from which the merged sound is caused to arrive, and information δ.

### [Technique 14] (Variation 1 Note)

The acoustic processing device according to Technique 11 or 13, wherein
the head-related transfer function is stored in the memory using the sound arrival direction as an index, and threshold value T is stored in a memory region indicated by an index linked to that index.

### [Technique 15] (Basic Configuration)

The acoustic processing device according to Technique 11, 13, or 14, characterized in that:
the determining means compares information δ and threshold value T, and determines that the two signals are to be merged when information δ is smaller than threshold value T.

### [Technique 16]

The acoustic processing device according to any one of Techniques 9 to 15, characterized in that:
information (δ) is information including two items of angular information that are δa and δe, and
δa is angular information in an azimuth direction of the angle formed, and δe is angular information in an elevation direction of the angle formed.

### [Technique 17]

The acoustic processing device according to Technique 16, characterized in that:
the determining means compares information δa and information δe with threshold values Ta and Te that are predetermined for each azimuth direction and each elevation direction, and
determines that the merging is to be performed, when information δa is smaller than threshold value Ta and information δe is smaller than threshold value Te.

### [Technique 18]

The acoustic processing device according to Technique 16, wherein
Ta is a value that is smaller as a directional difference limen in the azimuth direction is finer and larger as the directional difference in the azimuth direction is coarser, and
Te is a value that is smaller as a directional difference limen in the elevation direction is finer and larger as the directional difference in the elevation direction is coarser.

### [Technique 19]

The acoustic processing device according to Technique 16, including:
a database of HRIRs having sufficient spatial resolution, wherein
Ta is a value that is smaller as a density of the HRIRs in the azimuth direction is higher and larger as the density of the HRIRs in the azimuth direction is lower, and
Te is a value that is smaller as the density of HRIRs in the elevation direction is higher and larger as the density of the HRIRs in the elevation direction is lower.

### [Technique 20]

The acoustic processing device according to Technique 9, wherein
the determining means:
identifies a closed region (merge region); and
when a plurality of sounds arrive from within the region, merges the plurality of sounds and assigns, to the merged sound, arrival direction information that is a direction from which the sound arrives, and
the rendering means:
   applies, to the merged sound, a head-related transfer function based on the arrival direction information; and
   invalidates the sounds that were merged to become the merged sound.

### [Technique 21]

The acoustic processing device according to Technique 20, wherein
the closed region is a region that can be mapped onto a space defined by an azimuth axis and an elevation axis.

### [Technique 22]

The acoustic processing device according to Technique 21, wherein
when the merge region is mapped onto a space represented by an azimuth direction and an elevation direction relative to a facial orientation of the listener,
a breadth of the merge region is small in the azimuth direction and large in the elevation direction.

### [Technique 23]

The acoustic processing device according to Technique 21, wherein
when the merge region is mapped onto a space represented by an azimuth direction and an elevation direction relative to a facial orientation of the listener,
an area of the merge region is:
   smaller when the merge region is in a forward direction than when the merge region is in a zenith direction.

[Technique 24]

The acoustic processing device according to Technique 21, wherein
when the merge region is mapped onto a space represented by an azimuth direction and an elevation direction relative to a facial orientation of the listener,
an area of the merge region is:
   smaller when the merge region is in a forward direction than when the merge region is in a nadir direction.

### [Technique 25]

The acoustic processing device according to Technique 21, wherein
when the merge region is mapped onto a space represented by an azimuth direction and an elevation direction relative to a facial orientation of the listener,
an area of the merge region is:
   smaller when the merge region is at a zenith than when the merge region is in a nadir direction.

### [Technique 26]

The acoustic processing device according to Technique 21, wherein
when the merge region is mapped onto a space represented by an azimuth direction and an elevation direction relative to a facial orientation of the listener,
an area of the merge region is:
   smaller when the merge region is behind than when the merge region is in front.

### [Technique 27]

The acoustic processing device according to Technique 9, wherein
the determining means:
has an arrival direction information identifying means that identifies, from a finite group of items of arrival direction information representing arrival directions of sounds, arrival direction information corresponding to an arrival direction of each sound positioned in a virtual space;
using the arrival direction information identifying means, identifies the arrival direction information (D1) for the first sound and the arrival direction information (D2) for the second sound; and
determines that the first sound and the second sound are to be merged when D1 and D2 are the same, wherein
each of the finite group of items of arrival direction information is associated with a head-related transfer function based on the arrival direction, and
the rendering means:
   when the determining means determines that the first sound and the second sound are not to be merged,
   applies the head-related transfer function associated with D1 to the first sound and applies the head-related transfer function associated with D2 to the second sound, and
   when the determining means determines that the first sound and the second sound are to be merged,
   applies the head-related transfer function associated with D1 (=D2) to a sound resulting from the merging.

In addition, for example, in the embodiment, the case in which the aspects that are understood based on the present disclosure are implemented as an audio signal processing device, an encoding device, or a decoding device has been described. However, the aspects that are understood based on the present disclosure are not limited thereto, and may be implemented as software for executing the audio signal processing method, the encoding method, or the decoding method.

For example, a program for executing the above-described audio signal processing method, encoding method, or decoding method may be stored beforehand in ROM. Then, a CPU may operate according to this program.

Furthermore, a program for executing the above-described audio signal processing method, encoding method, or decoding method may be stored on a computer-readable recording medium. Then, a computer may record, in computer RAM, the program stored on the recording medium, and operate according to this program.

Moreover, each of the above-described constituent elements may be expressed typically as a large-scale integration (LSI), which is an integrated circuit (IC) having an input terminal and an output terminal. These may take the form of individual chips, or all or one or more constituent elements of the embodiment may be encapsulated in a single chip. Depending upon the level of integration, the LSI may be expressed as an IC, a system LSI, a super LSI, or an ultra LSI.

Furthermore, such IC is not limited to an LSI, and a dedicated circuit or a general-purpose processor may be used. Alternatively, a field programmable gate array (FPGA) that allows for programming after the manufacture of an LSI, or a reconfigurable processor that allows for reconfiguration of the connection and the setting of circuit cells inside an LSI may be employed. Furthermore, when a circuit integration technology that replaces LSIs comes along owing to advances in semiconductor technology or to a separate derivative technology, the constituent elements should naturally be integrated using that technology. The adaptation of biotechnology, and the like are also conceivable as possibilities.

Moreover, an FPGA, a CPU, or the like may, by means of wireless communication or wired communication, download all or a part of the software for executing the audio signal processing method, the encoding method, or the decoding method described in the present disclosure. Furthermore, all or a part of software for updating may be downloaded by means of wireless communication or wired communication. Moreover, an FPGA, a CPU, or the like may execute the digital signal processing described in the present disclosure by storing the downloaded software in memory and operating based on the stored software.

At this time, the machine that includes the FPGA, the CPU, or the like may be connected wirelessly or in a wired manner to a signal processing device, or may be connected to a signal processing server over a network. Accordingly, this machine and the signal processing device or the signal processing server may perform the audio signal processing method, the encoding method, or the decoding method described in the present disclosure.

For example, the audio signal processing device, the encoding device, or the decoding device in the present disclosure may include an FPGA, a CPU, or the like. Furthermore, the audio signal processing device, the encoding device, or the decoding device may include: an interface for acquiring, from an external source, the software for causing the FPGA, the CPU, or the like to operate; and memory for storing the acquired software. The FPGA, the CPU, or the like may perform the signal processing described in the present disclosure by operating based on the stored software.

A server may provide the software related to the acoustic processing, the encoding processing, or the decoding processing of the present disclosure. Furthermore, a terminal or a machine may operate as the audio signal processing device, the encoding device, or the decoding device described in the present disclosure by installing the software. Note that the terminal or the machine may install the software by connecting to a server over a network.

Furthermore, the software may be installed on the terminal or the machine by means of another device that is different from the terminal or the machine obtaining data for installing the software by connecting to a server over a network and providing the data for installing the software to the terminal or the machine. Note that VR software or AR software for causing a terminal or a machine to execute the audio signal processing method described by way of the embodiment may be an example of the software.

Note that in the foregoing embodiment, each constituent element may be configured from dedicated hardware, or may be implemented by executing a software program suitable for each constituent element. Each constituent element may be implemented by means of a program executor such as a CPU or a processor loading and executing a software program recorded on a recording medium such as a hard disk or semiconductor memory.

Thus, the device and the like according to one or more aspects have been described by way of the embodiment, but the aspects understood based on the present disclosure are not limited to the embodiment. The one or more aspects may thus include forms obtained by making various modifications to the above embodiments that can be conceived by those skilled in the art, as well as forms obtained by combining constituent elements in different variations, without materially departing from the spirit of the present disclosure.

### [Industrial Applicability]

The present disclosure includes aspects that can be applied to, for example, an audio signal processing device, an encoding device, a decoding device, or a terminal or equipment that includes any of these.

### [Reference Signs List]

101, 102 sound source
110 merge region
121, 122, 123 predetermined sound
124 merged sound
1000 three-dimensional sound reproduction system
1001 audio signal processing device (acoustic processing device)
1002 audio presentation device
1100, 1120, 1500 encoding device
1101, 1113 input data
1102 encoder
1103 encoded data
1104, 1114, 1404, 1503 memory
1110, 1130 decoding device
1111 audio signal
1112, 1200, 1210 decoder
1121 transmitter
1122 transmission signal
1131 receiver
1132 reception signal
1201, 1211 spatial information manager
1202 audio data decoder
1203, 1213, 1300, 2300, 3300 renderer
1301, 2301, 3301 analyzer
1302, 1314, 2302, 3302 selector
1303, 2303, 3303 reproducer
1304 threshold value adjuster
1311 reverberation processor
1312 early reflection processor
1313 distance attenuation processor
1315 generator
1316 binaural processor
1401 loudspeaker
1402, 1501 processor
1403, 1502 communication I/F
1405 sensor
2302a, 3302a obtainer
2302b, 3302b determiner
2302c, 3302c merger

## Claims

1. An audio signal processing method executed by an audio signal processing device, the audio signal processing method comprising:
obtaining a first audio signal and a second audio signal, the first audio signal indicating a first sound and including first attribute information identifying an attribute of the first audio signal, the second audio signal indicating a second sound and including second attribute information identifying an attribute of the second audio signal;
determining whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position;
generating a merged audio signal by merging the first audio signal and the second audio signal, when the first audio signal and the second audio signal are determined to be merged; and
outputting an output signal that is based on the merged audio signal generated.

2. The audio signal processing method according to claim 1, wherein
the indicator is an indicator including two axes orthogonal to each other.

3. The audio signal processing method according to claim 1 or 2, wherein
the first attribute information included in the first audio signal obtained includes: first position information indicating a position of the first sound; and first sound volume information indicating a sound volume of the first sound,
the second attribute information included in the second audio signal obtained includes: second position information indicating a position of the second sound; and second sound volume information indicating a sound volume of the second sound, and
in the generating, a merged sound arrival direction is determined based on: the first position information and the first sound volume information; and the second position information and the second sound volume information, the merged sound arrival direction being a direction from which a merged sound indicated by the merged audio signal arrives at the listening position.

4. The audio signal processing method according to claim 3, wherein
in the generating,
when the sound volume of the first sound indicated by the first sound volume information is regarded as a weight corresponding to the position of the first sound indicated by the first position information, and the sound volume of the second sound indicated by the second sound volume information is regarded as a weight corresponding to the position of the second sound indicated by the second position information,
a position of the merged sound is determined to be a position of a weighted centroid of the first sound and the second sound, and
a direction from the position of the weighted centroid determined toward the listening position is determined as the merged sound arrival direction.

5. An audio signal processing method executed by an audio signal processing device, the audio signal processing method comprising:
obtaining a first audio signal and a second audio signal, the first audio signal indicating a first sound and including first attribute information identifying an attribute of the first audio signal, the second audio signal indicating a second sound and including second attribute information identifying an attribute of the second audio signal;
generating a merged audio signal by merging the first audio signal and the second audio signal, when the first audio signal obtained and the second audio signal obtained are determined to be merged; and
outputting an output signal that is based on the merged audio signal generated, wherein
the first attribute information included in the first audio signal obtained includes: first position information indicating a position of the first sound; and first sound volume information indicating a sound volume of the first sound,
the second attribute information included in the second audio signal obtained includes: second position information indicating a position of the second sound; and second sound volume information indicating a sound volume of the second sound, and
in the generating, a merged sound arrival direction is determined based on: the first position information and the first sound volume information; and the second position information and the second sound volume information, the merged sound arrival direction being a direction from which a merged sound indicated by the merged audio signal arrives at a listening position that is a position at which a listener is present.

6. The audio signal processing method according to any one of claims 3 to 5, wherein
when the first audio signal and the second audio signal are determined to be merged,
in the outputting, the output signal generated by applying, to the merged audio signal generated, a head-related transfer function that is based on the merged sound arrival direction determined is output.

7. The audio signal processing method according to any one of claims 1 to 4, wherein
when the first audio signal and the second audio signal are determined not to be merged,
in the outputting, (i) the output signal generated by applying, to the first audio signal, a head-related transfer function that is based on the first arrival direction, and (ii) the output signal generated by applying, to the second audio signal, a head-related transfer function that is based on the second arrival direction are output.

8. An audio signal processing method executed by an audio signal processing device, the audio signal processing method comprising:
obtaining M audio signals each of which is an audio signal that indicates a predetermined sound and includes attribute information identifying an attribute of the audio signal, M being an integer greater than or equal to 2;
determining whether to merge N audio signals among the M audio signals obtained, based on an arrival direction from which each of M predetermined sounds arrives at a listening position that is a position at which a listener is present, N being an integer greater than or equal to 1 and less than or equal to M, the M predetermined sounds each being the predetermined sound;
generating a merged audio signal by merging the N audio signals, when the N audio signals are determined to be merged; and
outputting an output signal that is based on the merged audio signal generated.

9. The audio signal processing method according to claim 8, wherein
the attribute information included in each of the M audio signals obtained includes: predetermined sound position information indicating a position of the predetermined sound; and predetermined-sound sound volume information indicating a sound volume of the predetermined sound, and
in the generating, a merged sound arrival direction is determined, based on N items of the predetermined sound position information and N items of the predetermined-sound sound volume information, the merged sound arrival direction being a direction from which a merged sound indicated by the merged audio signal arrives at the listening position.

10. The audio signal processing method according to claim 9, wherein
in the generating,
when, for each predetermined sound, the sound volume of the predetermined sound indicated by the predetermined-sound sound volume information is regarded as a weight corresponding to the position of the predetermined sound indicated by the predetermined sound position information,
a position of the merged sound is determined to be a position of a weighted centroid of N predetermined sounds each of which is the predetermined sound, and
a direction, from the position of the weighted centroid determined, toward the listening position is determined as the merged sound arrival direction.

11. An audio signal processing method executed by an audio signal processing device, the audio signal processing method comprising:
obtaining a first audio signal and a second audio signal, the first audio signal indicating a first sound and including first attribute information identifying an attribute of the first audio signal, the second audio signal indicating a second sound and including second attribute information identifying an attribute of the second audio signal;
determining whether to merge the first audio signal obtained and the second audio signal obtained, based on a first arrival direction and a second arrival direction, the first arrival direction being a direction from which the first sound arrives at a listening position that is a position at which a listener is present, the second arrival direction being a direction from which the second sound arrives at the listening position;
generating a merged audio signal by merging the first audio signal and the second audio signal, when the first audio signal and the second audio signal are determined to be merged; and
outputting an output signal that is based on the merged audio signal generated, wherein
in the determining, one item of arrival direction information corresponding to the first arrival direction and one item of arrival direction information corresponding to the second arrival direction are determined, from among a plurality of items of arrival direction information each indicating: an arrival direction from which a sound arrives at the listening position; and a head-related transfer function that is based on the arrival direction,
in the generating, the merged audio signal is generated when the one item of arrival direction information corresponding to the first arrival direction and determined in the determining is same as the one item of arrival direction information corresponding to the second arrival direction and determined in the determining, and
in the outputting:
the output signal generated by applying, to the merged audio signal generated, the head-related transfer function indicated by the one item of arrival direction information corresponding to the first arrival direction is output; and
when the one item of arrival direction information corresponding to the first arrival direction and determined in the determining is different from the one item of arrival direction information corresponding to the second arrival direction and determined in the determining, both of (i) an output signal generated by applying, to the first audio signal, the head-related transfer function indicated by the one item of arrival direction information corresponding to the first arrival direction and (ii) an output signal generated by applying, to the second audio signal, the head-related transfer function indicated by the one item of arrival direction information corresponding to the second arrival direction are output.

12. A computer program for causing a computer to execute the audio signal processing method according to any one of claims 1 to 11.

13. An audio signal processing device comprising:
an obtainer that obtains a first audio signal and a second audio signal, the first audio signal indicating a first sound and including first attribute information identifying an attribute of the first audio signal, the second audio signal indicating a second sound and including second attribute information identifying an attribute of the second audio signal;
a determiner that determines whether to merge the first audio signal obtained and the second audio signal obtained, based on an indicator that is based on a first arrival direction and a second arrival direction, the first arrival direction being a direction from which the first sound arrives at a listening position that is a position at which a listener is present, the second arrival direction being a direction from which the second sound arrives at the listening position;
a merger that generates a merged audio signal by merging the first audio signal and the second audio signal, when the first audio signal and the second audio signal are determined to be merged; and
a reproducer that outputs an output signal that is based on the merged audio signal generated.
